# EUROPEAN PATENT APPLICATION

(11) **EP 4 496 252 A1**
(43) Date of publication of application: **22.01.2025**
(21) Application number: 23777722.2
(22) Date of filing: 27.02.2023
(51) Int. Cl.: H04L 5/00, H04W 72/04

(54) **METHOD AND APPARATUS FOR MONITORING PHYSICAL DOWNLINK CONTROL CHANNEL**

(30) Priority: 31.03.2022 CN 202210335806
(71) Applicant: Huawei Technologies Co., Ltd., Shenzhen, Guangdong 518129 (CN)
(72) Inventor: HUA, Meng, Shenzhen, Guangdong 518129 (CN); PENG, Jinlin, Shenzhen, Guangdong 518129 (CN); GAO, Fei, Shenzhen, Guangdong 518129 (CN); DING, Mengying, Shenzhen, Guangdong 518129 (CN); LI, Yuan, Shenzhen, Guangdong 518129 (CN)
(74) Representative: Maiwald GmbH
(86) International application number: PCT/CN2023/078348
(87) International publication number: WO 2023/185344

(57) **Abstract**

Embodiments of this application provide a physical downlink control channel PDCCH monitoring method and apparatus. The method includes: A terminal device determines a second time-frequency resource and/or a third time-frequency resource in a first resource element group REG based on a first time-frequency resource, where the second time-frequency resource may be used for transmitting a PDCCH demodulation reference signal DM-RS, and the third time-frequency resource may be used for transmitting a PDCCH. When the second time-frequency resource and/or the third time-frequency resource include/includes at least one RE in the first REG, the terminal device monitors the PDCCH DM-RS on the second time-frequency resource, and/or monitors the PDCCH on the third time-frequency resource. Therefore, even if an RE carrying a CRS overlaps with an RE carrying the PDCCH DM-RS and/or the PDCCH, PDCCH DM-RSs and/or PDCCHs can be transmitted as many as possible. This improves system transmission performance.

## Description

This application claims priority to Chinese Patent Application No. 202210335806.0, filed with the China National Intellectual Property Administration on March 31, 2022 and entitled "PHYSICAL DOWNLINK CONTROL CHANNEL MONITORING METHOD AND APPARATUS", which is incorporated herein by reference in its entirety.

### TECHNICAL FIELD

Embodiments of this application relate to the communication field, and more specifically, to a physical downlink control channel monitoring method and apparatus.

### BACKGROUND

Currently, because long term evolution (Long term evolution, LTE) systems are widely deployed and there are still a large quantity of mobile terminals, the LTE system and a new radio (New radio, NR) system may coexist in a long period of time. The NR system may share some frequency bands with the LTE system.

However, in some scenarios, for example, if a symbol corresponding to a physical downlink control channel candidate (Physical downlink control channel candidate, PDCCH candidate) of NR overlaps with a symbol corresponding to a cell-specific reference signal (Cell-specific reference signal, CRS) of the LTE system, transmission resources may be insufficient. Therefore, resource utilization still needs to be improved.

### SUMMARY

Embodiments of this application provide a PDCCH monitoring method. Even if a first time-frequency resource (for example, an RE carrying a CRS) overlaps with an RE carrying a PDCCH DM-RS and/or a PDCCH, in this solution, the PDCCH DM-RS may be transmitted on a second time-frequency resource, and/or the PDCCH may be transmitted on a third time-frequency resource, so that PDCCH DM-RSs and/or PDCCHs can be transmitted as many as possible. This improves system transmission performance and improves system transmission efficiency.

According to a first aspect, a PDCCH monitoring method is provided, including: A terminal device determines a second time-frequency resource and/or a third time-frequency resource in a first resource element group (Resource element group, REG) based on a first time-frequency resource, where the second time-frequency resource may be used for transmitting a PDCCH demodulation reference signal DM-RS sent by a network device, and the third time-frequency resource may be used for transmitting the PDCCH sent by the network device. When the second time-frequency resource includes at least one RE in the first REG, the terminal device monitors the PDCCH DM-RS on the second time-frequency resource, and/or when the third time-frequency resource includes at least one RE in the first REG, the terminal device monitors the PDCCH on the third time-frequency resource. The second time-frequency resource is a part of a plurality of REs in the first REG that are preset in a protocol for PDCCH DM-RS transmission, and/or the third time-frequency resource is a part of a plurality of REs in the first REG that are preset in the protocol for PDCCH transmission.

That the second time-frequency resource may be used for transmitting a PDCCH DM-RS sent by the network device may be understood as: The second time-frequency resource has a capability of transmitting the PDCCH DM-RS sent by the network device, or the second time-frequency resource is allowed to transmit the PDCCH DM-RS sent by the network device. That the third time-frequency resource may be used for transmitting a PDCCH sent by the network device or that the third time-frequency resource is allowed to transmit the PDCCH sent by the network device may be understood as: The third time-frequency resource has a capability of transmitting the PDCCH sent by the network device. The second time-frequency resource is a part of the plurality of REs in the first REG that are preset in the protocol for PDCCH DM-RS transmission, and/or the third time-frequency resource is a part of the plurality of REs in the first REG that are preset in the protocol for PDCCH transmission.

An RE preset in the protocol for PDCCH DM-RS transmission may also be understood as an RE used to transmit a PDCCH DM-RS in a REG when the network device does not configure the first time-frequency resource, or when the first time-frequency resource does not overlap with a CORESET at all. An RE preset in the protocol for PDCCH transmission may also be understood as an RE used to transmit a PDCCH in a REG when the network device does not configure the first time-frequency resource, or when the first time-frequency resource does not overlap with a CORESET at all.

That the terminal device monitors the PDCCH DM-RS means that the terminal device performs, by using the PDCCH DM-RS, initial channel estimation on REs on which the PDCCH DM-RS is located, and filters a plurality of initial channel estimations, to obtain a channel estimation on a PDCCH RE. That the terminal device monitors the PDCCH means demodulating and decoding the PDCCH, to determine whether there is a PDCCH sent to the terminal device.

According to the foregoing solution, the terminal device determines the second time-frequency resource and/or the third time-frequency resource in the first resource element group REG based on the first time-frequency resource. Even if the first time-frequency resource (for example, an RE carrying a CRS) overlaps with an RE carrying a PDCCH DM-RS and/or a PDCCH, in this solution, the PDCCH DM-RS may be transmitted on the second time-frequency resource, and/or the PDCCH may be transmitted on the third time-frequency resource, so that PDCCH DM-RSs and/or PDCCHs can be transmitted as many as possible. This improves system transmission performance and improves system transmission efficiency.

According to a second aspect, a PDCCH monitoring method is provided, including: A network device determines a second time-frequency resource and/or a third time-frequency resource in a first resource element group REG based on a first time-frequency resource, where the second time-frequency resource may be used for transmitting a PDCCH demodulation reference signal DM-RS sent by the network device, and the third time-frequency resource may be used for transmitting the PDCCH sent by the network device. When the second time-frequency resource includes at least one RE in the first REG, the network device sends the PDCCH DM-RS on the second RE set, and/or when the third time-frequency resource includes at least one RE in the first REG, the network device sends the PDCCH on the third RE set. The second time-frequency resource is a part of a plurality of REs in the first REG that are preset in a protocol for PDCCH DM-RS transmission, and/or the third time-frequency resource is a part of a plurality of REs in the first REG that are preset in the protocol for PDCCH transmission.

According to the foregoing solution, the network device determines the second time-frequency resource and/or the third time-frequency resource in the first resource element group REG based on the first time-frequency resource. Even if the first time-frequency resource (for example, an RE carrying a CRS) overlaps with an RE carrying a PDCCH DM-RS and/or a PDCCH, in this solution, the PDCCH DM-RS may be transmitted on the second time-frequency resource, and/or the PDCCH may be transmitted on the third time-frequency resource, so that PDCCH DM-RSs and/or PDCCHs can be transmitted as many as possible. This improves system transmission performance and improves system transmission efficiency.

With reference to the first aspect, in some implementations of the first aspect, or with reference to the second aspect, in some implementations of the second aspect, the first time-frequency resource includes at least one type of the following REs: REs on which the network device indicates not to allow PDCCH DM-RS transmission, REs on which the network device indicates not to allow PDCCH transmission, REs to which a cell-specific reference signal CRS is mapped, REs to which a channel state indication reference signal (Channel state indication reference signal, CSI-RS) is mapped, REs to which a tracking reference signal (Tracking reference signal, TRS) is mapped, or REs included in a rate matching resource.

It should be understood that the first time-frequency resource may include one or more types of the foregoing REs, or the first time-frequency resource may include one or more sets of at least one type of the foregoing REs. For example, the first time-frequency resource includes one set of REs to which the cell-specific reference signal is mapped, or the first time-frequency resource includes a plurality of sets of REs to which the cell-specific reference signal is mapped; or the first time-frequency resource includes one set of REs to which the cell-specific reference signal is mapped and one set of REs to which the channel state indication reference signal is mapped, or the first time-frequency resource includes a plurality of sets of REs to which the cell-specific reference signal is mapped and a plurality of sets of REs to which the channel state indication reference signal is mapped.

It should be further understood that, due to partially overlapping frequency bands in an NR system and an LTE system, an RE to which a cell-specific reference signal is mapped is an RE to which a cell-specific reference signal of the LTE system is mapped and that is indicated by an NR network device to a terminal device working in the NR system. With reference to the first aspect, in some implementations of the first aspect, or with reference to the second aspect, in some implementations of the second aspect, the first REG belongs to a first REG set REG SET. Patterns of REs used for PDCCH DM-RS transmission included in all REGs in the first REG set are the same; and/or patterns of REs used for PDCCH transmission included in all the REGs in the first REG set are the same. All the REGs in the first REG set are included in a PDCCH candidate set, and/or all the REGs in the first REG set are included in a same control resource set CORESET, and/or all the REGs in the first REG set are included in a same search space set.

That patterns of REs available for PDCCH DM-RS transmission included in all REGs in the first REG set are the same means that quantities of REs available for PDCCH DM-RS transmission in any two REGs in the first REG set are the same, and positions of the REs available for PDCCH DM-RS transmission in any two REGs in the first REG set are the same in the respective REGs. For example, quantities of REs available for PDCCH DM-RS transmission in two REGs are both 2, and the REs in the respective REGs are both the 2^{nd} and the 6^{th} REs. That patterns of REs available for PDCCH transmission included in all the REGs in the first REG set are the same means that quantities of REs available for PDCCH transmission in any two REGs in the first REG set are the same, and positions of the REs available for PDCCH transmission in any two REGs in the first REG set are the same in the respective REGs. For example, quantities of REs available for PDCCH transmission in two REGs are both 6, and the REs in the respective REGs are the 3^{rd}, the 5^{th}, the 8^{th}, the 9^{th}, the 11^{th}, and the 12^{th} REs.

It should be noted that not all REGs in the first REG set may belong to the one or more PDCCH candidates. That patterns of REs available for PDCCH DM-RS transmission included in all REGs in the first REG set are the same may be understood as: Patterns of REs available for PDCCH DM-RS transmission included in all REGs that belong to the one or more PDCCH candidates in the first REG set are the same; or patterns of REs available for PDCCH DM-RS transmission included in all REGs that belong to the one or more PDCCH candidates in the first REG set are the same, and a pattern of REs available for PDCCH DM-RS transmission included in all the REGs that belong to the one or more PDCCH candidates in the first REG set is the same as a pattern of virtual REs available for PDCCH DM-RS transmission included in a REG that does not belong to any PDCCH candidate in the first REG set. The virtual RE available for PDCCH DM-RS transmission included in a REG that does not belong to any PDCCH candidate in the first REG set cannot be used to transmit a PDCCH DM-RS, but is virtualized to determine a pattern of REs available for PDCCH DM-RS transmission included in all the REGs that belong to the one or more PDCCH candidates in the first REG set.

Similarly, that patterns of REs available for PDCCH transmission included in all REGs in the first REG set are the same may be understood as: Patterns of REs available for PDCCH transmission included in all REGs that belong to the one or more PDCCH candidates in the first REG set are the same; or patterns of REs available for PDCCH transmission included in all REGs that belong to the one or more PDCCH candidates in the first REG set are the same, and a pattern of REs available for PDCCH transmission included in all the REGs that belong to the one or more PDCCH candidates in the first REG set is the same as a pattern of virtual REs available for PDCCH transmission included in all REGs that do not belong to any PDCCH candidate in the first REG set. The virtual RE available for PDCCH transmission included in a REG that does not belong to any PDCCH candidate in the first REG set cannot be used to transmit a PDCCH, but is virtualized to determine a pattern of REs available for PDCCH transmission included in all the REGs that belong to the one or more PDCCH candidates in the first REG set.

With reference to the first aspect, in some implementations of the first aspect, or with reference to the second aspect, in some implementations of the second aspect, time domain symbols of all the REGs in the first REG set are the same as time domain symbols of the first REG, resource blocks RBs of all the REGs in the first REG set belong to the first time-frequency resource, and the first RB set includes any one type of the following RBs: RBs in a control channel element (Control channel element, CCE) including the first REG, RBs of a first PDCCH candidate including the first REG, RBs of a REG bundle including the first REG, RBs of a search space set including the first REG, a group of contiguous RBs in a CORESET including the first REG, RBs of a CORESET including the first REG, RBs including N adjacent RBs configured by the network device, or RBs including N adjacent RBs preset in the protocol. The first PDCCH candidate including the first REG belongs to the PDCCH candidate set, and N is an integer greater than or equal to 2.

All REGs in a second REG set on a time domain symbol are located on RBs that meet one of the foregoing conditions, and on this time domain symbol, all REGs located on an RB that meets the condition belong to the second REG set.

With reference to the first aspect, in some implementations of the first aspect, or with reference to the second aspect, in some implementations of the second aspect, different precoder granularity parameter configurations of CORESETs including the first REG in different configurations correspond to different first RB sets.

With reference to the first aspect, in some implementations of the first aspect, or with reference to the second aspect, in some implementations of the second aspect, the second time-frequency resource includes an RE other than a first RE in the REs in the first REG that are preset in the protocol for PDCCH DM-RS transmission, a position of the first RE in a PDCCH DM-RS pattern preset in the protocol is the same as a position of a second RE in the PDCCH DM-RS pattern preset in the protocol, the second RE is an RE in a REG in the first REG set, and the second RE is included in the first time-frequency resource; and/or the third time-frequency resource includes an RE other than a third RE in the REs in the first REG that are preset in the protocol for PDCCH transmission, a position of the third RE in a PDCCH pattern preset in the protocol is the same as a position of a fourth RE in the PDCCH pattern preset in the protocol, the fourth RE is an RE in a REG in the first REG set, and the fourth RE is included in the first time-frequency resource.

The first RE may be included in the first time-frequency resource. Alternatively, the first RE may not be included in the first time-frequency resource, but the second RE is included in the first time-frequency resource. The second RE is an RE in a REG other than the first REG in the first REG set. The position of the first RE in the PDCCH DM-RS pattern preset in the protocol is the same as the position of the second RE in the PDCCH DM-RS pattern preset in the protocol. In other words, a position of the first RE in the first REG is the same as a position of the second RE in a REG including the second RE. For example, both the first RE and the second RE are the 2^{nd} RE in the respective REGs. Optionally, the first REG may not include the first RE, or may include one or more first REs.

Similarly, the third RE and the fourth RE have same characteristics as the first RE and the second RE.

According to the foregoing solution, even if the first time-frequency resource (for example, an RE carrying a CRS) overlaps with an RE carrying a PDCCH DM-RS, when the determined second time-frequency resource is in this case, the PDCCH DM-RS may be transmitted on the second time-frequency resource, so that PDCCH DM-RSs can be transmitted as many as possible. This improves channel estimation performance and transmission efficiency.

Similarly, even if the first time-frequency resource (for example, an RE carrying a CRS) overlaps with an RE carrying a PDCCH, when the determined third time-frequency resource is in the first case, the PDCCH may be transmitted on the third time-frequency resource, so that PDCCHs can be transmitted as many as possible. This improves PDCCH transmission efficiency.

With reference to the first aspect, in some implementations of the first aspect, or with reference to the second aspect, in some implementations of the second aspect, when a fifth RE exists in the REs in the first REG that are preset in the protocol for PDCCH DM-RS transmission, the second time-frequency resource does not include any RE in the first REG, where a position of the fifth RE in a PDCCH DM-RS pattern preset in the protocol is the same as a position of a sixth RE in the PDCCH DM-RS pattern preset in the protocol, the sixth RE is an RE in a REG in the first REG set, and the sixth RE is included in the first time-frequency resource; and/or when a seventh RE exists in the REs in the first REG that are preset in the protocol for PDCCH transmission, the third time-frequency resource does not include any RE in the first REG, where a position of the seventh RE in a PDCCH pattern preset in the protocol is the same as a position of an eighth RE in the PDCCH pattern preset in the protocol, the eighth RE is an RE in a REG in the first REG set, and the eighth RE is included in the first time-frequency resource.

The fifth RE may be included in the first time-frequency resource. Alternatively, the fifth RE may not be included in the first time-frequency resource, but the sixth RE is included in the first time-frequency resource. The sixth RE is an RE in a REG other than the first REG in the first REG set. The position of the sixth RE in the PDCCH DM-RS pattern preset in the protocol is the same as the position of the fifth RE in the PDCCH DM-RS pattern preset in the protocol, or a position of the fifth RE in the first REG is the same as a position of the sixth RE in the REG including the sixth RE. For example, both the fifth RE and the sixth RE are the 2^{nd} RE in the respective REGs. Further, the first REG may not include the fifth RE, or may include one or more fifth REs.

Similarly, the seventh RE and the eighth RE have same characteristics as the fifth RE and the sixth RE.

According to the foregoing solution, even if the first time-frequency resource (for example, an RE carrying a CRS) overlaps with an RE carrying a PDCCH DM-RS, when the determined second time-frequency resource is in this case, not only the PDCCH DM-RS can be transmitted, but also processes of determining the second time-frequency resource by the network device and the terminal device can be simplified, so that implementation of this step is simpler, and channel estimation of the terminal device is simplified. Similarly, even if the first time-frequency resource (for example, an RE carrying a CRS) overlaps with an RE carrying a PDCCH, when the determined third time-frequency resource is in the second case, not only the PDCCH can be transmitted, but also processes of determining the third time-frequency resource by the network device and the terminal device can be simplified, so that implementation of this step is simpler.

With reference to the first aspect, in some implementations of the first aspect, or with reference to the second aspect, in some implementations of the second aspect, when the second time-frequency resource may be used for transmitting the PDCCH DM-RS, when at least M ninth REs exist in the REs in the first REG that are preset in the protocol for PDCCH DM-RS transmission, the second time-frequency resource does not include any RE in the first REG; or when a maximum of M-1 ninth REs exist in the REs in the first REG that are preset in the protocol for PDCCH DM-RS transmission, the second time-frequency resource includes an RE other than the ninth RE in the REs in the first REG that are preset in the protocol for PDCCH DM-RS transmission, where a position of the ninth RE in a PDCCH DM-RS pattern preset in the protocol is the same as a position of a tenth RE in the PDCCH DM-RS pattern preset in the protocol, the tenth RE is an RE in a REG in the first REG set, the tenth RE is included in the first time-frequency resource, and M is an integer greater than or equal to 1.

The position of the ninth RE in the PDCCH DM-RS pattern preset in the protocol is the same as the position of the tenth RE in the PDCCH DM-RS pattern preset in the protocol, the tenth RE is an RE in a REG in the first REG set, the tenth RE is included in the first time-frequency resource, and M is an integer greater than or equal to 1. M may be preset in the protocol, or set by a base station, or set by the terminal.

The ninth RE may be included in the first time-frequency resource. Alternatively, the ninth RE may not be included in the first time-frequency resource, but the tenth RE is included in the first time-frequency resource. The tenth RE is an RE in a REG other than the first REG in the first REG set. The position of the tenth RE in the PDCCH DM-RS pattern preset in the protocol is the same as the position of the ninth RE in the PDCCH DM-RS pattern preset in the protocol, or a position of the ninth RE in the first REG is the same as a position of the tenth RE in the REG including the tenth RE. For example, both the ninth RE and the tenth RE are the 2^{nd} RE in the respective REGs. Further, the first REG may not include the ninth RE, or may include one or more ninth REs.

With reference to the first aspect, in some implementations of the first aspect, or with reference to the second aspect, in some implementations of the second aspect, when the third time-frequency resource may be used for transmitting the PDCCH, when at least N eleventh REs exist in the REs in the first REG that are preset in the protocol for PDCCH transmission, the third time-frequency resource does not include any RE in the first REG; or when a maximum of N-1 eleventh REs exist in the REs in the first REG that are preset in the protocol for PDCCH transmission, the third time-frequency resource includes an RE other than the eleventh RE in the REs in the first REG that are preset in the protocol for PDCCH transmission, where a position of the eleventh RE in a PDCCH pattern preset in the protocol is the same as a position of a twelfth RE in the PDCCH pattern preset in the protocol, the twelfth RE is an RE in a REG in the first REG set, the twelfth RE is included in the first time-frequency resource, and N is an integer greater than or equal to 1.

Similarly, the eleventh RE and the twelfth RE have same characteristics as the ninth RE and the tenth RE.

According to the foregoing solution, even if the first time-frequency resource (for example, an RE carrying a CRS) overlaps with an RE carrying a PDCCH DM-RS and/or a PDCCH, when the determined second time-frequency resource and/or the determined third time-frequency resource are/is in the third case, compared with the second case, in this case, a quantity of REs for transmitting the PDCCH DM-RS can be increased, and channel estimation quality can be improved. Compared with the first case, in this case, complexity of sending the PDCCH DM-RS by the network device can be reduced, complexity of receiving the PDCCH DM-RS by the terminal device can be reduced, and complexity of channel estimation by the terminal device can be reduced.

Similarly, even if the first time-frequency resource (for example, the RE carrying the CRS) overlaps with the RE carrying the PDCCH, when the determined third time-frequency resource is in the third case, compared with the second case, in the third case, a quantity of REs for transmitting the PDCCH can be increased, and performance of the PDCCH can be improved. Compared with the first case, in the third case, complexity of sending the PDCCH by the network device can be reduced, and complexity of receiving the PDCCH by the terminal device can be reduced.

It should be noted that a solution used by the network device and/or the terminal device to determine the second time-frequency resource in the first REG based on the first time-frequency resource and a solution used by the network device and/or the terminal device to determine the third time-frequency resource in the first REG based on the first time-frequency resource may be in non-corresponding cases. For example, the network device and/or the terminal device determine/determines the second time-frequency resource in the first REG based on the first time-frequency resource by using a solution described in the second case, while the network device and/or the terminal device determine/determines the third time-frequency resource in the first REG based on the first time-frequency resource by using a solution described in the first case.

With reference to the first aspect, in some implementations of the first aspect, the terminal device determines, depending on whether a second REG set on each time domain symbol in a time domain symbol set of the first PDCCH candidate including the first REG overlaps with the first time-frequency resource, or depending on whether the time domain symbol set of the first PDCCH candidate including the first REG overlaps with a time domain symbol set of the first time-frequency resource, a time domain mapping sequence of the PDCCH on the first PDCCH candidate including the first REG.

With reference to the first aspect, in some implementations of the first aspect, RBs on which all REGs in the second REG set are located meet any one of the following conditions: belonging to the first time-frequency resource, belonging to an RB set of the first PDCCH candidate including the first REG, belonging to an RB set of a search space set including the first PDCCH candidate, belonging to an RB set of a CORESET that includes the first PDCCH candidate including the first REG, including P adjacent RBs configured by the network device, or including P adjacent RBs preset in the protocol, where P is an integer greater than or equal to 2.

With reference to the second aspect, in some implementations of the second aspect, the network device determines, depending on whether a third REG set on each time domain symbol in a time domain symbol set of the first PDCCH candidate including the first REG overlaps with the first time-frequency resource, a time domain mapping sequence of the PDCCH on the first PDCCH candidate including the first REG.

With reference to the second aspect, in some implementations of the second aspect, RBs on which all REGs in the third REG set are located meet any one of the following conditions: belonging to the first RB set, belonging to an RB set of the first PDCCH candidate including the first REG, belonging to an RB set of a search space set that includes the first PDCCH candidate including the first REG, belonging to an RB set of a CORESET that includes the first PDCCH candidate including the first REG, including T adjacent RBs configured by the network device, or including T adjacent RBs preset in the protocol, where T is an integer greater than or equal to 2.

With reference to the first aspect, in some implementations of the first aspect, or with reference to the second aspect, in some implementations of the second aspect, when the time domain mapping sequence of the PDCCH on the first PDCCH candidate including the first REG is determined depending on whether the second REG set on each time domain symbol in the time domain symbol set of the first PDCCH candidate including the first REG overlaps with the first time-frequency resource, the time domain mapping sequence of the PDCCH on the first PDCCH candidate including the first REG is mapping to a first symbol included in the time domain symbol set of the first PDCCH candidate including the first REG, and then mapping to a second symbol included in the time domain symbol set of the first PDCCH candidate including the first REG, where at least one RE in the second REG set on the second symbol is included in the first time-frequency resource, and no RE in the second REG set on the first symbol is included in the first time-frequency resource.

It should be understood that, that an RE is included in the first time-frequency resource may be understood as: The RE overlaps with the first time-frequency resource. That an RE is not included in the first time-frequency resource may be understood as: The RE does not overlap with the first time-frequency resource at all. With reference to the first aspect, in some implementations of the first aspect, or with reference to the second aspect, in some implementations of the second aspect, when there are a plurality of first symbols, mapping to a first symbol with a smaller symbol sequence number is first performed, followed by mapping to a first symbol with a larger symbol sequence number; and/or when there are a plurality of second symbols, mapping to a second symbol with a smaller symbol sequence number is first performed, followed by mapping to a second symbol with a larger symbol sequence number.

With reference to the first aspect, in some implementations of the first aspect, or with reference to the second aspect, in some implementations of the second aspect, when the time domain mapping sequence of the PDCCH on the first PDCCH candidate including the first REG is determined depending on whether the time domain symbol set of the first PDCCH candidate including the first REG overlaps with the time domain symbol set of the first time-frequency resource, the time domain mapping sequence of the PDCCH on the first PDCCH candidate is mapping to a third symbol included in the time domain symbol set of the first PDCCH candidate, and then mapping to a fourth symbol included in the time domain symbol set of the first PDCCH candidate, where the first time-frequency resource exists on the fourth symbol, and the first time-frequency resource does not exist on the third symbol.

With reference to the first aspect, in some implementations of the first aspect, or with reference to the second aspect, in some implementations of the second aspect, when there are a plurality of third symbols, mapping to a third symbol with a smaller symbol sequence number is first performed, followed by mapping to a third symbol with a larger symbol sequence number; and/or
when there are a plurality of fourth symbols, mapping to a fourth symbol with a smaller symbol sequence number is first performed, followed by mapping to a fourth symbol with a larger symbol sequence number.

It should be understood that, that the first time-frequency resource exists on the third symbol means that at least one RE on the third symbol belongs to the first time-frequency resource, or at least one RE on the third symbol overlaps with the first time-frequency resource. That the first time-frequency resource does not exist on the fourth symbol means that no RE on the fourth symbol belongs to the first time-frequency resource, or no RE on the fourth symbol overlaps with the first time-frequency resource. The RE on the third symbol herein is an RE on a current NR carrier on the third symbol, the RE on the fourth symbol is an RE on a current NR carrier on the fourth symbol, and the current NR carrier is a downlink NR carrier on which the first PDCCH candidate is located.

In symbols (namely, the time domain symbol set of the first PDCCH candidate) on which the first PDCCH candidate is located, a symbol that overlaps with a symbol on which the first time-frequency resource is located is the fourth symbol, and a symbol that does not overlap with the symbol on which the first time-frequency resource is located is the third symbol. It should be noted that, on the fourth symbol, the first PDCCH candidate, the search space set including the first PDCCH candidate, and the control resource set including the first PDCCH candidate may not overlap with the first time-frequency resource at all.

According to the foregoing solution, only whether the first time-frequency resource overlaps with the first PDCCH candidate in time domain needs to be determined, and a frequency domain resource relationship between the first time-frequency resource and the first PDCCH candidate does not need to be concerned. Therefore, implementation is simpler.

According to a third aspect, a PDCCH monitoring method is provided, including: A terminal device receives first indication information from a network device, where the first indication information indicates a first time-frequency resource. The terminal device receives second indication information from the network device, where the second indication information indicates a first search space set, and a time-frequency resource of a control resource set CORESET corresponding to the first search space set and the first time-frequency resource meet at least one of the following relationships: at least one RE in an RE set on only the 1^{st} symbol in the time-frequency resource of the CORESET corresponding to the first search space set overlaps with at least one RE in the first time-frequency resource; at least one RE in an RE set on only one symbol in the time-frequency resource of the CORESET corresponding to the first search space set overlaps with at least one RE in the first time-frequency resource; at least one RE in an RE set on only the 1^{st} symbol and the 2^{nd} symbol in the time-frequency resource of the CORESET corresponding to the first search space set overlaps with at least one RE in the first time-frequency resource; at least one RE in an RE set on only the 1^{st} symbol and/or the last symbol in the time-frequency resource of the CORESET corresponding to the first search space set overlaps with at least one RE in the first time-frequency resource; there are a maximum of Q sets of first time-frequency resource-related configurations, at least one RE in the first time-frequency resource indicated by any one of the Q sets of first time-frequency resource-related configurations overlaps with at least one RE in the time-frequency resource of the control resource set CORESET corresponding to the first search space set, and Q is a positive integer; any RE in an RE set on at least one symbol in the time-frequency resource of the CORESET corresponding to the first search space set does not overlap with any RE in the first time-frequency resource; or at least one RE in an RE set on a maximum of one symbol in the time-frequency resource of the CORESET corresponding to the first search space set overlaps with at least one RE in the first time-frequency resource. The terminal device monitors a PDCCH on a first PDCCH candidate in the first search space set, where the first PDCCH candidate in the first search space set may be used for transmitting a PDCCH sent by the network device, and at least one RE in the first PDCCH candidate overlaps with at least one RE in the first time-frequency resource.

In the foregoing solution, the time-frequency resource of the control resource set corresponding to the first search space set may be understood as all time-frequency resources in the control resource set corresponding to the first search space set, or include not only all the time-frequency resources in the control resource set corresponding to the first search space set, but also all time-frequency resources in the first search space set.

The first PDCCH candidate in the first search space set may be used for transmitting the PDCCH sent by the network device (that is, the first PDCCH candidate in the first search space set has a capability of transmitting the PDCCH sent by the network device, or the first PDCCH candidate in the first search space set is allowed to transmit the PDCCH sent by the network device, but is not necessarily used to transmit the PDCCH sent by the network device), and the first PDCCH candidate overlaps with the first time-frequency resource on at least one RE.

Further, when the terminal device determines that the time-frequency resource of the control resource set corresponding to the first search space set and the first time-frequency resource meet at least one of the foregoing relationships, the terminal device monitors a PDCCH on the first PDCCH candidate in the first search space set. When the terminal device determines that the time-frequency resource of the control resource set corresponding to the first search space set and the first time-frequency resource do not meet at least one of the foregoing relationships, the terminal device does not monitor a PDCCH on the first PDCCH candidate in the first search space set.

According to the foregoing solution, the network device sends, to the terminal device, a relationship that the time-frequency resource of the control resource set corresponding to the first search space set and the first time-frequency resource meet, to reduce complexity of sending a PDCCH and/or a PDCCH DM-RS by the network device and complexity of receiving a PDCCH and/or a PDCCH DM-RS by the terminal device, and reduce channel estimation complexity of the terminal device. Further, capability information of the terminal device and/or a protocol limitation are/is considered, and implementation complexity on the terminal device can be reduced.

According to a fourth aspect, a PDCCH monitoring method is provided, including: A network device sends first indication information to a terminal device, where the first indication information indicates a first time-frequency resource. The network device sends second indication information to the terminal device, where the second indication information indicates a first search space set, and a time-frequency resource of a control resource set CORESET corresponding to the first search space set and the first time-frequency resource meet at least one of the following relationships: at least one RE in an RE set on only the 1^{st} symbol in the time-frequency resource of the CORESET corresponding to the first search space set overlaps with at least one RE in the first time-frequency resource; at least one RE in an RE set on only one symbol in the time-frequency resource of the CORESET corresponding to the first search space set overlaps with at least one RE in the first time-frequency resource; at least one RE in an RE set on only the 1^{st} symbol and the 2^{nd} symbol in the time-frequency resource of the CORESET corresponding to the first search space set overlaps with at least one RE in the first time-frequency resource; at least one RE in an RE set on only the 1^{st} symbol and/or the last symbol in the time-frequency resource of the CORESET corresponding to the first search space set overlaps with at least one RE in the first time-frequency resource; there are a maximum of Q sets of first time-frequency resource-related configurations, at least one RE in the first time-frequency resource indicated by any one of the Q sets of first time-frequency resource-related configurations overlaps with at least one RE in the time-frequency resource of the control resource set CORESET corresponding to the first search space set, and Q is a positive integer; any RE in an RE set on at least one symbol in the time-frequency resource of the CORESET corresponding to the first search space set does not overlap with any RE in the first time-frequency resource; or at least one RE in an RE set on a maximum of one symbol in the time-frequency resource of the CORESET corresponding to the first search space set overlaps with at least one RE in the first time-frequency resource. The network device transmits a PDCCH on a first PDCCH candidate in the first search space set, where at least one RE in the first PDCCH candidate overlaps with at least one RE in the first time-frequency resource.

For beneficial effects of the foregoing solution, refer to the beneficial effects of the third aspect. For brevity, details are not described herein in this application.

With reference to the third aspect, in some implementations of the third aspect, or with reference to the fourth aspect, in some implementations of the fourth aspect, the first time-frequency resource includes at least one type of the following REs: REs on which the network device indicates not to allow PDCCH DM-RS transmission, REs on which the network device indicates not to allow PDCCH transmission, REs on which the network device indicates not to allow PDCCH DM-RS and PDCCH transmission, REs to which a cell-specific reference signal CRS is mapped, REs to which a channel state indication reference signal CSI-RS is mapped, REs to which a tracking reference signal TRS is mapped, or REs included in a rate matching resource.

With reference to the third aspect, in some implementations of the third aspect, or with reference to the fourth aspect, in some implementations of the fourth aspect, when the REs to which the CRS is mapped include REs to which CRSs corresponding to two sets of configurations are mapped, the REs to which the CRSs corresponding to the at least two sets of configurations are mapped correspond to a same quantity of antenna ports, and/or shift parameters of the REs to which the CRSs corresponding to the at least two sets of configurations are mapped are the same; and/or when the REs to which the CRS is mapped include REs to which a CRS corresponding to at least one set of configurations is mapped, REs to which a CRS corresponding to one of the at least one set of configurations is mapped are located on RBs with a quantity greater than 100.

According to a fifth aspect, a PDCCH monitoring apparatus is provided. The apparatus includes a storage unit and a processing unit, and the apparatus is configured to perform the method provided in the first aspect, the second aspect, the third aspect, or the fourth aspect. Specifically, the apparatus may include units and/or modules, such as a processing unit and/or a communication unit, configured to perform the method provided in any one of the first aspect or the implementations of the first aspect, or any one of the second aspect or the implementations of the second aspect, or any one of the third aspect or the implementations of the third aspect, or any one of the fourth aspect or the implementations of the fourth aspect.

In an implementation, the apparatus is a terminal device. When the apparatus is the terminal device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a terminal device. When the apparatus is the chip, the chip system, or the circuit used in a terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

In an implementation, the apparatus is a network device. When the apparatus is the network device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a network device. When the apparatus is the chip, the chip system, or the circuit used in the network device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a sixth aspect, a PDCCH monitoring apparatus is provided. The apparatus includes: a memory, configured to store a program; and at least one processor, configured to execute a computer program or instructions stored in the memory, to perform the method provided in any one of the first aspect or the implementations of the first aspect, or any one of the second aspect or the implementations of the second aspect, or any one of the third aspect or the implementations of the third aspect, or any one of the fourth aspect or the implementations of the fourth aspect.

In an implementation, the apparatus is a terminal device.

In another implementation, the apparatus is a chip, a chip system, or a circuit used in a terminal device.

In an implementation, the apparatus is a network device.

In another implementation, the apparatus is a chip, a chip system, or a circuit used in a network device.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a seventh aspect, a computer-readable storage medium is provided. The computer-readable storage medium stores program code executed by a device, and the program code includes the method provided in any one of the first aspect or the implementations of the first aspect, or any one of the second aspect or the implementations of the second aspect, or any one of the third aspect or the implementations of the third aspect, or any one of the fourth aspect or the implementations of the fourth aspect.

According to an eighth aspect, a computer program product including instruction is provided. When the computer program product runs on a computer, the computer is enabled to perform the method provided in any one of the first aspect or the implementations of the first aspect, or any one of the second aspect or the implementations of the second aspect, or any one of the third aspect or the implementations of the third aspect, or any one of the fourth aspect or the implementations of the fourth aspect.

According to a ninth aspect, a chip is provided. The chip includes a processor and a communication interface. The processor reads, through the communication interface, instructions stored in a memory, to perform the method provided in any one of the first aspect or the implementations of the first aspect, or any one of the second aspect or the implementations of the second aspect, or any one of the third aspect or the implementations of the third aspect, or any one of the fourth aspect or the implementations of the fourth aspect.

Optionally, in an implementation, the chip further includes the memory, the memory stores a computer program or instructions, the processor is configured to execute the computer program or the instructions stored in the memory, and when the computer program or the instructions are executed, the processor is configured to perform the method provided in any one of the first aspect or the implementations of the first aspect, or any one of the second aspect or the implementations of the second aspect, or any one of the third aspect or the implementations of the third aspect, or any one of the fourth aspect or the implementations of the fourth aspect.

According to a tenth aspect, a PDCCH monitoring system is provided, including the terminal device in the first aspect and the network device in the second aspect.

According to an eleventh aspect, a PDCCH monitoring system is provided, including the terminal device in the third aspect and the network device in the fourth aspect.

### BRIEF DESCRIPTION OF DRAWINGS

FIG. 1 is a diagram of a wireless communication system 100 applicable to an embodiment of this application;
FIG. 2 is a diagram of a wireless communication system 200 applicable to an embodiment of this application;
FIG. 3 is a diagram of CRS deployment;
FIG. 4 is another diagram of CRS deployment;
FIG. 5 is a diagram of a search space set and a CORESET;
FIG. 6 is a diagram of mapping a PDCCH to physical resources;
FIG. 7 is a flowchart of a PUCCH monitoring method 700 according to this application;
FIG. 8 is a diagram of a second time-frequency resource according to an embodiment of this application;
FIG. 9 is another diagram of a second time-frequency resource according to an embodiment of this application;
FIG. 10 is another diagram of a second time-frequency resource according to an embodiment of this application;
FIG. 11 is another diagram of a second time-frequency resource according to an embodiment of this application;
FIG. 12 is another diagram of a second time-frequency resource according to an embodiment of this application;
FIG. 13 is another diagram of a second time-frequency resource according to an embodiment of this application;
FIG. 14 is a diagram of mapping a PDCCH on a PDCCH candidate to physical resources;
FIG. 15 is another diagram of mapping a PDCCH on a PDCCH candidate to physical resources;
FIG. 16 is a diagram of an information notification method 1600 according to an embodiment of this application;
FIG. 17 is a diagram of a PDCCH monitoring method 1700 according to an embodiment of this application;
FIG. 18 is a diagram of a resource configuration method 1800 according to an embodiment of this application;
FIG. 19 is a diagram of a PDCCH monitoring method 1900 according to an embodiment of this application;
FIG. 20 is another diagram of a second time-frequency resource and a third time-frequency resource according to an embodiment of this application;
FIG. 21 is another diagram of a second time-frequency resource and a third time-frequency resource according to an embodiment of this application;
FIG. 22 is another diagram of a second time-frequency resource and a third time-frequency resource according to an embodiment of this application;
FIG. 23 is another diagram of a second time-frequency resource and a third time-frequency resource according to an embodiment of this application;
FIG. 24 is another diagram of a second time-frequency resource and a third time-frequency resource according to an embodiment of this application;
FIG. 25 is a diagram of a PDDCH monitoring method 2500 according to an embodiment of this application;
FIG. 26 is a schematic block diagram of a communication apparatus 2600 according to an embodiment of this application;
FIG. 27 is a schematic block diagram of a communication apparatus 2700 according to an embodiment of this application;
FIG. 28 is a diagram of a simplified structure of a terminal device 2800; and
FIG. 29 is a diagram of a simplified structure of a base station 2900.

### DESCRIPTION OF EMBODIMENTS

The following describes technical solutions of embodiments in this application with reference to accompanying drawings.

The technical solutions provided in this application may be applied to various communication systems, for example, a 5th generation (5th generation, 5G) or new radio (new radio, NR) system, a long term evolution (long term evolution, LTE) system, and an LTE time division duplex (time division duplex, TDD) system. The technical solutions provided in this application may be further applied to a future communication system, for example, a 6th generation mobile communication system. The technical solutions provided in this application may be further applied to device-to-device (device to device, D2D) communication, vehicle-to-everything (vehicle-to-everything, V2X) communication, machine-to-machine (machine to machine, M2M) communication, machine type communication (machine type communication, MTC), an internet of things (internet of things, IoT) communication system, or another communication system.

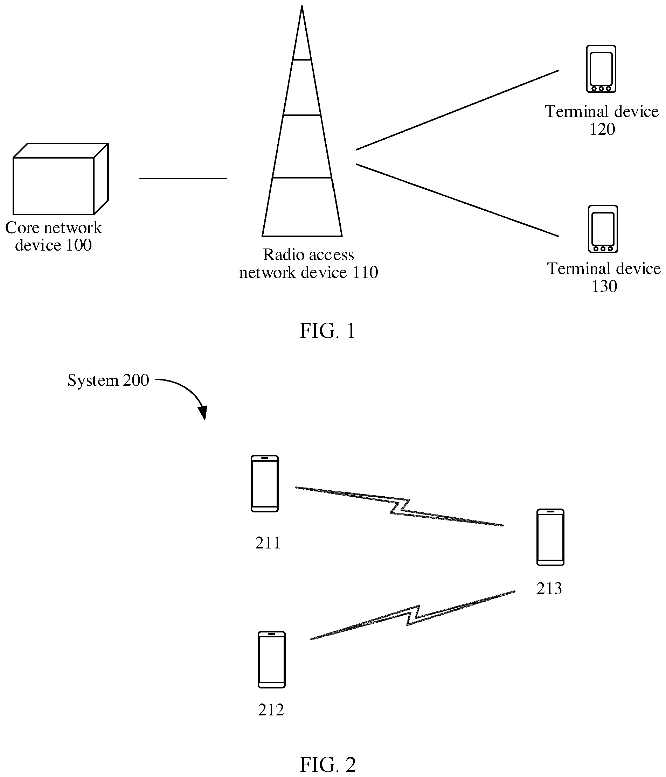

For ease of understanding of embodiments of this application, a communication system applicable to embodiments of this application is first described in detail with reference to FIG. 1 and FIG. 2.

FIG. 1 is a diagram of a wireless communication system 100 applicable to an embodiment of this application. As shown in FIG. 1, the wireless communication system 100 may include at least one core network device, for example, a core network device 111 shown in FIG. 1, at least one radio access network device, for example, a radio access network device 121 shown in FIG. 1, and at least one terminal device, for example, a terminal device 131 and a terminal device 132 shown in FIG. 1. A plurality of antennas may be configured for both the radio access network device and the terminal device, and the radio access network device and the terminal device may communicate with each other by using a multi-antenna technology.

FIG. 2 is a diagram of a wireless communication system 200 applicable to an embodiment of this application. As shown in FIG. 2, the technical solutions in embodiments of this application may be further applied to D2D communication. The wireless communication system 200 includes a plurality of terminal devices, for example, a terminal device 211 to a terminal device 213 in FIG. 2. The terminal device 211 to the terminal device 213 may directly communicate with each other. For example, the terminal device 211 and the terminal device 212 may separately or simultaneously send data to the terminal device 213.

As shown in FIG. 1 or FIG. 2, the terminal device may be connected to the radio access network device in a wireless manner, and the radio access network device is connected to the core network device in a wireless or wired manner. The core network device and the radio access network device may be independent devices, or a logical function of the core network device and a logical function of the radio access network device may be integrated into a same device, or some functions of the core network device and some functions of the radio access network device may be integrated into one device. The terminal device may be in a fixed position, or may be in a moving state.

The following briefly describes the network elements shown in FIG. 1.
1. A terminal device may be referred to as user equipment (User equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides a user with voice/data. For example, the terminal device may be a handheld device or a vehicle-mounted device having a wireless connection function. Currently, some examples of the terminal are: a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device or wearable device connected to a wireless modem, a terminal device in a 5G network, or a terminal device in a future evolved public land mobile network (public land mobile network, PLMN). This is not limited in embodiments of this application.

By way of example, and not limitation, in embodiments of this application, the terminal device may alternatively be a wearable device. The wearable device is a general term of a wearable device that is intelligently designed and developed for daily wear by using a wearable technology. The wearable device may be directly worn on a body, or may be integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, and include devices that focus on only one type of application function and need to collaboratively work with other devices such as smartphones.

In addition, in embodiments of this application, the terminal device may alternatively be a terminal device in an IoT system.

It should be noted that a terminal device and an access network device may communicate with each other by using an air interface technology (for example, an NR technology or an LTE technology). Terminal devices may also communicate with each other by using an air interface technology (for example, an NR technology or an LTE technology).

In embodiments of this application, the terminal device may be replaced with an apparatus configured to implement a function of the terminal device, or may be an apparatus that can support the terminal device in implementing the function, for example, a chip system or a chip. The apparatus may be installed in the terminal device. In addition, the chip system may include a chip, or may include a chip and another discrete device.

2. A radio access network (Radio access network, RAN) device may provide a function of accessing a communication network for a terminal device. Specifically, the RAN device may include a wireless network device in a 3rd generation partnership project (3rd generation partnership project, 3GPP) network, or may include an access point in a non-3GPP (non-3GPP) network. For ease of description, the RAN device is used for representation in the following.

The RAN device may use different wireless access technologies. Currently, there are two types of radio access technologies: a 3GPP access technology (for example, a radio access technology used in a 4th generation (4th generation, 4G) or 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN device. The non-3GPP access technology may include an air interface technology represented by an access point (access point, AP) in wireless fidelity (wireless fidelity, Wi-Fi), a worldwide interoperability for microwave access (worldwide interoperability for microwave access, WiMAX), or a code division multiple access (code division multiple access, CDMA). The RAN device may enable interconnection and interworking between a terminal device and a 3GPP core network by using a non-3GPP technology.

The RAN device can be further responsible for functions such as radio resource management, quality of service (quality of service, QoS) management, and data compression and encryption on an air interface side. The AN device provides an access service for the terminal device, to complete forwarding of a control signal and user data between the terminal device and the core network.

The RAN device may include but is not limited to a macro base station, a micro base station (also referred to as a small cell), a home base station (for example, a home evolved NodeB or a home NodeB, HNB), a baseband unit (baseband unit, BBU), or an AP, a wireless relay node, a wireless backhaul node, a transmission point (transmission point, TP), or a transmission and reception point (transmission and reception point, TRP) in a Wi-Fi system, or may be a gNB or a transmission point (TRP or TP) in a 5G (for example, NR) system, one or a group (including a plurality of antenna panels) of antenna panels of a base station in a 5G system, or a network node that forms a gNB or a transmission point, for example, a distributed unit (distributed unit, DU), or a base station in a next-generation 6G communication system. A specific technology and a specific device form used by the RAN device are not limited in embodiments of this application.

According to the diagrams of the network architectures shown in FIG. 1 and FIG. 2, the following points should also be understood.
1. The network architectures shown in FIG. 1 and FIG. 2 may further include another network element or device, for example, may include a wireless relay device and a wireless backhaul device. This is not specifically limited in this application.
2. The network architectures shown in FIG. 1 and FIG. 2 are merely examples for description, and a network architecture applicable to embodiments of this application is not limited thereto. Any network architecture that can implement functions of the foregoing devices is applicable to embodiments of this application.
3. Names of the devices in the network architectures shown in FIG. 1 and FIG. 2 are defined only for ease of distinguishing different functions, and shall not constitute any limitation on this application. This application does not exclude a possibility of using other names in a 6G network and other networks in the future. For example, in the 6G network, some or all of the devices may still use same terms in 5G, or may use other names.
4. The RAN device and the terminal device shown in FIG. 1 and FIG. 2 may be deployed on land, including an indoor or outdoor scenario, and a handheld or a vehicle-mounted scenario; or may be deployed on a water surface; or may be deployed on a plane, a balloon, or a man-made satellite in the air. Application scenarios of the radio access network device and the terminal device are not limited in embodiments of this application.
5. The network architecture shown in FIG. 1 or FIG. 2 may be applicable to downlink signal transmission, or may be applicable to uplink signal transmission, or may be applicable to device-to-device signal transmission. For downlink signal transmission, a sending device is a radio access network device, and a corresponding receiving device is a terminal device. For uplink signal transmission, a sending device is a terminal device, and a corresponding receiving device is a radio access network device. For device-to-device signal transmission, a sending device is a terminal device, and a corresponding receiving device is also a terminal device. A direction of signal transmission is not limited in embodiments of this application.
6. In the network architectures shown in FIG. 1 and FIG. 2, the radio access network device and the terminal device, and the terminal devices may communicate with each other by using a licensed spectrum (Licensed spectrum), or may communicate with each other by using an unlicensed spectrum (Unlicensed spectrum), or may communicate with each other by using both the licensed spectrum and the unlicensed spectrum. A spectrum below 6 GHz, a spectrum above 6 GHz, or both of a spectrum below 6 GHz and a spectrum above 6 GHz may be used for communication between the radio access network device and the terminal device, and between terminal devices. Spectrum resources used by the radio access network device and the terminal device are not limited in this embodiment of this application.

For ease of understanding embodiments of this application, terms in this application are explained.

### 1. LTE resource element

In an LTE system, LTE time units include a subframe (subframe), a slot (slot), and a symbol (symbol). One subframe includes 12 or 14 orthogonal frequency division multiplexing (Orthogonal frequency-division multiplexing, OFDM) symbols. One subframe includes two slots (slot), and each slot includes six or seven OFDM symbols.

LTE frequency domain resource units include a subcarrier (subcarrier). Generally, a subcarrier spacing (Subcarrier spacing, SCS) is 15 kHz.

LTE time-frequency resource block units include a resource block (Resource block, RB) and a resource element (Resource element, RE). One RB is one slot, namely, six or seven symbols, in time domain, and is 12 contiguous subcarriers in frequency domain. One RE is one symbol in time domain and one subcarrier in frequency domain.

It should be noted that in LTE and NR systems, concepts of a slot and a resource block are different, and concepts of a resource element, a subcarrier, and a symbol are basically consistent.

### 2. LTE cell-specific reference signal

In an LTE downlink signal transmission process, a cell-specific reference signal (Cell-specific reference signal, CRS) is sent. Generally, if an LTE cell works normally, CRSs are continuously sent. In addition, a CRS exists only in the LTE system, and no CRS exists in an NR system.

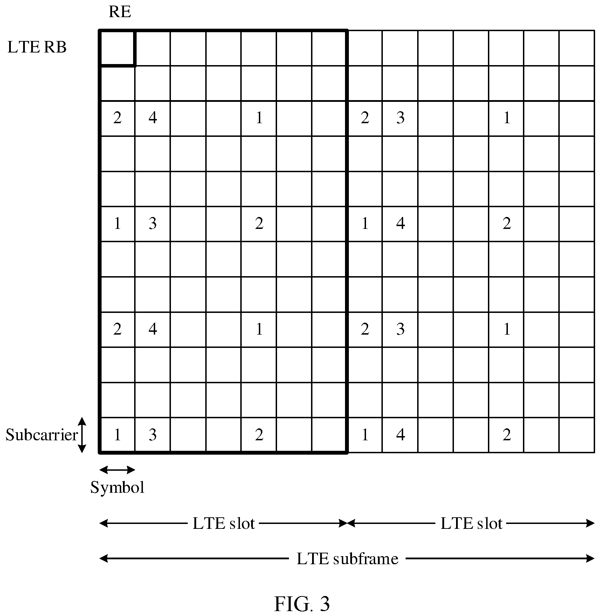

The CRS may be for one port (port), or two ports, or four ports. FIG. 3 is a diagram of CRS deployment. As shown in FIG. 3, an RE marked with a number carries a CRS for ports corresponding to the number, and CRS patterns in the LTE RBs are the same. A CRS pattern is a quantity and a position of REs carrying a CRS in an LTE RB.

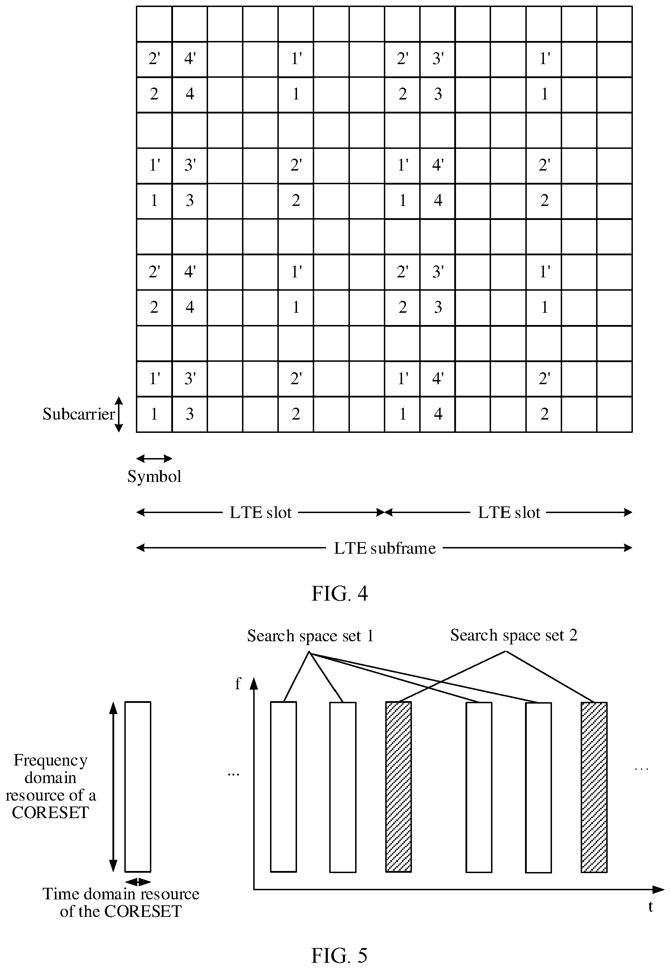

The CRS has a frequency domain shift parameter, namely, v-Shift. To avoid interference between CRSs of intra-frequency neighboring cells, different v-Shift parameters may be configured for the CRSs of the intra-frequency neighboring cells in the LTE system. FIG. 4 is another diagram of CRS deployment. As shown in FIG. 4, a v-Shift of a CRS pattern with a sequence number that is not followed by ' is 0, and a v-Shift of a CRS pattern with a sequence number that is followed by ' is 1. Therefore, it can be learned that a CRS with a v-Shift 1 is shifted by one subcarrier in frequency domain relative to a CRS with a v-Shift 0.

### 3. NR resource element

NR time units include a slot and a symbol. One slot includes 12 or 14 OFDM symbols.

NR frequency domain resource units include a resource block and a subcarrier, and one resource block includes 12 subcarriers. It should be noted that an LTE RB is a time-frequency resource unit, and an NR RB is a frequency domain resource unit.

A definition of an RE in NR is the same as that in LTE. The RE is one symbol in time domain and one subcarrier in frequency domain.

There are five types of NR subcarrier spacings, numbered from 0 to 4, corresponding to 15 kHz, 30 kHz, 60 kHz, 120 kHz, and 240 kHz, respectively.

It should be understood that embodiments of this application are mainly for a scenario in which an LTE carrier overlaps with an NR carrier with a subcarrier spacing of 15 kHz.

### 4. Physical downlink control channel monitoring and a physical downlink control channel candidate

A physical downlink control channel (Physical downlink control channel, PDCCH) of NR may carry downlink control information (Downlink control information, DCI), and a PDCCH candidate (PDCCH candidate) of UE is configured by a base station. APDCCH of UE may be sent or may not be sent on a PDCCH candidate. The UE monitors (monitor) the PDCCH candidate, and performs PDCCH decoding according to a to-be-detected DCI format (DCI format). A monitoring result may be that the PDCCH is detected (Detect) or the PDCCH is not detected.

One PDCCH candidate may include L={1, 2, 4, 8, 16} control channel elements (Control channel element, CCE). L herein is referred to as a PDCCH aggregation level (Aggregation level, AL), and one CCE includes six resource element groups. The REG is a unit of a time-frequency resource block, and is one symbol in time domain and one resource block in frequency domain.

### 5. Search space set and control resource set

A search space set (Search space set) is defined as a set of a group of PDCCH candidates, and ALs of the group of PDCCH candidates may be the same or different. A search space set is associated with a control resource set (Control resource set, CORESET). In addition, the search space set is sometimes referred to as a search space set (Search space).

The CORESET is a concept introduced in NR. A CORESET is defined in a cell, and includes a group of contiguous or non-contiguous RBs in frequency domain and one, two, or three consecutive OFDM symbols in time domain.

One search space set may be associated with one and only one CORESET, and one CORESET may be associated with a plurality of search space sets.

A time domain parameter such as a periodicity and an offset may be configured for a search space set. A size and a position of a group of time-frequency resources corresponding to the search space set may be determined based on the time domain parameter of the search space set and a time-frequency resource parameter of a CORESET associated with the search space set.

FIG. 5 is a diagram of a search space set and a CORESET. As shown in FIG. 5, if a CORESET is associated with two search space sets, sizes and positions of time-frequency resources corresponding to the two search space sets may be determined based on a time-frequency resource parameter of the CORESET and time domain parameters of the two search space sets associated with the CORESET. A search space set 1 corresponds to a group of shadowless resources, and the search space set 2 corresponds to a group of shadow resources.

Configurations of a search space set include an AL and a quantity of PDCCH candidates corresponding to each AL. Positions of time-frequency resources of the PDCCH candidates corresponding to the search space set may be determined based on these configurations and sizes and positions of time-frequency resources corresponding to the search space set according to a rule specified in the protocol.

### 6. CORESET precoding and PDCCH channel estimation

If a higher-layer parameter precoderGranularity is set to allContiguousRBs, a CORESET is divided into a maximum of four non-contiguous groups in frequency domain, and RBs in each group of CORESET are contiguous. UE may assume that same precoding is performed on all REGs in a contiguous RB set in the group of CORESET, and no RE in the CORESET overlaps with a synchronization signal and downlink broadcast channel block (Synchronization signal and physical downlink broadcast channel block, SS & PBCH, SSB) or a CRS signal indicated by the higher-layer parameter.

If the higher-layer parameter precoderGranularity is set to sameAsREG-bundle, the UE may assume that precoding in a REG bundle (bundle) is the same. One REG bundle includes a quantity (that is a REG bundle size (REG bundle size)) of REGs whose sequence numbers are adjacent to each other. If any RE in a PDCCH candidate has signal overlapping with an SSB or a CRS, the UE does not need to monitor the PDCCH candidate.

For example, when one CORESET includes one consecutive OFDM symbol in time domain, the REG bundle size may be 2 or 6.

For example, when one CORESET includes two consecutive OFDM symbols in time domain, the REG bundle size may be 2 or 6.

For example, when one CORESET includes three consecutive OFDM symbols in time domain, the REG bundle size may be 3 or 6.

In addition, if the higher-layer parameter precoderGranularity is set to allContiguousRBs, the UE may perform joint channel estimation on REGs in each group of contiguous RBs in frequency domain in a maximum of the four groups of CORESET. If the higher-layer parameter precoderGranularity is set to sameAsREG-bundle, the UE may perform joint channel estimation on REGs in a REG bundle in the CORESET.

Joint channel estimation on a group of REGs means that channel estimation of a REG may be performed by using demodulation reference signals (demodulation reference signal, DM-RS) of a REG and another REG. For example, initial channel estimations on corresponding REs may be obtained based on DM-RS receiving signals and transmitting signals of a plurality of REGs, and then the plurality of initial channel estimations on the plurality of REGs are filtered, to obtain channel estimation on REs on which PDCCHs on the plurality of REGs are located.

### 7. CRS configuration in NR

As described above, if the higher-layer parameter precoderGranularity is set to allContiguousRBs, a configuration of a base station needs to ensure that no RE in the CORESET overlaps with a CRS signal indicated by the higher-layer parameter. If the higher-layer parameter precoderGranularity is set to sameAsREG-bundle, and any RE in a PDCCH candidate overlaps with the CRS signal indicated by the higher-layer parameter, UE does not need to monitor the PDCCH candidate.

The LTE CRS may be configured by using the following higher-layer information elements (Information element, IE): lte-CRS-ToMatchAround, lte-CRS-PatternList1, or lte-CRS-PatternList2.

A set of CRS parameters are configured in lte-CRS-ToMatchAround, including:
downlink carrier position: carrierFreqDL;
downlink carrier bandwidth: carrierBandwidthDL;
multicast/broadcast single frequency network (Multicast broadcast single frequency network, MBSFN) subframe configuration: mbsfn-SubframeConfigList, where no CRS is transmitted in an MBSFN subframe;
quantity of CRS ports: nrofCRS-Ports; and
CRS frequency shift: v-Shift.

A maximum of three sets of CRS parameters can be configured for each of the two IEs lte-CRS-PatternList1 and lte-CRS-PatternList2.

Because a bandwidth of a CORESET may be wider than a bandwidth of a CRS, a scenario in which one CORESET overlaps with a plurality of sets of CRSs may occur.

The carrierBandwidthDL is configured in a unit of RB, and may be set to 6, 15, 25, 50, 75, 100, or 200 RBs.

### 8. Mapping a PDCCH to physical resources

When one PDCCH candidate carries one PDCCH, the PDCCH is mapped to a time-frequency resource of the PDCCH in an order of frequency domain first and then time domain. In other words, starting from a symbol with a smallest sequence number of a PDCCH candidate, mapping is performed in a direction from a subcarrier with a smallest sequence number to a subcarrier with an increased sequence number, or mapping is performed in a direction from a low-frequency subcarrier to a high-frequency subcarrier. If there are a plurality of symbols, after mapping on all subcarriers on the symbol with the smallest sequence number is completed, mapping on a symbol with a sequence number increased by 1 is performed, and mapping is performed in a direction from a subcarrier with a smallest sequence number to a subcarrier with an increased sequence number, and so on.

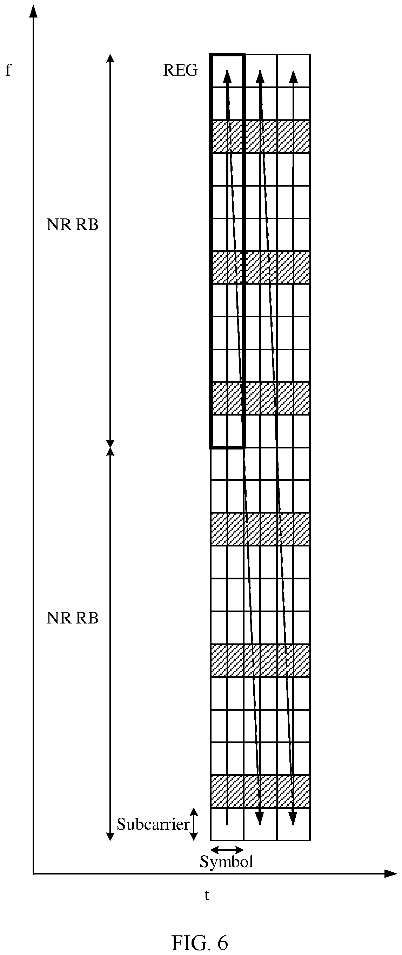

FIG. 6 is a diagram of mapping a PDCCH to physical resources. As shown in FIG. 6, a PDCCH candidate having 3 symbols, 2 resource blocks, and an AL being 1 is used as an example. PDCCH modulation symbols of the PDCCH candidate are sequentially mapped to shadowless REs following the arrows. A shadow RE is used to transmit a PDCCH DM-RS, and to which a PDCCH modulation symbol is not mapped.

Currently, LTE systems are widely deployed and there are still a large quantity of existing mobile terminals. Therefore, the LTE system and an NR system may coexist in a long period of time. If there are a small quantity of LTE UEs on a carrier of the LTE system, the LTE carrier may be shared with NR UE.

However, as described above, an NR PDCCH candidate is not allowed to overlap with a CRS in configuration, or is allowed to overlap with a CRS in configuration. However, once the PDCCH candidate overlaps with the CRS, the PDCCH candidate cannot carry a PDCCH.

In the NR system, some scheduled PDCCHs need to be carried on the first three symbols of an NR slot. On a shared frequency band of LTE and NR, there is a CRS on the 1^{st} symbol or the first two symbols of NR. Especially, when there is a CRS on both the first two symbols, a PDCCH candidate can be configured on only the 3^{rd} symbol. Because resources of one symbol are limited, resources for the PDCCH may be insufficient.

Therefore, on a shared frequency band of some access standards (for example, on a shared frequency band of LTE and NR), how to increase a scheduling opportunity of a PDCCH and improve resource utilization becomes a problem to be urgently resolved.

In view of this, this application provides a PDCCH monitoring method, to effectively resolve the foregoing problem.

To better understand the embodiments, the following descriptions are provided herein:
1. The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.
2. The aspects or features of embodiments of this application may be implemented by using a method or an apparatus, or may be implemented through a product using standard programming and/or engineering technologies. The term "product" used in this application covers a computer program that can be accessed from any computer-readable component, carrier, or medium. For example, the computer-readable medium may include but is not limited to: a magnetic storage component (for example, a hard disk drive, a floppy disk or a magnetic tape), an optical disc (for example, a compact disc (compact disc, CD), and a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.
3. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

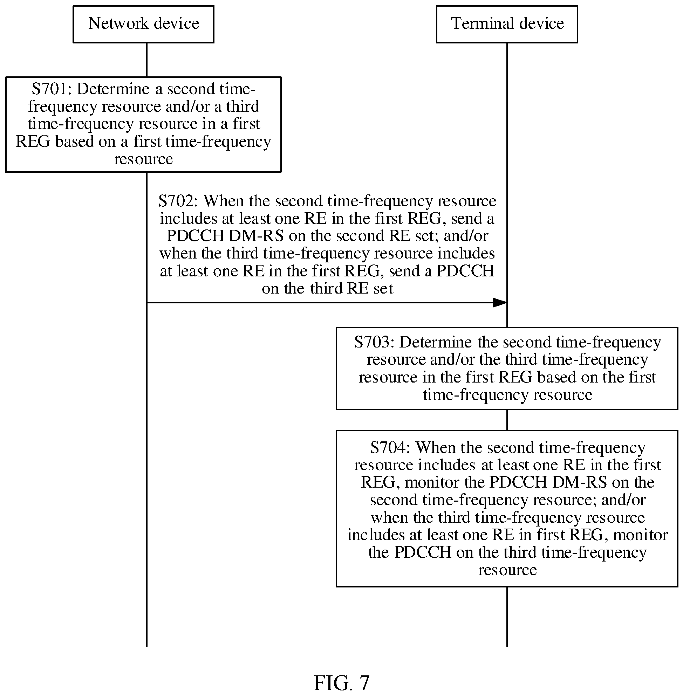

FIG. 7 is a flowchart of a PDCCH monitoring method 700 according to this application. As shown in FIG. 7, the method 700 may include the following steps.

S701: A network device determines a second time-frequency resource and/or a third time-frequency resource in a first REG based on a first time-frequency resource.

The first time-frequency resource may carry a CRS. The second time-frequency resource may be used for transmitting a PDCCH DM-RS sent by the network device. This may also be understood as: The second time-frequency resource has a capability of transmitting the PDCCH DM-RS sent by the network device, or the second time-frequency resource is allowed to transmit the PDCCH DM-RS sent by the network device. The third time-frequency resource may be used for transmitting a PDCCH sent by the network device. This may also be understood as: The third time-frequency resource has a capability of transmitting the PDCCH sent by the network device, or the third time-frequency resource is allowed to transmit the PDCCH sent by the network device. The second time-frequency resource is a part of a plurality of REs in the first REG that are preset in the protocol for PDCCH DM-RS transmission, and/or the third time-frequency resource is a part of a plurality of REs in the first REG that are preset in the protocol for PDCCH transmission.

The first REG belongs to one or more PDCCH candidates. On one hand, if the network device needs to transmit downlink control information, the network device may send a PDCCH on a part or all of the one or more PDCCH candidates to which the first REG belongs. Usually, to avoid interference, the network device may send the PDCCH on a maximum of one of the one or more PDCCH candidates to which the first REG belongs. On the other hand, if the network device does not need to transmit downlink control information, or the network device does not need to transmit downlink control information on the one or more PDCCH candidates to which the first REG belongs, the network device may not send a PDCCH on the one or more PDCCH candidates to which the first REG belongs.

If the network device sends the PDCCH on at least one of the one or more PDCCH candidates to which the first REG belongs, the network device sends the PDCCH DM-RS on the second time-frequency resource, and/or the network device sends the PDCCH on the third time-frequency resource. If the network device does not send the PDCCH on the one or more PDCCH candidates to which the first REG belongs, the network device does not send the PDCCH DM-RS on the second time-frequency resource, and/or the network device does not send the PDCCH on the third time-frequency resource. In other words, the second time-frequency resource may be used for transmitting the PDCCH DM-RS sent by the network device, or the second time-frequency resource has a capability of transmitting the PDCCH DM-RS sent by the network device, but the second time-frequency resource does not necessarily transmit the PDCCH DM-RS sent by the network device. The third time-frequency resource may be used for transmitting the PDCCH sent by the network device, or the third time-frequency resource has a capability of transmitting the PDCCH sent by the network device, but the third time-frequency resource does not necessarily transmit the PDCCH sent by the network device.

In a current NR protocol, a quantity of REs in a REG that are preset in the protocol to have a PDCCH DM-RS transmission capability is 3, and the REs are the 2^{nd}, the 6^{th}, and the 10^{th} REs in the REG. In addition, a quantity of REs in the REG that are preset in the protocol to have a PDCCH transmission capability is 9, and the REs are the 1^{st}, the 3^{rd}, the 4^{th}, the 5^{th}, the 7^{th}, the 8^{th}, the 9^{th}, the 11^{th}, and the 12^{th} REs in the REG. The REG includes 12 REs, an RE having a lowest frequency is the 1^{st} RE, and an RE having a highest frequency is the 12^{th} RE.

An RE preset in the protocol for PDCCH DM-RS transmission may also be understood as an RE used to transmit a PDCCH DM-RS in a REG when the network device does not configure the first time-frequency resource, or when the first time-frequency resource does not overlap with a CORESET at all. An RE preset in the protocol for PDCCH transmission may also be understood as an RE used to transmit a PDCCH in a REG when the network device does not configure the first time-frequency resource, or when the first time-frequency resource does not overlap with a CORESET at all.

The second time-frequency resource is a part of the plurality of REs in the first REG that are preset in the protocol for PDCCH DM-RS transmission. In an NR system, a quantity of REs of the second time-frequency resource may be 2, and the REs may be the 2^{nd} and 6^{th} REs, or the 2^{nd} and 10^{th} REs, or the 6^{th} and 10^{th} REs; or the quantity of REs of the second time-frequency resource may be 1, and the RE may be the 2^{nd} RE, the 6^{th} RE, or the 10^{th} RE. It should be noted that the second time-frequency resource cannot be all REs of the plurality of REs in the first REG that are preset in the protocol for PDCCH DM-RS transmission. Further, the second time-frequency resource includes at least one RE.

Similarly, the third time-frequency resource is a part of the plurality of REs in the first REG that are preset in the protocol for PDCCH transmission, and the third time-frequency resource cannot be all REs of the plurality of REs in the first REG that are preset in the protocol for PDCCH transmission. Further, the third time-frequency resource includes at least one RE.

A time-frequency resource other than the second time-frequency resource in the first REG cannot be used to transmit the PDCCH DM-RS sent by the network device, and/or a time-frequency resource other than the third time-frequency resource in the first REG cannot be used to transmit the PDCCH sent by the network device. Alternatively, at least one RE other than the second time-frequency resource in the first REG may be used to transmit the PDCCH DM-RS sent by the network device, and/or at least one RE other than the third time-frequency resource in the first REG may be used to transmit the PDCCH sent by the network device.

In a possible case, the second time-frequency resource is empty, and the third time-frequency resource includes at least one RE in the first REG.

The first REG belongs to a first REG set (the first REG SET), and patterns of REs available for PDCCH DM-RS transmission included in all REGs in the first REG set are the same; and/or patterns of REs available for PDCCH transmission included in all the REGs in the first REG set are the same.

That patterns of REs available for PDCCH DM-RS transmission included in all REGs in the first REG set are the same means that quantities of REs available for PDCCH DM-RS transmission in any two REGs in the first REG set are the same, and positions of the REs available for PDCCH DM-RS transmission in any two REGs in the first REG set are the same in the respective REGs. For example, quantities of REs available for PDCCH DM-RS transmission in two REGs are both 2, and the REs in the respective REGs are both the 2^{nd} and the 6^{th} REs. That patterns of REs available for PDCCH transmission included in all the REGs in the first REG set are the same means that quantities of REs available for PDCCH transmission in any two REGs in the first REG set are the same, and positions of the REs available for PDCCH transmission in any two REGs in the first REG set are the same in the respective REGs. For example, quantities of REs available for PDCCH transmission in two REGs are both 6, and the REs in the respective REGs are the 3^{rd}, the 5^{th}, the 8^{th}, the 9^{th}, the 11^{th}, and the 12^{th} REs.

It should be noted that not all REGs in the first REG set may belong to the one or more PDCCH candidates. That patterns of REs available for PDCCH DM-RS transmission included in all REGs in the first REG set are the same may be understood as: Patterns of REs available for PDCCH DM-RS transmission included in all REGs that belong to the one or more PDCCH candidates in the first REG set are the same; or patterns of REs available for PDCCH DM-RS transmission included in all REGs that belong to the one or more PDCCH candidates in the first REG set are the same, and a pattern of REs available for PDCCH DM-RS transmission included in all the REGs that belong to the one or more PDCCH candidates in the first REG set is the same as a pattern of virtual REs available for PDCCH DM-RS transmission in a REG that does not belong to any PDCCH candidate in the first REG set. The virtual RE available for PDCCH DM-RS transmission included in a REG that does not belong to any PDCCH candidate in the first REG set cannot be used to transmit a PDCCH DM-RS, but is virtualized to determine a pattern of REs available for PDCCH DM-RS transmission included in all the REGs that belong to the one or more PDCCH candidates in the first REG set.

Similarly, that patterns of REs available for PDCCH transmission included in all REGs in the first REG set are the same may be understood as: Patterns of REs available for PDCCH transmission included in all REGs that belong to the one or more PDCCH candidates in the first REG set are the same; or patterns of REs available for PDCCH transmission included in all REGs that belong to the one or more PDCCH candidates in the first REG set are the same, and a pattern of REs available for PDCCH transmission included in all the REGs that belong to the one or more PDCCH candidates in the first REG set is the same as a pattern of virtual REs available for PDCCH transmission included in all REGs that do not belong to any PDCCH candidate in the first REG set. The virtual RE available for PDCCH transmission included in a REG that does not belong to any PDCCH candidate in the first REG set cannot be used to transmit a PDCCH, but is virtualized to determine a pattern of REs available for PDCCH transmission included in all the REGs that belong to the one or more PDCCH candidates in the first REG set.

Further, time domain symbols of all the REGs in the first REG set are the same as time domain symbols of the first REG, resource blocks RBs of all the REGs in the first REG set belong to a first RB set, and the first RB set may include any one type of the following RBs:

RBs of a control channel element CCE including the first REG, RBs of a first PDCCH candidate including the first REG, RBs of a REG bundle including the first REG, RBs of a search space set including the first REG, a group of contiguous RBs in a CORESET including the first REG, RBs of the CORESET including the first REG, RBs including N adjacent RBs configured by the network device, or RBs including N adjacent RBs preset in the protocol, where the first PDCCH candidate including the first REG belongs to a PDCCH candidate set, and N is an integer greater than or equal to 2.

The first RB set is all RBs of the CCE including the first REG, or all RBs of the one or more PDCCH candidates including the first REG, or all RBs of the REG bundle including the first REG, or all RBs of the search space set including the first REG, or all of the group of contiguous RBs in the CORESET including the first REG, or all RBs in the CORESET including the first REG, or the N adjacent RBs configured by the network device, or the N adjacent RBs preset in the protocol. The first PDCCH candidate including the first REG belongs to the PDCCH candidate set, and N is an integer greater than or equal to 2.

In addition, the first REG set may also include a plurality of symbols in time domain. Resource blocks RBs of all the REGs in the first REG set belong to the first RB set, and on each symbol of the first REG set, at least one REG in the first REG set overlaps with the first time-frequency resource on at least one RE.

S702: If the second time-frequency resource includes at least one RE in the first REG, the network device sends a PDCCH DM-RS to the terminal device on the second RE set, and/or if the third time-frequency resource includes at least one RE in the first REG, the network device sends a PDCCH to the terminal device on the third RE set. Correspondingly, when the second time-frequency resource includes at least one RE in the first REG, the terminal device receives the PDCCH DM-RS from the network device on the second RE set, and/or when the third time-frequency resource includes at least one RE in the first REG, the terminal device receives the PDCCH from the network device on the third RE set.

S703: The terminal device determines the second time-frequency resource and/or the third time-frequency resource in the first REG based on the first time-frequency resource.

Specifically, for descriptions of determining, by the terminal device, the second time-frequency resource and/or the third time-frequency resource in the first REG based on the first time-frequency resource, refer to the descriptions of determining, by the network device, the second time-frequency resource and/or the third time-frequency resource in the first REG based on the first time-frequency resource in S701. For brevity, details are not described herein in this application.

It should be noted that a solution used by the network device and/or the terminal device to determine the second time-frequency resource in the first REG based on the first time-frequency resource and a solution used by the network device and/or the terminal device to determine the third time-frequency resource in the first REG based on the first time-frequency resource may be in non-corresponding cases. For example, the network device and/or the terminal device determine/determines the second time-frequency resource in the first REG based on the first time-frequency resource by using a solution described in a second case, while the network device and/or the terminal device determine/determines the third time-frequency resource in the first REG based on the first time-frequency resource by using a solution described in a first case.

Further, the network device and the terminal device may determine the second time-frequency resource in the first REG based on the first time-frequency resource by using solutions in non-corresponding cases. For example, the network device determines the second time-frequency resource in the first REG based on the first time-frequency resource by using the solution described in the first case, while the terminal device determines the second time-frequency resource in the first REG based on the first time-frequency resource by using the solution described in the second case. Similarly, the network device and the terminal device may determine the third time-frequency resource in the first REG based on the first time-frequency resource by using solutions in non-corresponding cases. For example, the network device determines the third time-frequency resource in the first REG based on the first time-frequency resource by using the solution described in the first case, while the terminal device determines the third time-frequency resource in the first REG based on the first time-frequency resource by using the solution described in the second case. The second time-frequency resource determined by the network device may be greater than or equal to the second time-frequency resource determined by the terminal device. Similarly, the third time-frequency resource determined by the network device may be greater than or equal to the third time-frequency resource determined by the terminal device.

S704: When the second time-frequency resource includes at least one RE in the first REG, the terminal device monitors a PDCCH DM-RS on the second time-frequency resource, and/or when the third time-frequency resource includes at least one RE in the first REG, the terminal device monitors a PDCCH on the third time-frequency resource.

It should be understood that, on one hand, a monitoring behavior of the terminal device may correspond to a resource sent by the network device. To be specific, the terminal device completely receives the PDCCH DM-RS and/or the PDCCH from the network device, and performs corresponding channel estimation. On the other hand, the monitoring behavior of the terminal device may not correspond to the resource sent by the network device. To be specific, a PDCCH DM-RS received by the terminal device may be a subset of the PDCCH DM-RS from the network device, and/or a PDCCH received by the terminal device may be a subset of the PDCCH from the network device. For example, in the second time-frequency resource, a PDCCH DM-RS pattern sent by the network device is two REs. However, to simplify channel estimation, the terminal device may not receive, in the first time-frequency resource, the two REs transmitting the PDCCH DM-RS.

The terminal device does not know whether the network device sends a PDCCH on these PDCCH candidates. Therefore, when the second time-frequency resource includes at least one RE in the first REG, the terminal device monitors a PDCCH DM-RS on the second time-frequency resource, and/or when the third time-frequency resource includes at least one RE in the first REG, the terminal device monitors a PDCCH on the third time-frequency resource. The terminal device does not monitor the PDCCH DM-RS on all REs other than the second RE set in the first REG, and/or the terminal device does not monitor the PDCCH on all REs other than the third RE set in the first REG.

In a possible case, the second time-frequency resource is empty (for example, the second time-frequency resource does not include any RE), and the third time-frequency resource includes at least one RE in the first REG. In this case, the terminal device does not monitor the PDCCH DM-RS on the first REG, and the terminal device monitors the PDCCH on the third time-frequency resource.

That the terminal device monitors the PDCCH DM-RS means that the terminal device performs, by using the PDCCH DM-RS, initial channel estimation on REs on which the PDCCH DM-RS is located, and filters a plurality of initial channel estimations, to obtain a channel estimation on a PDCCH RE. That the terminal device monitors the PDCCH means demodulating and decoding the PDCCH, to determine whether there is a PDCCH sent to the terminal device.

Optionally, to implement S701, in one aspect, the network device may determine the second time-frequency resource in the first REG based on the first time-frequency resource in any one of the following cases.

In a first possible case, the second time-frequency resource includes (a part or all of) REs other than a first RE in the REs in the first REG that are preset in the protocol for PDCCH DM-RS transmission. A position of the first RE in a PDCCH DM-RS pattern preset in the protocol is the same as a position of a second RE in the PDCCH DM-RS pattern preset in the protocol, the second RE is an RE in a REG in the first REG set, and the second RE is included in the first time-frequency resource.

The first RE may be included in the first time-frequency resource. Alternatively, the first RE may not be included in the first time-frequency resource, but the second RE is included in the first time-frequency resource. The second RE is an RE in a REG other than the first REG in the first REG set. The position of the first RE in the PDCCH DM-RS pattern preset in the protocol is the same as the position of the second RE in the PDCCH DM-RS pattern preset in the protocol. In other words, a position of the first RE in the first REG is the same as a position of the second RE in a REG including the second RE. For example, both the first RE and the second RE are the 2^{nd} RE in the respective REGs. Optionally, the first REG may not include the first RE, or may include one or more first REs.

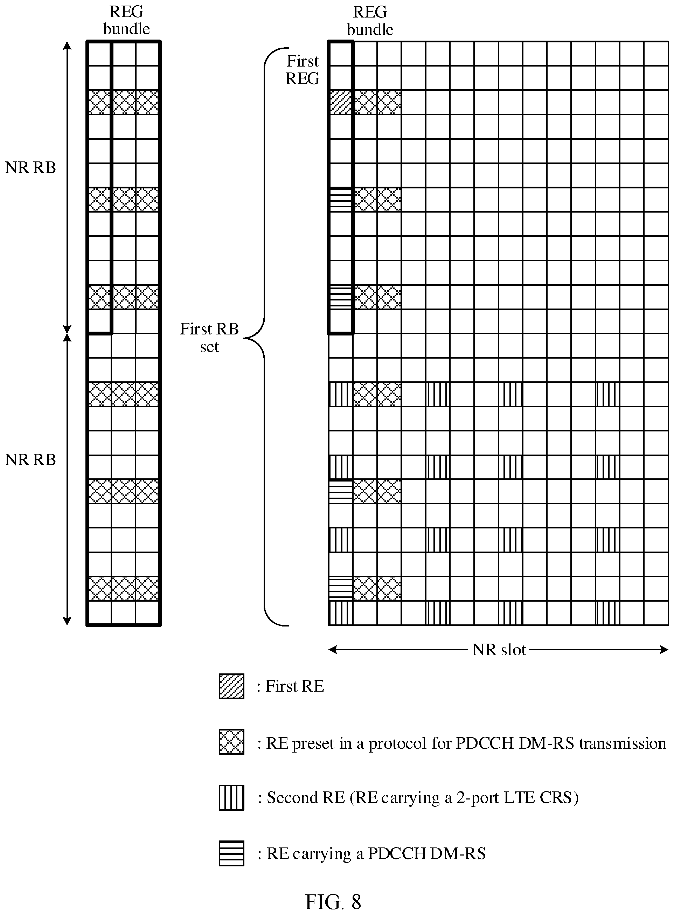

For example, if a higher-layer parameter precoderGranularity of a CORESET associated with the first REG is set to allContiguousRBs, the first RB set is a group of RBs that are contiguous in frequency domain in a frequency domain resource of the CORESET. FIG. 8 is a diagram of the second time-frequency resource according to an embodiment of this application. As shown in FIG. 8, it is assumed that one REG bundle (REG bundle) includes six REGs, and the first RB set is a frequency domain resource of the REG bundle. That is, the first RB set is two RBs on which the REG bundle is located. The first REG set may include at least one REG in the REG bundle, and the first REG belongs to the first REG set. It is assumed that the first REG set includes two REGs in the REG bundle on the 1^{st} symbol, and the first REG is a REG (namely, a REG in the upper left corner of the REG bundle) with a high frequency on the 1^{st} symbol. An RE in a REG (namely, a REG in the lower left corner of the REG bundle) with a low frequency on the 1^{st} symbol overlaps with the first time-frequency resource (that is, the RE belongs to the first time-frequency resource), and the RE is the 10^{th} RE in the REG. Therefore, in the first REG, an RE in a same position as the second RE (namely, an RE carrying a CRS) in the PDCCH DM-RS pattern preset in the protocol is the first RE (namely, the 10^{th} RE in the first REG). In this case, the second time-frequency resource does not include the first RE, and includes an RE (namely, an RE carrying a PDCCH DM-RS) other than the first RE in the REs in the first REG that are preset in the protocol for PDCCH DM-RS transmission. FIG. 8 shows the first RE, REs preset in the protocol for PDCCH DM-RS transmission, second REs, and REs carrying the PDCCH DM-RS.

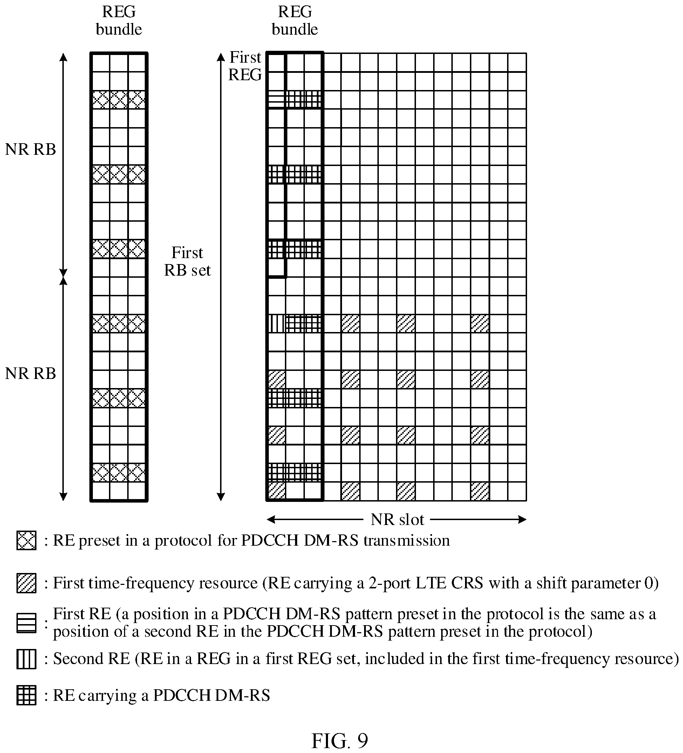

For example, if the higher-layer parameter precoderGranularity of the CORESET associated with the first REG is set to sameAsREG-bundle, the first RB set is a frequency domain resource of a REG bundle (bundle) of the CORESET. FIG. 9 is another diagram of the second time-frequency resource according to an embodiment of this application. As shown in FIG. 9, it is assumed that one REG bundle (REG bundle) includes six REGs, and the first RB set is a frequency domain resource of the REG bundle. That is, the first RB set is two RBs on which the REG bundle is located. The first REG set may include at least one REG in the REG bundle, and the first REG belongs to the first REG set. It is assumed that the first REG set includes two REGs in the REG bundle on the 1^{st} symbol, and the first REG is a REG (namely, a REG in the upper left corner of the REG bundle) with a high frequency on the 1^{st} symbol. The first REG does not overlap with the first time-frequency resource at all, while an RE (the second RE) in a REG (namely, a REG in the lower left corner of the REG bundle) with a low frequency on the 1^{st} symbol overlaps with the first time-frequency resource (that is, the RE belongs to the first time-frequency resource). The second RE is the 10^{th} RE in the REG. Therefore, in the first REG, an RE in a same position as the second RE in the PDCCH DM-RS pattern preset in the protocol is the first RE (namely, the 10^{th} RE in the first REG). In this case, the second time-frequency resource does not include the first RE, and includes REs, namely, the 2^{nd} and 6^{th} REs, other than the first RE in the REs in the first REG that are preset in the protocol for PDCCH DM-RS transmission. FIG. 9 shows REs preset in the protocol for PDCCH DM-RS transmission, the first time-frequency resource, the first RE, the second RE, and REs carrying the PDCCH DM-RS.

According to the foregoing solution, even if the first time-frequency resource (for example, an RE carrying a CRS) overlaps with an RE carrying a PDCCH DM-RS, when the determined second time-frequency resource is in the first case, the PDCCH DM-RS is transmitted on the second time-frequency resource, so that PDCCH DM-RSs can be transmitted as many as possible. This improves channel estimation performance and transmission efficiency.

In a second possible case, when a fifth RE exists in the REs in the first REG that are preset in the protocol for PDCCH DM-RS transmission, the second time-frequency resource does not include any RE in the first REG, where a position of the fifth RE in a PDCCH DM-RS pattern preset in the protocol is the same as a position of a sixth RE in the PDCCH DM-RS pattern preset in the protocol, the sixth RE is an RE in a REG in the first REG set, and the sixth RE is included in the first time-frequency resource.

The fifth RE may be included in the first time-frequency resource. Alternatively, the fifth RE may not be included in the first time-frequency resource, but the sixth RE is included in the first time-frequency resource. The sixth RE is an RE in a REG other than the first REG in the first REG set. The position of the sixth RE in the PDCCH DM-RS pattern preset in the protocol is the same as the position of the fifth RE in the PDCCH DM-RS pattern preset in the protocol, or a position of the fifth RE in the first REG is the same as a position of the sixth RE in the REG including the sixth RE. For example, both the fifth RE and the sixth RE are the 2^{nd} RE in the respective REGs. Further, the first REG may not include the fifth RE, or may include one or more fifth REs.

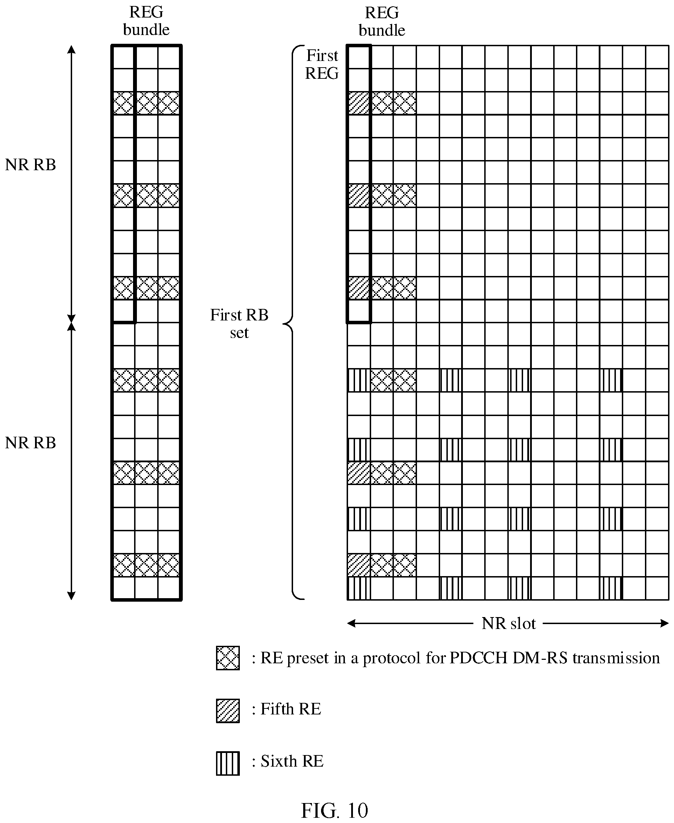

For example, if a higher-layer parameter precoderGranularity of a CORESET associated with the first REG is set to allContiguousRBs, the first RB set is a group of RBs that are contiguous in frequency domain in a frequency domain resource of the CORESET. FIG. 10 is another diagram of the second time-frequency resource according to an embodiment of this application. As shown in FIG. 10, it is assumed that one REG bundle (REG bundle) includes six REGs, and the first RB set is a frequency domain resource of the REG bundle. That is, the first RB set is two RBs on which the REG bundle is located. The first REG set may include at least one REG in the REG bundle, and the first REG belongs to the first REG set. It is assumed that the first REG set includes two REGs in the REG bundle on the 1^{st} symbol, and the first REG is a REG (namely, a REG in the upper left corner of the REG bundle) with a high frequency on the 1^{st} symbol. An RE in a REG (namely, a REG in the lower left corner of the REG bundle) with a low frequency on the 1^{st} symbol overlaps with the first time-frequency resource (that is, the RE belongs to the first time-frequency resource), and the RE is the 10^{th} RE in the REG. Therefore, in the first REG, an RE in a same position as the sixth RE (namely, an RE carrying a CRS) in the PDCCH DM-RS pattern preset in the protocol is the fifth RE (namely, the 10^{th} RE in the first REG). In this case, the second time-frequency resource does not include any RE in the first REG. FIG. 10 shows REs preset in the protocol for PDCCH DM-RS transmission, fifth REs, and sixth REs.

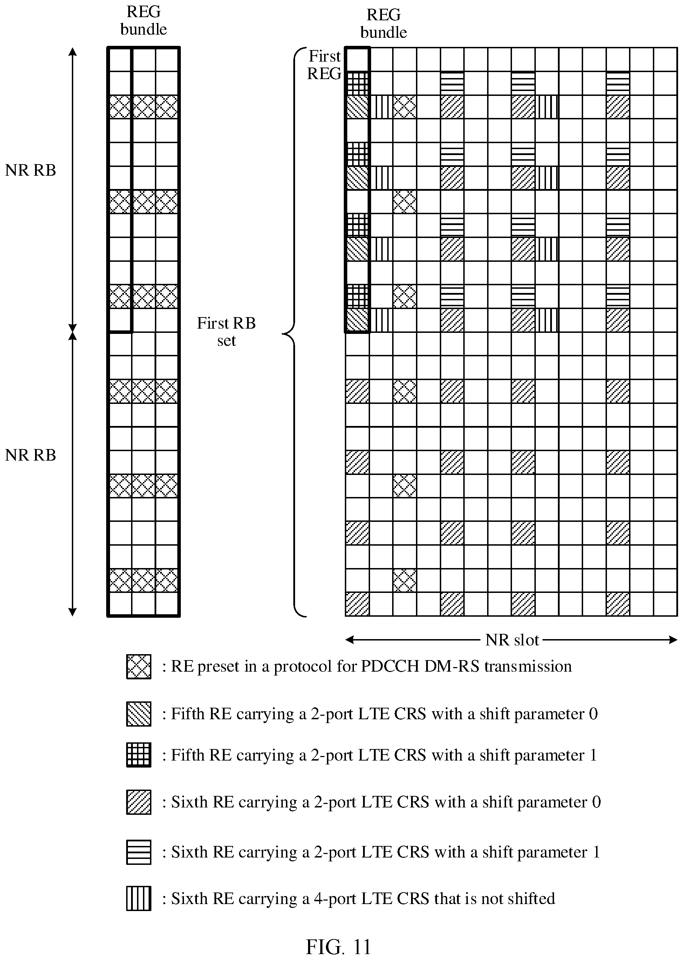

For example, if the higher-layer parameter precoderGranularity of the CORESET associated with the first REG is set to sameAsREG-bundle, the first RB set is a frequency domain resource of a REG bundle (bundle) of the CORESET. FIG. 11 is another diagram of the second time-frequency resource according to an embodiment of this application. As shown in FIG. 11, it is assumed that one REG bundle (REG bundle) includes six REGs, and the first RB set is a frequency domain resource of the REG bundle. That is, the first RB set is two RBs on which the REG bundle is located. The first REG set may include at least one REG in the REG bundle, and the first REG belongs to the first REG set. It is assumed that the first REG set includes two REGs in the REG bundle on the 1^{st} symbol, and the first REG is a REG (namely, a REG in the upper left corner of the REG bundle) with a high frequency on the 1^{st} symbol. An RE in a REG (namely, a REG in the lower left corner of the REG bundle) with a low frequency on the 1^{st} symbol overlaps with the first time-frequency resource (that is, the RE belongs to the first time-frequency resource), and the RE is the 10^{th} RE in the REG. Therefore, in the first REG, an RE in a same position as the sixth RE (namely, an RE carrying a CRS) in the PDCCH DM-RS pattern preset in the protocol is the fifth RE (namely, the 10^{th} RE in the first REG). In this case, the second time-frequency resource does not include any RE in the first REG. FIG. 11 shows REs preset in the protocol for PDCCH DM-RS transmission, fifth REs carrying a 2-port CRS with a shift parameter (v-Shift) 0, fifth REs carrying a 2-port CRS with a shift parameter (v-Shift) 1, sixth REs carrying a 2-port CRS with a shift parameter (v-Shift) 0, sixth REs carrying a 2-port CRS with a shift parameter (v-Shift) 1, and sixth REs carrying a 4-port CRS that is not shifted.

According to the foregoing solution, even if the first time-frequency resource (for example, an RE carrying a CRS) overlaps with an RE carrying a PDCCH DM-RS, when the determined second time-frequency resource is in the second case, not only the PDCCH DM-RS can be transmitted, but also processes of determining the second time-frequency resource by the network device and the terminal device can be simplified, so that implementation of this step is simpler, and channel estimation of the terminal device can also be simplified.

In a third possible case, when the second time-frequency resource may be used for transmitting the PDCCH DM-RS, when at least M ninth REs exist in the REs in the first REG that are preset in the protocol for PDCCH DM-RS transmission, the second time-frequency resource does not include any RE in the first REG; or when a maximum of M-1 ninth REs exist in the REs in the first REG that are preset in the protocol for PDCCH DM-RS transmission, the second time-frequency resource includes (a part or all of) REs other than the ninth RE in the REs in the first REG that are preset in the protocol for PDCCH DM-RS transmission.

A position of the ninth RE in a PDCCH DM-RS pattern preset in the protocol is the same as a position of a tenth RE in the PDCCH DM-RS pattern preset in the protocol, the tenth RE is an RE in a REG in the first REG set, the tenth RE is included in the first time-frequency resource, and M is an integer greater than or equal to 1. M may be preset in the protocol, or set by a base station, or set by the terminal.

The ninth RE may be included in the first time-frequency resource. Alternatively, the ninth RE may not be included in the first time-frequency resource, but the tenth RE is included in the first time-frequency resource. The tenth RE is an RE in a REG other than the first REG in the first REG set. The position of the tenth RE in the PDCCH DM-RS pattern preset in the protocol is the same as the position of the ninth RE in the PDCCH DM-RS pattern preset in the protocol, or a position of the ninth RE in the first REG is the same as a position of the tenth RE in the REG including the tenth RE. For example, both the ninth RE and the tenth RE are the 2^{nd} RE in the respective REGs. Further, the first REG may not include the ninth RE, or may include one or more ninth REs.

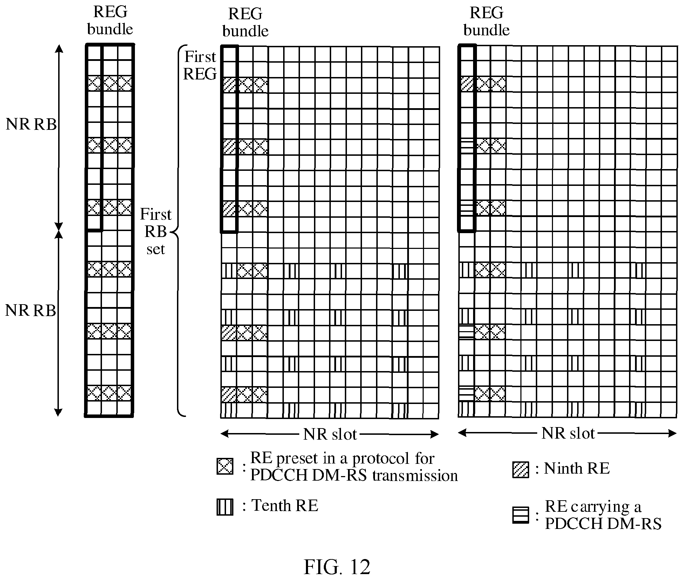

For example, if a higher-layer parameter precoderGranularity of a CORESET associated with the first REG is set to allContiguousRBs, the first RB set is a group of RBs that are contiguous in frequency domain in a frequency domain resource of the CORESET. FIG. 12 is another diagram of the second time-frequency resource according to an embodiment of this application. As shown in FIG. 12, on one hand, when M is equal to 3, and a quantity of ninth REs is greater than or equal to 3 (for example, the quantity of ninth REs is 4), a diagram of the second time-frequency resource may be shown in (a) in FIG. 12. It is assumed that one REG bundle (REG bundle) includes six REGs, and the first RB set is a frequency domain resource of the REG bundle. That is, the first RB set is two RBs on which the REG bundle is located. The first REG set may include at least one REG in the REG bundle, and the first REG belongs to the first REG set. It is assumed that the first REG set includes two REGs in the REG bundle on the 1^{st} symbol, and the first REG is a REG (namely, a REG in the upper left corner of the REG bundle) with a high frequency on the 1^{st} symbol. An RE in a REG (namely, a REG in the lower left corner of the REG bundle) with a low frequency on the 1^{st} symbol overlaps with the first time-frequency resource (that is, the RE belongs to the first time-frequency resource), and the RE is the 10^{th} RE in the REG. Therefore, in the first REG, an RE in a same position as the tenth RE (namely, an RE carrying a CRS) in the PDCCH DM-RS pattern preset in the protocol is the ninth RE (namely, the 10^{th} RE in the first REG). In this case, the second time-frequency resource does not include any RE in the first REG. On the other hand, when M is equal to 3, and a quantity of ninth REs is less than or equal to 2 (for example, the quantity of ninth REs is 1), a diagram of the second time-frequency resource may be shown in (b) in FIG. 12. It is assumed that one REG bundle (REG bundle) includes six REGs, and the first RB set is a frequency domain resource of the REG bundle. That is, the first RB set is two RBs on which the REG bundle is located. The first REG set may include at least one REG in the REG bundle, and the first REG belongs to the first REG set. It is assumed that the first REG set includes two REGs in the REG bundle on the 1^{st} symbol, and the first REG is a REG (namely, a REG in the upper left corner of the REG bundle) with a high frequency on the 1^{st} symbol. An RE in a REG (namely, a REG in the lower left corner of the REG bundle) with a low frequency on the 1^{st} symbol overlaps with the first time-frequency resource (that is, the RE belongs to the first time-frequency resource), and the RE is the 10^{th} RE in the REG. Therefore, in the first REG, an RE in a same position as the tenth RE (namely, an RE carrying a CRS) in the PDCCH DM-RS pattern preset in the protocol is the ninth RE (namely, the 10^{th} RE in the first REG). In this case, the second time-frequency resource does not include the ninth RE, and includes an RE (namely, an RE carrying a PDCCH DM-RS) other than the first RE in the REs in the first REG that are preset in the protocol for PDCCH DM-RS transmission. FIG. 12 shows REs preset in the protocol for PDCCH DM-RS transmission, ninth REs, tenth REs, and REs carrying the PDCCH DM-RS.

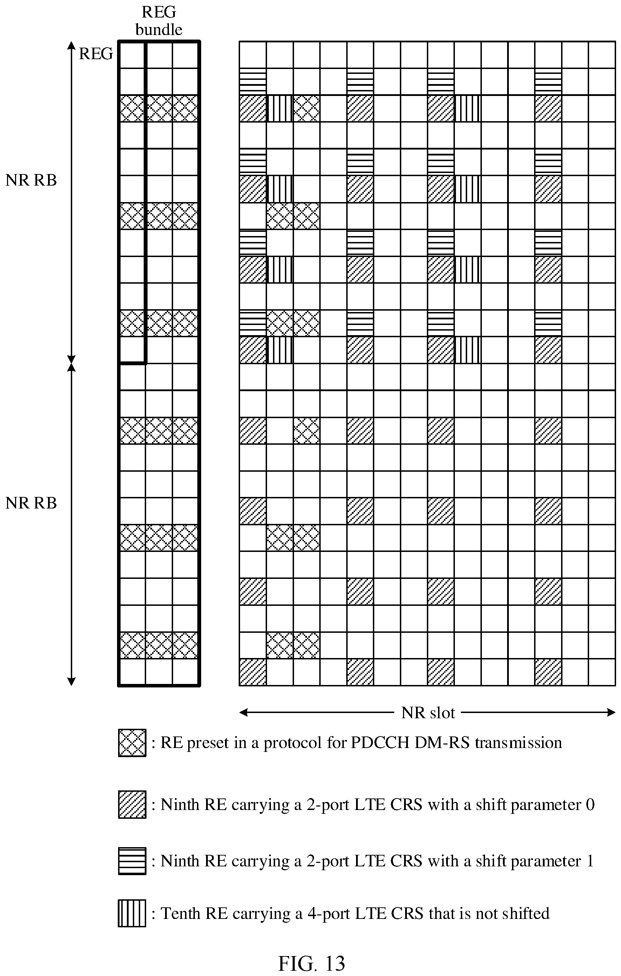

For example, if the higher-layer parameter precoderGranularity of the CORESET associated with the first REG is set to sameAsREG-bundle, the first RB set is a frequency domain resource of a REG bundle (bundle) of the CORESET. FIG. 13 is another diagram of the second time-frequency resource according to an embodiment of this application. As shown in FIG. 13, on one hand, it is assumed that one REG bundle (REG bundle) includes six REGs, and the first RB set is a frequency domain resource of the REG bundle. That is, the first RB set is two RBs on which the REG bundle is located. The first REG set may include at least one REG in the REG bundle, and the first REG belongs to the first REG set. It is assumed that the first REG set includes two REGs in the REG bundle on the 1^{st} symbol, and the first REG is a REG (namely, a REG in the upper left corner of the REG bundle) with a high frequency on the 1^{st} symbol. Two REs in the REs in the first REG that are preset in the protocol for PDCCH DM-RS transmission overlap with the first time-frequency resource, and a REG (namely, a REG in the lower left corner of the REG bundle) with a low frequency on the 1^{st} symbol does not overlap with the first time-frequency resource at all. Therefore, there are two ninth REs in the first REG. Assuming that M is 2, a quantity of ninth REs is greater than M. In this case, the second time-frequency resource in the first REG does not include any RE in the first REG. On the other hand, it is assumed that the first REG set includes two REGs in the REG bundle on the 2^{nd} symbol, and the first REG is a REG (namely, an upper middle REG in the REG bundle) with a high frequency on the 2^{nd} symbol. One RE in the REs in the first REG that are preset in the protocol for PDCCH DM-RS transmission overlaps with the first time-frequency resource, and a REG (namely, a lower middle REG in the REG bundle) with a low frequency on the 2^{nd} symbol does not overlap with the first time-frequency resource at all. The first REG includes one ninth RE, and a quantity of the ninth REs is equal to M-1. In this case, the second time-frequency resource does not include the ninth RE, and includes REs, namely, the 2^{nd} RE and the 6^{th} RE, other than the ninth RE in the REs in the first REG that are preset in the protocol for PDCCH DM-RS transmission. FIG. 13 shows REs preset in the protocol for PDCCH DM-RS transmission, ninth REs carrying a 2-port CRS with a shift parameter (v-Shift) 0, ninth REs carrying a 2-port CRS with a shift parameter (v-Shift) 1, and tenth REs carrying a 4-port CRS that is not shifted.

According to the foregoing solution, even if the first time-frequency resource (for example, an RE carrying a CRS) overlaps with an RE carrying a PDCCH DM-RS, when the determined second time-frequency resource is in the third case, compared with the second case, in the third case, a quantity of REs for transmitting the PDCCH DM-RS can be increased, and channel estimation quality can be improved. Compared with the first case, in this case, complexity of sending the PDCCH DM-RS by the network device can be reduced, complexity of receiving the PDCCH DM-RS by the terminal device can be reduced, and complexity of channel estimation by the terminal device can be reduced.

In another aspect, the network device may determine the third time-frequency resource in the first REG based on the first time-frequency resource in any one of the following cases.

In a first possible case, the third time-frequency resource includes an RE other than a third RE in the REs in the first REG that are preset in the protocol for PDCCH transmission. A position of the third RE in a PDCCH pattern preset in the protocol is the same as a position of a fourth RE in the PDCCH pattern preset in the protocol, the fourth RE is an RE in a REG in the first REG set, and the fourth RE is included in the first time-frequency resource.

Specifically, for descriptions that the third time-frequency resource includes an RE other than the third RE in the REs in the first REG that are preset in the protocol for PDCCH transmission, refer to the related descriptions that the second time-frequency resource includes an RE other than the first RE in the REs in the first REG that are preset in the protocol for PDCCH DM-RS transmission. For brevity, details are not described herein in this application.

According to the foregoing solution, even if the first time-frequency resource (for example, an RE carrying a CRS) overlaps with an RE carrying a PDCCH, when the determined third time-frequency resource is in the first case, the PDCCH is transmitted on the third time-frequency resource, so that PDCCHs can be transmitted as many as possible. This improves PDCCH transmission efficiency.

In a second possible case, when a seventh RE exists in the REs in the first REG that are preset in the protocol for PDCCH transmission, the third time-frequency resource may not include any RE in the first REG, where a position of the seventh RE in a PDCCH pattern preset in the protocol is the same as a position of an eighth RE in the PDCCH pattern preset in the protocol, the eighth RE is an RE in a REG in the first REG set, and the eighth RE is included in the first time-frequency resource.

Specifically, for descriptions that when the seventh RE exists in the REs in the first REG that are preset in the protocol for PDCCH transmission, the third time-frequency resource may not include any RE in the first REG, refer to the related descriptions that when the fifth RE exists in the REs in the first REG that are preset in the protocol for PDCCH DM-RS transmission, the second time-frequency resource does not include any RE in the first REG. For brevity, details are not described herein in this application.

According to the foregoing solution, even if the first time-frequency resource (for example, an RE carrying a CRS) overlaps with an RE carrying a PDCCH, when the determined third time-frequency resource is in the second case, not only the PDCCH can be transmitted, but also processes of determining the third time-frequency resource by the network device and the terminal device can be simplified, so that implementation of this step is simpler.

In a third possible case, when the third time-frequency resource may be used for transmitting the PDCCH, on one hand, when at least N eleventh REs exist in the REs in the first REG that are preset in the protocol for PDCCH transmission, the third time-frequency resource does not include any RE in the first REG. On the other hand, when a maximum of N-1 eleventh REs exist in the REs in the first REG that are preset in the protocol for PDCCH transmission, the third time-frequency resource includes an RE other than the eleventh RE in the REs in the first REG that are preset in the protocol for PDCCH transmission.

A position of the eleventh RE in a PDCCH pattern preset in the protocol is the same as a position of a twelfth RE in the PDCCH pattern preset in the protocol, the twelfth RE is an RE in a REG in the first REG set, the twelfth RE is included in the first time-frequency resource, and N is an integer greater than or equal to 1. N may be preset in the protocol, or set by a base station, or set by the terminal.

In addition, N may be the same as or different from M, or there is a mapping relationship between N and M. For example, M is three times N.

Specifically, for specific descriptions of the third possible case in which the network device determines the third time-frequency resource in the first REG based on the first time-frequency resource, refer to the related descriptions of the third possible case in which the network device determines the second time-frequency resource in the first REG based on the first time-frequency resource. For brevity, details are not described herein in this application.

According to the foregoing solution, even if the first time-frequency resource (for example, an RE carrying a CRS) overlaps with an RE carrying a PDCCH, when the determined third time-frequency resource is in the third case, compared with the second case, in the third case, a quantity of REs for transmitting the PDCCH can be increased, and performance of the PDCCH can be improved. Compared with the first case, in this case, complexity of sending the PDCCH by the network device can be reduced, and complexity of receiving the PDCCH by the terminal device can be reduced.

Optionally, in the foregoing solution, the first time-frequency resource may include at least one type of the following REs:

REs on which the network device indicates not to allow PDCCH DM-RS transmission, REs on which the network device indicates not to allow PDCCH transmission, REs to which a cell-specific reference signal CRS is mapped, REs to which a channel state indication reference signal CSI-RS is mapped, REs to which a tracking reference signal TRS is mapped, or REs included in a rate matching resource.

It should be understood that the first time-frequency resource may include one or more types of the foregoing REs, or the first time-frequency resource may include one or more sets of at least one type of the foregoing REs. For example, the first time-frequency resource includes one set of REs to which the cell-specific reference signal is mapped, or the first time-frequency resource includes a plurality of sets of REs to which the cell-specific reference signal is mapped; or the first time-frequency resource includes one set of REs to which the cell-specific reference signal is mapped and one set of REs to which the channel state indication reference signal is mapped, or the first time-frequency resource includes a plurality of sets of REs to which the cell-specific reference signal is mapped and a plurality of sets of REs to which the channel state indication reference signal is mapped.

It should be further understood that, due to partially overlapping frequency bands in an NR system and an LTE system, an RE to which a cell-specific reference signal is mapped is an RE to which a cell-specific reference signal of the LTE system is mapped and that is indicated by an NR network device to a terminal device working in the NR system.

The rate matching resource may include the REs on which the network device indicates not to allow physical downlink shared channel (Physical downlink shared channel, PDSCH) transmission, and/or the REs on which the network device indicates not to allow PDSCH and PDSCH DM-RS transmission.

Further, a pattern of at least one RE included in the REs in the first REG that are preset in the protocol for PDCCH DM-RS transmission is different from a pattern of any RE in the second time-frequency resource, and/or a pattern of at least one RE included in the REs in the first REG that are preset in the protocol for PDCCH transmission is different from a pattern of any RE in the third time-frequency resource.

All the REGs in the first REG set are included in the PDCCH candidate set, and/or all the REGs in the first REG set are included in a same control resource set CORESET, and/or all the REGs in the first REG set are included in a same search space set. "Included in a same search space set" means "included in a time-frequency resource range of the same search space set", and further, "included in a same search space set" may mean "included in the same search space set with corresponding search space set duration (CORESET duration) starting from start time".

Optionally, different higher-layer parameter (precoder granularity (precoderGranularity) parameter) configurations of CORESETs including the first REG in different configurations correspond to different first time-frequency resources, and the network device may determine the first time-frequency resource based on the higher-layer parameter "precoderGranularity". Alternatively, it is preset in the protocol that different CORESET precoder granularities correspond to different first RB sets. For example, when "precoderGranularity" = "sameAsREG-bundle", the first time-frequency resource is RBs of the REG bundle including the first REG. When "precoderGranularity" = "allContiguousRBs", the first time-frequency resource is a group of contiguous RBs in the CORESET including the first REG.

It should be understood that when the second time-frequency resource does not include any RE in the first REG, the terminal device does not monitor the PDCCH DM-RS in the first REG; and/or when the third time-frequency resource does not include any RE in the first REG, the terminal device does not monitor the PDCCH in the third RE set. In other words, the terminal device does not monitor the PDCCH DM-RS on an RE other than the second time-frequency resource in the first REG, and/or the terminal device does not monitor the PDCCH DM-RS on an RE other than the third time-frequency resource in the first REG.

In the first REG, a quantity of REs that are used by the network device to send the PDCCH DM-RS is greater than or equal to that of the second time-frequency resource; and/or in the first REG, a quantity of REs that are used by the network device to send the PDCCH is greater than or equal to that of the third time-frequency resource. In other words, the terminal device may monitor a part or all of the PDCCH DM-RS and/or PDCCH sent by the network device.

Optionally, in order that the terminal device monitors the PDCCH DM-RS on the second time-frequency resource and/or monitors the PDCCH on the third time-frequency resource, the method 700 further includes: The terminal device determines a time domain mapping sequence of the PDCCH on the first PDCCH candidate depending on whether a second REG set on each time domain symbol in a time domain symbol set of the first PDCCH candidate including the first REG overlaps with the first time-frequency resource.

The time domain symbol set of the first PDCCH candidate including the first REG is all time domain symbols on which the first PDCCH candidate is located, and RBs on which all REGs in the second REG set are located meet any one of the following conditions:
belonging to the first time-frequency resource, belonging to an RB set of the first PDCCH candidate including the first REG, belonging to an RB set of a search space set including the first PDCCH candidate, belonging to an RB set of a CORESET that includes the first PDCCH candidate including the first REG, including P adjacent RBs configured by the network device, or including P adjacent RBs preset in the protocol, where P is an integer greater than or equal to 2.

All REGs in the second REG set on a time domain symbol are located on RBs that meet one of the foregoing conditions, and on this time domain symbol, all REGs located on an RB that meets the condition belong to the second REG set.

Specifically, for descriptions of the time domain mapping sequence, that is determined by the network device, of the PDCCH on the first PDCCH candidate including the first REG, refer to the related descriptions of a time domain mapping sequence of a PDCCH on a PDCCH candidate in the following method 1400 or method 1500. For brevity, details are not described herein in this application.

Optionally, in order that the network device sends the PDCCH DM-RS to the terminal device on the second time-frequency resource and/or sends the PDCCH to the terminal device on the third time-frequency resource, the method 700 further includes: The network device determines a time domain mapping sequence of the PDCCH on the first PDCCH candidate depending on whether a third REG set on each time domain symbol in a time domain symbol set of the first PDCCH candidate including the first REG overlaps with the first time-frequency resource.

RBs on which all REGs in the third REG set are located meet any one of the following conditions:
belonging to the first RB set, belonging to an RB set of the first PDCCH candidate including the first REG, belonging to an RB set of a search space set that includes the first PDCCH candidate including the first REG, belonging to an RB set of a CORESET that includes the first PDCCH candidate including the first REG, including T adjacent RBs configured by the network device, or including T adjacent RBs preset in the protocol, where T is an integer greater than or equal to 2.

All REGs in the third REG set on a time domain symbol are located on RBs that meet one of the foregoing conditions, and on this time domain symbol, all REGs located on an RB that meets the condition belong to the third REG set.

Specifically, for descriptions of the time domain mapping sequence, that is determined by the network device, of the PDCCH on the first PDCCH candidate including the first REG, refer to the related descriptions of a time domain mapping sequence of a PDCCH on a PDCCH candidate in the following method 1400 or method 1500. For brevity, details are not described herein in this application.

Optionally, before the network device determines the second time-frequency resource and/or the third time-frequency resource in the first REG based on the first time-frequency resource, the method 700 may further include: The network device sends PDCCH configuration information and first time-frequency resource configuration information to the terminal device. Correspondingly, the terminal device receives the PDCCH configuration information and the first time-frequency resource configuration information from the network device.

The PDCCH configuration information may include CORESET configuration information and search space set configuration information. The first time-frequency resource may include CRS configuration information, rate matching configuration information, CSI-RS configuration information, and/or TRS configuration information.

To determine the time domain mapping sequence of the PDCCH on the first PDCCH candidate, an embodiment of this application provides a method 1400 for mapping a PDCCH on a PDCCH candidate to physical resources in time domain. The method 1400 may include the following steps.

A first device determines, depending on whether a REG set on each time domain symbol in the time domain symbol set of the first PDCCH candidate overlaps with the first time-frequency resource, the time domain mapping sequence of the PDCCH on the first PDCCH candidate including the first REG.

The first device may be the terminal device, or may be the network device. When the first device is the terminal device, the REG set on each time domain symbol in the time domain symbol set of the first PDCCH candidate is the second REG set. When the first device is the network device, the REG set on each time domain symbol in the time domain symbol set of the first PDCCH candidate is the third REG set.

Specifically, the time domain mapping sequence of the PDCCH on the first PDCCH candidate is mapping to a second symbol included in the time domain symbol set of the first PDCCH candidate, and then mapping to a first symbol included in the time domain symbol set of the first PDCCH candidate, where at least one RE in the second REG set on the first symbol is included in the first time-frequency resource, and no RE in the second REG set on the second symbol is included in the first time-frequency resource.

It should be understood that, that an RE is included in the first time-frequency resource may be understood as: The RE overlaps with the first time-frequency resource. That an RE is not included in the first time-frequency resource may be understood as: The RE does not overlap with the first time-frequency resource at all.

Further, when there are a plurality of first symbols, mapping to a first symbol with a smaller symbol sequence number is first performed, followed by mapping to a first symbol with a larger symbol sequence number; and/or when there are a plurality of second symbols, mapping to a second symbol with a smaller symbol sequence number is first performed, followed by mapping to a second symbol with a larger symbol sequence number. Because a PDCCH DM-RS density on the second symbol is higher than that on the first symbol, channel estimation quality on the second symbol is better than that on the first symbol, and PDCCH demodulation performance on the second symbol is better than that on the first symbol. In PDCCH coded bits, a system bit usually precedes a check bit, and impact of the system bit on decoding performance is greater than impact of the check bit on decoding performance.

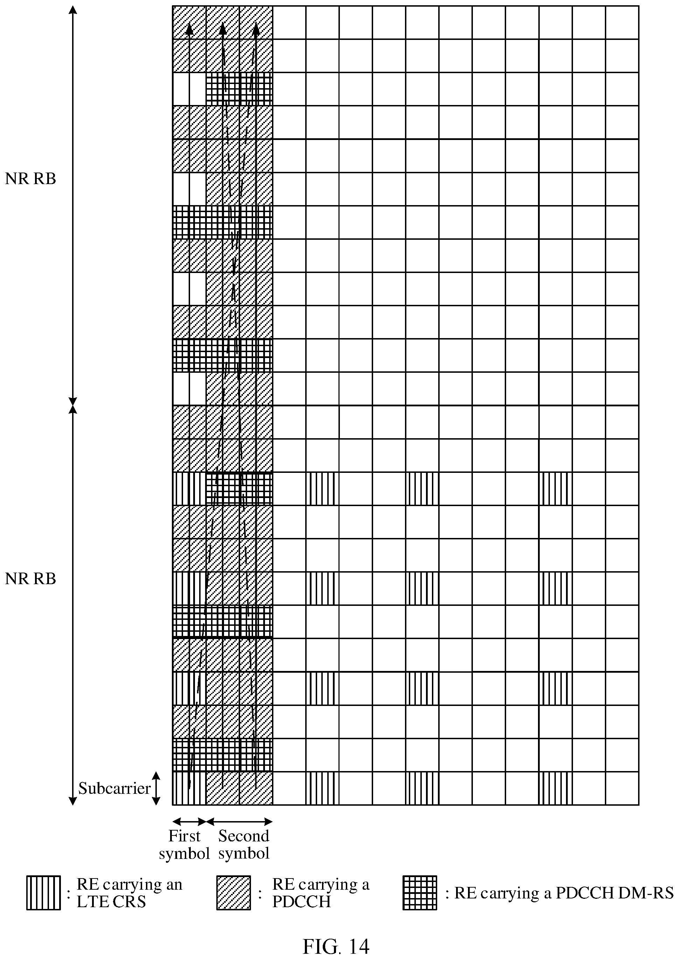

For example, FIG. 14 is a diagram of mapping the PDCCH on the first PDCCH candidate to physical resources. As shown in FIG. 14, because at least one RE in the second REG set on the first symbol in time domain is included in the first time-frequency resource (for example, an RE carrying a CRS), the time domain mapping sequence of the PDCCH on the first PDCCH candidate including the first REG is mapping to the second symbol on which no RE is included in the first time-frequency resource, and then mapping to the first symbol. Further, when there are a plurality of second symbols, mapping is performed in ascending order of symbol sequence numbers of the second symbols, and/or when there are a plurality of first symbols, mapping is performed in ascending order of symbol sequence numbers of the first symbols. In FIG. 14, the PDCCH on the first PDCCH candidate including the first REG may be mapped in an arrow direction.

According to the foregoing solution, mapping to the second symbol is first performed, then mapping to the first symbol is performed, and the system bit in the coded bits is mapped to the second symbol. Therefore, demodulation performance is good, and this benefits final PDCCH decoding performance.

Alternatively, further, when there are a plurality of first symbols, there is one second symbol, and a sequence number of the second symbol is greater than sequence numbers of the plurality of first symbols, mapping to a first symbol with a larger symbol sequence number is first performed, followed by mapping to a first symbol with a smaller symbol sequence number. Channel estimation quality of a first symbol closer to the second symbol is better than that of a first symbol farther from the second symbol. Therefore, PDCCH demodulation performance of the first symbol closer to the second symbol is better than that of the first symbol farther from the second symbol. According to this solution, mapping to the second symbol is first performed, followed by mapping to the first symbol closer to the second symbol, and finally mapping to the first symbol farther from the second symbol. The system bit in the coded bits is first mapped to the second symbol, and then mapped to the first symbol closer to the second symbol. Therefore, demodulation performance is good, and this benefits final PDCCH decoding performance.

In another implementation, in order that the terminal device monitors the PDCCH DM-RS on the second time-frequency resource and/or monitors the PDCCH on the third time-frequency resource, the method 700 may further include: The terminal device determines the time domain mapping sequence of the PDCCH on the first PDCCH candidate depending on whether the time domain symbol set of the first PDCCH candidate including the first REG overlaps with a time domain symbol set of the first time-frequency resource.

To determine the time domain mapping sequence of the PDCCH on the first PDCCH candidate, an embodiment of this application provides a method 1500 for mapping a PDCCH on a PDCCH candidate to physical resources in time domain. The method 1500 may include the following steps.

The terminal device determines the time domain mapping sequence of the PDCCH on the first PDCCH candidate depending on whether the time domain symbol set of the first PDCCH candidate including the first REG overlaps with the time domain symbol set of the first time-frequency resource.

The time domain symbol set of the first PDCCH candidate is a set including one or more consecutive time domain symbols on which the first PDCCH candidate is located, and the time domain symbol set of the first time-frequency resource is a set including time domain symbols on which the first time-frequency resource is located.

Specifically, the time domain mapping sequence of the PDCCH on the first PDCCH candidate is mapping to a third symbol included in the time domain symbol set of the first PDCCH candidate, and then mapping to a fourth symbol included in the time domain symbol set of the first PDCCH candidate. The first time-frequency resource exists on the fourth symbol, and the first time-frequency resource does not exist on the third symbol.

Further, when there are a plurality of third symbols, mapping to a third symbol with a smaller symbol sequence number is first performed, followed by mapping to a third symbol with a larger symbol sequence number; and/or when there are a plurality of fourth symbols, mapping to a fourth symbol with a smaller symbol sequence number is first performed, followed by mapping to a fourth symbol with a larger symbol sequence number. Because a PDCCH DM-RS density on the third symbol is higher than or equal to that on the fourth symbol, channel estimation quality on the third symbol is better than or equal to that on the fourth symbol, and PDCCH demodulation performance on the third symbol is better than or equal to that on the fourth symbol. In PDCCH coded bits, a system bit usually precedes a check bit, and impact of the system bit on decoding performance is greater than impact of the check bit on decoding performance.

It should be understood that, that the first time-frequency resource exists on the third symbol means that at least one RE on the third symbol belongs to the first time-frequency resource, or at least one RE on the third symbol overlaps with the first time-frequency resource. That the first time-frequency resource does not exist on the fourth symbol means that no RE on the fourth symbol belongs to the first time-frequency resource, or no RE on the fourth symbol overlaps with the first time-frequency resource. The RE on the third symbol herein is an RE on a current NR carrier on the third symbol, the RE on the fourth symbol is an RE on a current NR carrier on the fourth symbol, and the current NR carrier is a downlink NR carrier on which the first PDCCH candidate is located.

In symbols (namely, the time domain symbol set of the first PDCCH candidate) on which the first PDCCH candidate is located, a symbol that overlaps with a symbol on which the first time-frequency resource is located is the fourth symbol, and a symbol that does not overlap with the symbol on which the first time-frequency resource is located is the third symbol. It should be noted that, on the fourth symbol, the first PDCCH candidate, the search space set including the first PDCCH candidate, and the control resource set including the first PDCCH candidate may not overlap with the first time-frequency resource at all.

According to the foregoing solution, in the method 1500, only whether the first time-frequency resource overlaps with the first PDCCH candidate in time domain needs to be determined, and a frequency domain resource relationship between the first time-frequency resource and the first PDCCH candidate does not need to be concerned. Therefore, implementation is simpler. Mapping to the third symbol is first performed, followed by mapping to the fourth symbol, and the system bit in the coded bits is mapped to the third symbol. Therefore, demodulation performance is good, and this benefits final PDCCH decoding performance.

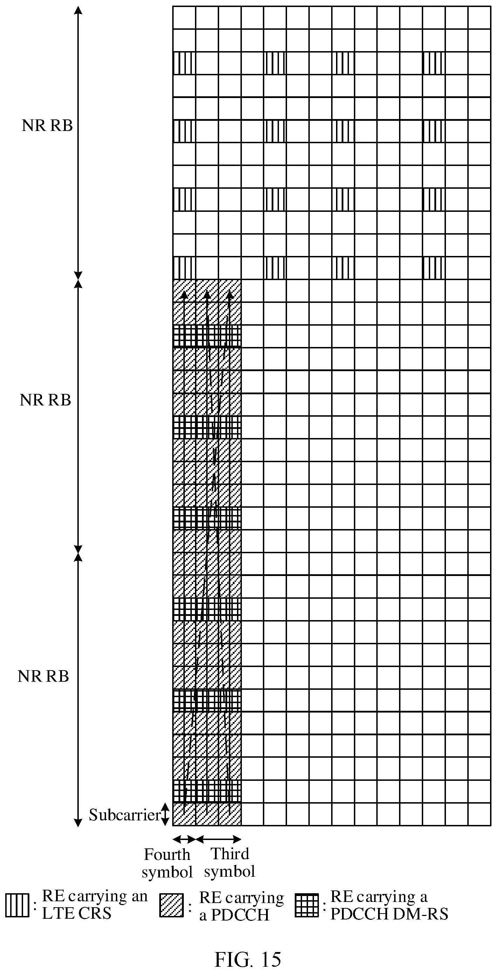

For example, FIG. 15 is another diagram of mapping a PDCCH on a PDCCH candidate to physical resources. As shown in FIG. 15, because the first time-frequency resource (for example, an RE carrying a CRS) exists on the fourth symbol, the time domain mapping sequence of the PDCCH on the first PDCCH candidate including the first REG is mapping to the third symbol not included in the first time-frequency resource, and then mapping to the fourth symbol. Further, when there are a plurality of third symbols, mapping is performed in ascending order of symbol sequence numbers of the third symbols, and/or when there are a plurality of fourth symbols, mapping is performed in ascending order of symbol sequence numbers of the fourth symbols. In FIG. 15, the PDCCH on the first PDCCH candidate including the first REG may be mapped in an arrow direction.

Alternatively, further, when there is one third symbol, there are a plurality of fourth symbols, and a sequence number of the third symbol is greater than sequence numbers of the plurality of fourth symbols, mapping to a fourth symbol with a larger symbol sequence number is first performed, followed by mapping to a fourth symbol with a smaller symbol sequence number. Channel estimation quality of a fourth symbol closer to the third symbol is better than that of a fourth symbol farther from the third symbol. Therefore, PDCCH demodulation performance of the fourth symbol closer to the third symbol is better than that of the fourth symbol farther from the third symbol. According to this solution, mapping to the third symbol is first performed, followed by mapping to the fourth symbol closer to the third symbol, and finally mapping to the fourth symbol farther from the third symbol. The system bit in the coded bits is first mapped to the third symbol, and then mapped to the fourth symbol closer to the third symbol. Therefore, demodulation performance is good, and this benefits final PDCCH decoding performance.

Optionally, before the network device determines the second time-frequency resource and/or the third time-frequency resource in the first REG based on the first time-frequency resource, the method 700 may further include: The network device sends PDCCH configuration information and first time-frequency resource configuration information to the terminal device. Correspondingly, the terminal device receives the PDCCH configuration information and the first time-frequency resource configuration information from the network device.

The PDCCH configuration information may include CORESET configuration information and search space set configuration information. The first time-frequency resource may include CRS configuration information, rate matching configuration information, CSI-RS configuration information, and/or TRS configuration information.

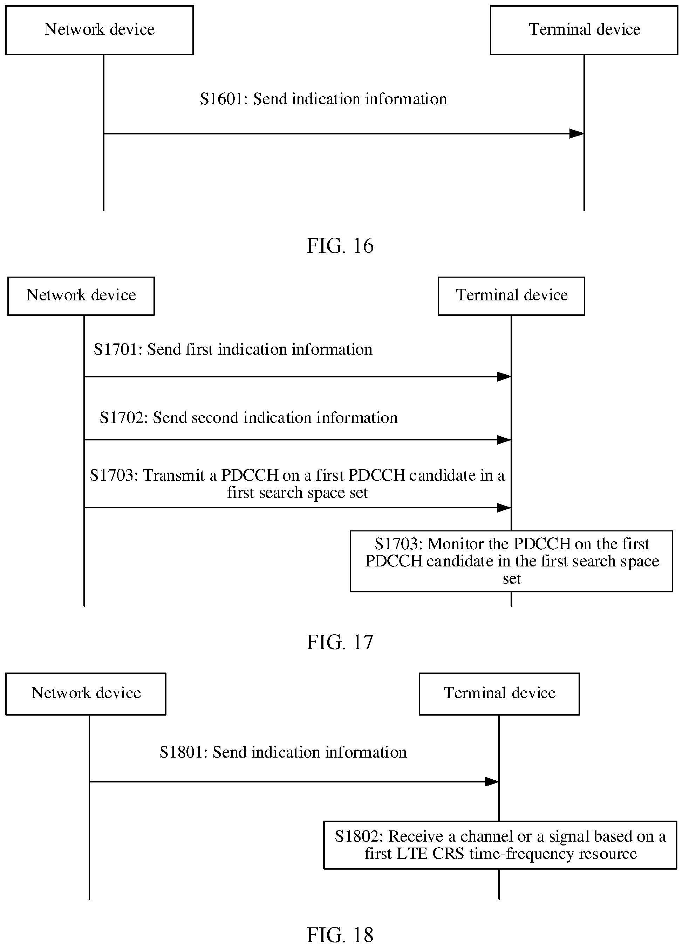

Optionally, in order that the network device notifies the terminal device of the time domain mapping sequence of the PDCCH on the first PDCCH candidate including the first REG, an information notification method 1600 provided in this embodiment of this application may be used, so that the network device notifies the terminal device of the time domain mapping sequence of the PDCCH on the first PDCCH candidate including the first REG. FIG. 16 is a diagram of the information notification method 1600 according to an embodiment of this application. As shown in FIG. 16, the method 1600 may include the following steps.

S1601: The network device sends indication information to the terminal device. Correspondingly, the terminal device receives the indication information from the network device.

The indication information indicates the time domain mapping sequence of the PDCCH on the first PDCCH candidate.

Specifically, the indication information may indicate that the time domain mapping sequence of the PDCCH on the first PDCCH candidate including the first REG is mapping to the first symbol included in the time domain symbol set of the first PDCCH candidate, and then mapping to the second symbol included in the time domain symbol set of the first PDCCH candidate. A sequence number of the second symbol is less than a sequence number of the first symbol. At least one RE in the second REG set on the second symbol is included in the first time-frequency resource, and no RE in the second REG set on the first symbol is included in the first time-frequency resource.

Further, the indication information indicates a time domain mapping sequence of the PDCCH on all PDCCH candidates in a first search space set, and the first PDCCH candidate including the first REG belongs to the first search space set.

Further, the indication information may indicate a time domain mapping sequence of the PDCCH on all PDCCH candidates associated with a first control resource set, and the first PDCCH candidate including the first REG is associated with the first search space set.

FIG. 17 is a diagram of a PDCCH monitoring method 1700 according to an embodiment of this application. As shown in FIG. 17, the method 1700 may include the following steps.

S1701: A network device sends first indication information to a terminal device. Correspondingly, the terminal device receives the first indication information from the network device.

The first indication information indicates a first time-frequency resource.

Optionally, the first time-frequency resource includes at least one type of the following REs:

REs on which the network device indicates not to allow PDCCH DM-RS transmission, REs on which the network device indicates not to allow PDCCH transmission, REs on which the network device indicates not to allow PDCCH DM-RS and PDCCH transmission, REs to which a cell-specific reference signal CRS is mapped, REs to which a channel state indication reference signal CSI-RS is mapped, REs to which a tracking reference signal TRS is mapped, or REs included in a rate matching resource.

Further, when the REs to which the CRS is mapped include REs to which CRSs corresponding to two sets of configurations are mapped, the REs to which the CRSs corresponding to the at least two sets of configurations are mapped correspond to a same quantity of antenna ports, and/or shift parameters of the REs to which the CRSs corresponding to the at least two sets of configurations are mapped are the same; and/or when the REs to which the CRS is mapped include REs to which a CRS corresponding to at least one set of configurations is mapped, REs to which a CRS corresponding to one of the at least one set of configurations is mapped are located on RBs with a quantity greater than 100.

It should be understood that the terminal device works in an NR system, receives a CRS configuration that is of an LTE system and that is indicated by a network device in the NR system, and receives a control channel and a data channel of the NR system based on the CRS configuration. Because a capability of the terminal device is limited, a quantity of sets of CRSs that can be supported by the terminal device is limited, for example, one or three.

A set of CRS configurations includes a downlink carrier bandwidth configuration of a CRS, for example, a parameter carrierBandwidthDL is used for configuration. Generally, a maximum downlink carrier bandwidth configuration for the CRS is 100 RBs, corresponding to an LTE carrier with a maximum bandwidth 20 MHz. A terminal device that supports one set of CRS configurations can support a maximum of one CRS of a 20 MHz LTE carrier.

When a quantity of RBs in the downlink carrier bandwidth configuration of the CRS included in one set of CRS configurations is greater than 100, two or more LTE carriers may be indicated by using one set of CRS configurations. For example, if other parameters of the CRS are the same, two adjacent 20 MHz LTE carriers may be indicated by one set of CRS configurations. A quantity of RBs in the downlink carrier bandwidth configuration of the CRS is set to 200. Therefore, a terminal device that supports one set of CRS configurations may support a CRS of more than one 20 MHz LTE carrier, and a terminal device that supports three sets of CRS configurations may support CRSs of more than three 20 MHz LTE carriers. S1702: The network device sends second indication information to the terminal device. Correspondingly, the terminal device receives the second indication information from the network device.

The second indication information indicates a first search space set. A time-frequency resource of a control resource set corresponding to the first search space set and the first time-frequency resource meet at least one of the following relationships:
(1) At least one RE in an RE set on only the 1^{st} symbol in the time-frequency resource of the CORESET corresponding to the first search space set overlaps with at least one RE in the first time-frequency resource. In other words, the first time-frequency resource and a time-frequency resource on a symbol other than the 1^{st} symbol in the time-frequency resource of the control resource set corresponding to the search space set do not overlap at all, that is, have no overlapping RE.
(2) At least one RE in an RE set on only one symbol in the time-frequency resource of the CORESET corresponding to the first search space set overlaps with at least one RE in the first time-frequency resource.
(3) At least one RE in an RE set on only the 1^{st} symbol and the 2^{nd} symbol in the time-frequency resource of the CORESET corresponding to the first search space set overlaps with at least one RE in the first time-frequency resource.
(4) At least one RE in an RE set on only the 1^{st} symbol and/or the last symbol in the time-frequency resource of the CORESET corresponding to the first search space set overlaps with at least one RE in the first time-frequency resource. In other words, the first time-frequency resource and a time-frequency resource on a symbol other than the 1^{st} symbol and/or the last symbol in the time-frequency resource of the control resource set corresponding to the search space set do not overlap at all, that is, have no overlapping RE.
(5) There are a maximum of Q sets of first time-frequency resource-related configurations, and at least one RE in the first time-frequency resource indicated by any one of the Q sets of first time-frequency resource-related configurations overlaps with at least one RE in the time-frequency resource of the control resource set CORESET corresponding to the first search space set. Q is a positive integer, and Q is a value preset in a protocol, or is a value determined by the network device based on a capability reported by the terminal device.
(6) Any RE in an RE set on at least one symbol in the time-frequency resource of the CORESET corresponding to the first search space set does not overlap with any RE in the first time-frequency resource.
(7) At least one RE in an RE set on a maximum of one symbol in the time-frequency resource of the CORESET corresponding to the first search space set overlaps with at least one RE in the first time-frequency resource.

In the foregoing solution, the time-frequency resource of the control resource set corresponding to the first search space set may be understood as all time-frequency resources in the control resource set corresponding to the first search space set, or include not only all the time-frequency resources in the control resource set corresponding to the first search space set, but also all time-frequency resources in the first search space set. An RE set on a symbol in the time-frequency resource of the CORESET corresponding to the first search space set refers to all REs on the symbol in the time-frequency resource of the CORESET corresponding to the first search space set, namely, all time-frequency resources on the symbol.

It should be understood that, in the foregoing solution, a sequence of sending the first indication information and the second indication information by the network device to the terminal device is not limited. The network device may first send the first indication information and then send the second indication information to the terminal device; or the network device may first send the second indication information and then send the first indication information to the terminal device; or the network device may indicate both the first time-frequency resource and the first search space set to the terminal device by using one piece of indication information. This is not limited herein.

S1703 : The network device transmits a PDCCH on the first PDCCH candidate in the first search space set.

At least one RE in the first PDCCH candidate overlaps with at least one RE in the first time-frequency resource.

S1704: The terminal device monitors a PDCCH on the first PDCCH candidate in the first search space set.

The first PDCCH candidate in the first search space set may be used for transmitting the PDCCH sent by the network device (that is, the first PDCCH candidate in the first search space set has a capability of transmitting the PDCCH sent by the network device, or the first PDCCH candidate in the first search space set is allowed to transmit the PDCCH sent by the network device, but is not necessarily used to transmit the PDCCH sent by the network device).

Further, in one aspect, if at least one RE in the first PDCCH candidate in the first search space set overlaps with at least one RE in the first time-frequency resource, when the time-frequency resource of the control resource set corresponding to the first search space set and the first time-frequency resource meet at least one relationship in S 1702, the terminal device monitors the PDCCH on the first PDCCH candidate in the first search space set. When the time-frequency resource of the control resource set corresponding to the first search space set and the first time-frequency resource do not meet at least one relationship in S1702, the terminal device does not monitor the PDCCH on the first PDCCH candidate in the first search space set.

In another aspect, if at least one RE in the first PDCCH candidate in the first search space set overlaps with at least one RE in the first time-frequency resource, when the terminal device determines that the time-frequency resource of the control resource set corresponding to the first search space set and the first time-frequency resource meet at least one relationship in S 1702, the terminal device monitors the PDCCH on the first PDCCH candidate in the first search space set. When the terminal device determines that the time-frequency resource of the control resource set corresponding to the first search space set and the first time-frequency resource do not meet at least one relationship in S1702, the terminal device does not monitor the PDCCH on the first PDCCH candidate in the first search space set.

For example, in one aspect, if at least one RE in the first PDCCH candidate in the first search space set overlaps with at least one RE in the first time-frequency resource, when at least one RE in an RE set on only the 1^{st} symbol in the time-frequency resource of the CORESET corresponding to the first search space set overlaps with at least one RE in the first time-frequency resource, the terminal device monitors the PDCCH on the first PDCCH candidate in the first search space set. When at least one RE in an RE set on at least one symbol other than the 1^{st} symbol in the time-frequency resource of the CORESET corresponding to the first search space set overlaps with at least one RE in the first time-frequency resource, the terminal device does not monitor the PDCCH on the first PDCCH candidate in the first search space set.

In another aspect, if at least one RE in the first PDCCH candidate in the first search space set overlaps with at least one RE in the first time-frequency resource, if the terminal device determines that at least one RE in an RE set on only the 1^{st} symbol in the time-frequency resource of the CORESET corresponding to the first search space set overlaps with at least one RE in the first time-frequency resource, the terminal device monitors the PDCCH on the first PDCCH candidate in the first search space set. If the terminal device determines that at least one RE in an RE set on at least one symbol other than the 1^{st} symbol in the time-frequency resource of the CORESET corresponding to the first search space set overlaps with at least one RE in the first time-frequency resource, the terminal device does not monitor the PDCCH on the first PDCCH candidate in the first search space set.

For example, if at least one RE in the first PDCCH candidate in the first search space set overlaps with at least one RE in the first time-frequency resource, when any RE in an RE set on at least one symbol in the time-frequency resource of the CORESET corresponding to the first search space set does not overlap with any RE in the first time-frequency resource, the terminal device monitors the PDCCH on the first PDCCH candidate in the first search space set. When no RE in an RE set on any symbol in the time-frequency resource of the CORESET corresponding to the first search space set does not overlap with any RE in the first time-frequency resource, in other words, when at least one RE in an RE set on any symbol in the time-frequency resource of the CORESET corresponding to the first search space set overlaps with any RE in the first time-frequency resource, the terminal device does not monitor the PDCCH on the first PDCCH candidate in the first search space set. Alternatively, when at least one RE in the first PDCCH candidate in the first search space set overlaps with at least one RE in the first time-frequency resource, if the terminal device determines that any RE in an RE set on at least one symbol in the time-frequency resource of the CORESET corresponding to the first search space set does not overlap with any RE in the first time-frequency resource, the terminal device monitors the PDCCH on the first PDCCH candidate in the first search space set. If the terminal device determines that no RE in an RE set on any symbol in the time-frequency resource of the CORESET corresponding to the first search space set does not overlap with any RE in the first time-frequency resource, the terminal device does not monitor the PDCCH on the first PDCCH candidate in the first search space set.

Further, that at least one RE in the first PDCCH candidate in the first search space set overlaps with at least one RE in the first time-frequency resource may be replaced with: At least one RE in REs that are preset in a protocol for PDCCH DM-RS transmission in the first PDCCH candidate in the first search space set overlaps with at least one RE in the first time-frequency resource, and/or at least one RE in REs that are preset in the protocol for PDCCH transmission in the first PDCCH candidate in the first search space set overlaps with at least one RE in the first time-frequency resource.

Still further, time domain symbols of the first PDCCH candidate in the first search space set are within the first three symbols of an NR slot. If at least one RE in the first PDCCH candidate in the first search space set overlaps with at least one RE in the first time-frequency resource, and if the terminal device determines that the time domain symbols of the first PDCCH candidate in the first search space set are all within the first three symbols of an NR slot, the terminal device monitors the PDCCH on the first PDCCH candidate in the first search space set. If the terminal device determines that at least one of the time domain symbols of the first PDCCH candidate in the first search space set is not within the first three symbols of the NR slot, the terminal device does not monitor the PDCCH on the first PDCCH candidate in the first search space set. Alternatively, the time domain symbols of the first PDCCH candidate in the first search space set are within the first four symbols of an NR slot. If at least one RE in the first PDCCH candidate in the first search space set overlaps with at least one RE in the first time-frequency resource, and if the terminal device determines that the time domain symbols of the first PDCCH candidate in the first search space set are all within the first four symbols of an NR slot, the terminal device monitors the PDCCH on the first PDCCH candidate in the first search space set. If the terminal device determines that at least one of the time domain symbols of the first PDCCH candidate in the first search space set is not within the first four symbols of the NR slot, the terminal device does not monitor the PDCCH on the first PDCCH candidate in the first search space set.

Optionally, before S1701, the method 1700 may further include: The terminal device sends capability information to the network device. Correspondingly, the network device receives the capability information from the terminal device.

The capability information indicates that the terminal device has at least one of the following capabilities:
(1) a capability of monitoring the PDCCH on the first PDCH candidate when at least one RE in the first PDCCH candidate in the first search space set overlaps with at least one RE in the first time-frequency resource;
(2) a capability of monitoring the PDCCH on the first PDCH candidate when at least one RE in the first PDCCH candidate in the first search space set overlaps with at least one RE in the first time-frequency resource, and when at least one RE in an RE set on only the 1^{st} symbol in the time-frequency resource of the CORESET corresponding to the first search space set overlaps with at least one RE in the first time-frequency resource, where in other words, when at least one RE in the first PDCCH candidate in the first search space set overlaps with at least one RE in the first time-frequency resource, if at least one RE in a time-frequency resource on a symbol other than the 1^{st} symbol in the time-frequency resource of the control resource set corresponding to the first search space set overlaps with at least one RE in the first time-frequency resource, the terminal device cannot monitor the PDCCH on the first PDCCH candidate;
(3) a capability of monitoring the PDCCH on the first PDCH candidate when at least one RE in the first PDCCH candidate in the first search space set overlaps with at least one RE in the first time-frequency resource, and when at least one RE in an RE set on only one symbol in the time-frequency resource of the CORESET corresponding to the first search space set overlaps with at least one RE in the first time-frequency resource, where in other words, when at least one RE in the first PDCCH candidate in the first search space set overlaps with at least one RE in the first time-frequency resource, if at least two symbols exist in the time-frequency resource of the control resource set corresponding to the first search space set, and at least one RE in a time-frequency resource on each of the at least two symbols overlaps with at least one RE in the first time-frequency resource, the terminal device cannot monitor the PDCCH on the first PDCCH candidate;
(4) a capability of monitoring the PDCCH on the first PDCH candidate when at least one RE in the first PDCCH candidate in the first search space set overlaps with at least one RE in the first time-frequency resource, and when at least one RE in an RE set on only the 1^{st} symbol and the 2^{nd} symbol in the time-frequency resource of the CORESET corresponding to the first search space set overlaps with at least one RE in the first time-frequency resource, where in other words, when at least one RE in the first PDCCH candidate in the first search space set overlaps with at least one RE in the first time-frequency resource, if at least one RE in a time-frequency resource on the 3^{rd} symbol in the time-frequency resource of the control resource set corresponding to the first search space set overlaps with at least one RE in the first time-frequency resource, the terminal device cannot monitor the PDCCH on the first PDCCH candidate;
(5) a capability of monitoring the PDCCH on the first PDCH candidate when at least one RE in the first PDCCH candidate in the first search space set overlaps with at least one RE in the first time-frequency resource, and when at least one RE in an RE set on only the 1^{st} symbol and/or the last symbol in the time-frequency resource of the CORESET corresponding to the first search space set overlaps with at least one RE in the first time-frequency resource, where in other words, when at least one RE in the first PDCCH candidate in the first search space set overlaps with at least one RE in the first time-frequency resource, if at least one RE in a time-frequency resource on at least one symbol other than the 1^{st} symbol, or the last symbol, or the 1^{st} symbol and the last symbol in the time-frequency resource of the control resource set corresponding to the first search space set overlaps with at least one RE in the first time-frequency resource, the terminal device cannot monitor the PDCCH on the first PDCCH candidate;
(6) a capability of monitoring the PDCCH on the first PDCH candidate when at least one RE in the first PDCCH candidate in the first search space set overlaps with at least one RE in the first time-frequency resource, and when there are a maximum of Q sets of first time-frequency resource-related configurations, and at least one RE in the first time-frequency resource indicated by any one of the Q sets of first time-frequency resource-related configurations overlaps with at least one RE in the time-frequency resource of the control resource set CORESET corresponding to the first search space set, where in other words, when at least one RE in the first PDCCH candidate in the first search space set overlaps with at least one RE in the first time-frequency resource, if there are more than Q sets of first time-frequency resource-related configurations, and at least one RE in the first time-frequency resource indicated by any one of the more than Q sets of first time-frequency resource-related configurations overlaps with at least one RE in the time-frequency resource of the control resource set CORESET corresponding to the first search space set, the terminal device cannot monitor the PDCCH on the first PDCCH candidate, where Q is a positive integer, and Q is a value preset in the protocol, or is a value determined by the network device based on a capability reported by the terminal device;
(7) a capability of monitoring the PDCCH on the first PDCH candidate when at least one RE in the first PDCCH candidate in the first search space set overlaps with at least one RE in the first time-frequency resource, and when any RE in an RE set on at least one symbol in the time-frequency resource of the CORESET corresponding to the first search space set does not overlap with any RE in the first time-frequency resource, where in other words, when at least one RE in the first PDCCH candidate in the first search space set overlaps with at least one RE in the first time-frequency resource, if at least one RE in an RE set on each of all symbols in the time-frequency resource of the CORESET corresponding to the first search space set overlaps with at least one RE in the first time-frequency resource, the terminal device cannot monitor the PDCCH on the first PDCCH candidate; and a terminal having this capability may need to perform channel estimation by using a PDCCH DM-RS on a symbol of a first PDCCH candidate that does not overlap with the first time-frequency resource, and does not perform channel estimation by using a PDCCH DM-RS on a symbol of the first PDCCH candidate that overlaps with the first time-frequency resource, to reduce channel estimation complexity and ensure PDCCH detection performance.
(8) a capability of monitoring the PDCCH on the first PDCCH candidate when at least one RE in the first PDCCH candidate in the first search space set overlaps with at least one RE in the first time-frequency resource, and when at least one RE in an RE set on a maximum of one symbol in the time-frequency resource of the CORESET corresponding to the first search space set overlaps with at least one RE in the first time-frequency resource, where in other words, when at least one RE in the first PDCCH candidate in the first search space set overlaps with at least one RE in the first time-frequency resource, if at least two symbols exist in the time-frequency resource of the CORESET corresponding to the first search space set, and at least one RE in an RE set on any of the at least two symbols overlaps with at least one RE in the first time-frequency resource, the terminal device cannot monitor the PDCCH on the first PDCCH candidate;
(9) a capability of monitoring the PDCCH on the first PDCCH candidate when at least one RE in the first PDCCH candidate in the first search space set overlaps with at least one RE in the first time-frequency resource, and when all symbols in the time-frequency resource of the CORESET corresponding to the first search space set are within the first three symbols of an NR slot, where in other words, when at least one RE in the first PDCCH candidate in the first search space set overlaps with at least one RE in the first time-frequency resource, if at least one symbol in the time-frequency resource of the CORESET corresponding to the first search space set does not belong to the first three symbols of the NR slot, the terminal device cannot monitor the PDCCH on the first PDCCH candidate; and
(10) a capability of monitoring the PDCCH on the first PDCCH candidate when at least one RE in the first PDCCH candidate in the first search space set overlaps with at least one RE in the first time-frequency resource, and when all symbols in the time-frequency resource of the CORESET corresponding to the first search space set are within the first four symbols of an NR slot, where in other words, when at least one RE in the first PDCCH candidate in the first search space set overlaps with at least one RE in the first time-frequency resource, if at least one symbol in the time-frequency resource of the CORESET corresponding to the first search space set does not belong to the first four symbols of the NR slot, the terminal device cannot monitor the PDCCH on the first PDCCH candidate.

It should be understood that, in the foregoing solution, if the terminal device sends the capability information to the network device, the network device may send the first indication information and the second indication information to the terminal device based on the capability information of the terminal device, to achieve an effect of configuring the PDCCH. If the terminal device does not send the capability information to the network device, the network device may send the first indication information and the second indication information to the terminal device based on a protocol limitation, to achieve an effect of configuring the PDCCH.

The protocol preset limitation may include two cases. In a first case, the terminal device does not need to send capability information related to a limitation, and the protocol presets that the first indication information and the second indication information need to meet the limitation. In a second case, the terminal device may send or not send capability information related to a limitation, and when the terminal device does not send the capability information related to the limitation, the protocol presets that the first indication information and the second indication information need to meet the limitation.

According to the foregoing solution, the network device sends, to the terminal device, a relationship that the time-frequency resource of the control resource set corresponding to the first search space set and the first time-frequency resource meet, to reduce complexity of sending a PDCCH and/or a PDCCH DM-RS by the network device and complexity of receiving a PDCCH and/or a PDCCH DM-RS by the terminal device, and reduce channel estimation complexity of the terminal device. Further, the capability information of the terminal device and/or the protocol limitation are/is considered, and implementation complexity on the terminal device can be reduced.

In another possible implementation, the first search space set in the method 1700 may be replaced with the first PDCCH candidate, and the method may include the following steps.

Step 1: A network device sends first indication information to a terminal device. Correspondingly, the terminal device receives the first indication information from the network device.

The first indication information indicates a first time-frequency resource.

Optionally, the first time-frequency resource includes at least one type of the following REs:

REs on which the network device indicates not to allow PDCCH DM-RS transmission, REs on which the network device indicates not to allow PDCCH transmission, REs on which the network device indicates not to allow PDCCH DM-RS and PDCCH transmission, REs to which a cell-specific reference signal CRS is mapped, REs to which a channel state indication reference signal CSI-RS is mapped, REs to which a tracking reference signal TRS is mapped, or REs included in a rate matching resource.

Further, when the REs to which the CRS is mapped include REs to which CRSs corresponding to two sets of configurations are mapped, the REs to which the CRSs corresponding to the at least two sets of configurations are mapped correspond to a same quantity of antenna ports, and/or shift parameters (for example, parameters nrofCRS-Ports are the same) of the REs to which the CRSs corresponding to the at least two sets of configurations are mapped are the same; and/or when the REs to which the CRS is mapped include REs to which a CRS corresponding to at least one set of configurations is mapped, REs to which a CRS corresponding to one of the at least one set of configurations is mapped are located on RBs with a quantity greater than 100 (for example, a parameter carrierBandwidthDL may be greater than n100, and in a possible implementation, a parameter carrierBandwidthDL may be n200).

It should be understood that the terminal device works in an NR system, receives a CRS configuration that is of an LTE system and that is indicated by a network device in the NR system, and receives a control channel and a data channel of the NR system based on the CRS configuration. Because a capability of the terminal device is limited, a quantity of sets of CRSs that can be supported by the terminal device is limited, for example, one or three.

A set of CRS configurations includes a downlink carrier bandwidth configuration of a CRS, for example, a parameter carrierBandwidthDL is used for configuration. Generally, a maximum downlink carrier bandwidth configuration for the CRS is 100 RBs, corresponding to an LTE carrier with a maximum bandwidth 20 MHz. A terminal device that supports one set of CRS configurations can support a maximum of one CRS of a 20 MHz LTE carrier.

When a quantity of RBs in the downlink carrier bandwidth configuration of the CRS included in one set of CRS configurations is greater than 100, two or more LTE carriers may be indicated by using one set of CRS configurations. For example, if other parameters of the CRS are the same, two adjacent 20 MHz LTE carriers may be indicated by one set of CRS configurations. A quantity of RBs in the downlink carrier bandwidth configuration of the CRS is set to 200. Therefore, a terminal device that supports one set of CRS configurations may support a CRS of more than one 20 MHz LTE carrier, and a terminal device that supports three sets of CRS configurations may support CRSs of more than three 20 MHz LTE carriers. Step 2: The network device sends second indication information to the terminal device. Correspondingly, the terminal device receives the second indication information from the network device.

The second indication information indicates a first PDCCH candidate, and the first PDCCH candidate and the first time-frequency resource meet at least one of the following relationships:
(1) At least one RE in an RE set on only the 1^{st} symbol in the first PDCCH candidate overlaps with at least one RE in the first time-frequency resource. In other words, the first time-frequency resource and a time-frequency resource on a symbol other than the 1^{st} symbol in the first PDCCH candidate do not overlap at all, that is, have no overlapping RE.
(2) At least one RE in an RE set on only one symbol in the first PDCCH candidate overlaps with at least one RE in the first time-frequency resource.
(3) At least one RE in RE sets on only the 1^{st} symbol and the 2^{nd} symbol in the first PDCCH candidate overlaps with at least one RE in the first time-frequency resource.
(4) At least one RE in RE sets on only the 1^{st} symbol and/or the last symbol in the first PDCCH candidate overlaps with at least one RE in the first time-frequency resource. In other words, the first time-frequency resource and an RE set on a symbol other than the 1^{st} symbol and/or the last symbol in the first PDCCH candidate do not overlap at all, that is, have no overlapping RE.
(5) There are a maximum of Q sets of first time-frequency resource-related configurations, and at least one RE in the first time-frequency resource indicated by any one of the Q sets of first time-frequency resource-related configurations overlaps with at least one RE in the first PDCCH candidate. Q is a positive integer, and Q is a value preset in a protocol (for example, Q is equal to 3).
(6) Any RE in an RE set on at least one symbol in the first PDCCH candidate does not overlap with any RE in the first time-frequency resource. In other words, an RE set on at least one symbol in the first PDCCH candidate does not overlap with the first time-frequency resource at all.
(7) At least one RE in an RE set on a maximum of one symbol in the first PDCCH candidate overlaps with at least one RE in the first time-frequency resource. In other words, at least one RE in an RE set on only one symbol in the first PDCCH candidate overlaps with at least one RE in the first time-frequency resource, and an RE set on a symbol other than the symbol in the first PDCCH candidate does not overlap with the first time-frequency resource at all.
(8) At least one RE in the first PDCCH candidate overlaps with at least one RE in the first time-frequency resource, and all symbols of the first PDCCH candidate are within the first three symbols of an NR slot.
(9) At least one RE in the first PDCCH candidate overlaps with at least one RE in the first time-frequency resource, and all symbols of the first PDCCH candidate are within the first four symbols of an NR slot.
(10) At least one RE in the first PDCCH candidate overlaps with at least one RE in the first time-frequency resource, and the first PDCCH candidate belongs to a UE-specific search space USS. That is, the first PDCCH candidate does not belong to a common search space CSS. The common search space is mainly used to send cell common information, and an existing terminal device does not support monitoring a PDCCH on the first PDCCH candidate when at least one RE in the first PDCCH candidate overlaps with at least one RE in the first time-frequency resource. Therefore, this solution is not suitable for the CSS.
(11) At least one RE in the first PDCCH candidate overlaps with at least one RE in the first time-frequency resource, and the first PDCCH candidate belongs to the UE-specific search space USS or a type 3 common search space type3 CSS. That is, the first PDCCH candidate does not belong to a CSS (a type0 CSS, a type0A CSS, a type0B CSS, a type1 CSS, a type1A CSS, a type2 CSS, and a type2A CSS) other than the type 3 common search space. The type3 CSS may be used to send group information of the terminal device, and if a group of terminal devices support monitoring PDCCHs on the first PDCCH candidate when at least one RE in the first PDCCH candidate overlaps with at least one RE in the first time-frequency resource. Therefore, this solution is suitable for the type3 CSS.
(12) At least one RE in the first PDCCH candidate overlaps with at least one RE in the first time-frequency resource, and a size (REG bundle size) of a REG bundle of a CORESET associated with the first PDCCH candidate is 6. In this case, there are a large quantity of PDCCH DM-RSs in one REG bundle, and therefore channel estimation performance is good.
(13) At least one RE in the first PDCCH candidate overlaps with at least one RE in the first time-frequency resource, and precoderGranularity of the CORESET associated with the first PDCCH candidate is set to sameAsREG-bundle.

In the foregoing solution, an RE set on one symbol of the first PDCCH candidate refers to all REs on the symbol of the first PDCCH candidate, namely, all time-frequency resources on the symbol.

It should be understood that, in the foregoing solution, a sequence of sending the first indication information and the second indication information by the network device to the terminal device is not limited. The network device may first send the first indication information and then send the second indication information to the terminal device; or the network device may first send the second indication information and then send the first indication information to the terminal device; or the network device may indicate both the first time-frequency resource and the first PDCCH candidate to the terminal device by using one piece of indication information. This is not limited herein.

Step 3: The terminal device monitors a PDCCH on the first PDCCH candidate.

At least one RE in the first PDCCH candidate overlaps with at least one RE in the first time-frequency resource.

Further, if at least one RE in the first PDCCH candidate overlaps with at least one RE in the first time-frequency resource, when the first PDCCH candidate and the first time-frequency resource meet at least one of the foregoing seven relationships, the terminal device monitors the PDCCH on the first PDCCH candidate; or when the first PDCCH candidate and the first time-frequency resource do not meet at least one of the foregoing seven relationships, the terminal device does not monitor the PDCCH on the first PDCCH candidate. Alternatively, if at least one RE in the first PDCCH candidate overlaps with at least one RE in the first time-frequency resource, when the terminal device determines that the first PDCCH candidate and the first time-frequency resource meet at least one of the foregoing seven relationships, the terminal device monitors the PDCCH on the first PDCCH candidate. When the terminal device determines that the first PDCCH candidate and the first time-frequency resource do not meet at least one of the foregoing seven relationships, the terminal device does not monitor the PDCCH on the first PDCCH candidate.

For example, in one aspect, if at least one RE in the first PDCCH candidate overlaps with at least one RE in the first time-frequency resource, when at least one RE in the RE set on only the 1^{st} symbol in the first PDCCH candidate overlaps with the at least one RE in the first time-frequency resource, the terminal device monitors the PDCCH on the first PDCCH candidate. When at least one RE in an RE set on at least one symbol other than the 1^{st} symbol in the first PDCCH candidate overlaps with at least one RE in the first time-frequency resource, the terminal device does not monitor the PDCCH on the first PDCCH candidate.

For example, if at least one RE in the first PDCCH candidate overlaps with at least one RE in the first time-frequency resource, when the first PDCCH candidate belongs to the UE-specific search space USS, the terminal device monitors the PDCCH on the first PDCCH candidate. When the first PDCCH candidate does not belong to the USS or belongs to the CSS, the terminal device does not monitor the PDCCH on the first PDCCH candidate.

For example, if at least one RE in the first PDCCH candidate overlaps with at least one RE in the first time-frequency resource, when the first PDCCH candidate belongs to the UE-specific search space USS or the type 3 common search space type3 CSS, the terminal device monitors the PDCCH on the first PDCCH candidate. When the first PDCCH candidate belongs to a common search space CSS other than the type3 CSS, the terminal device does not monitor the PDCCH on the first PDCCH candidate.

For example, if at least one RE in the first PDCCH candidate overlaps with at least one RE in the first time-frequency resource, when a size (REG bundle size) of a REG bundle of a CORESET associated with the first PDCCH candidate is 6, the terminal device monitors the PDCCH on the first PDCCH candidate. When a size (REG bundle size) of a REG bundle of the CORESET associated with the first PDCCH candidate is not 6, for example, is 2 or 3, the terminal device does not monitor the PDCCH on the first PDCCH candidate.

For example, if at least one RE in the first PDCCH candidate overlaps with at least one RE in the first time-frequency resource, when precodingrGranularity of the CORESET associated with the first PDCCH candidate is set to sameAsREG-bundle, the terminal device monitors the PDCCH on the first PDCCH candidate. When precoderGranularity of the CORESET associated with the first PDCCH candidate is not set to sameAsREG-bundle, for example, is set to allContiguousRBs, the terminal device does not monitor the PDCCH on the first PDCCH candidate.

In another aspect, if at least one RE in the first PDCCH candidate overlaps with at least one RE in the first time-frequency resource, if the terminal device determines that at least one RE in the RE set on only the 1^{st} symbol in the first PDCCH candidate overlaps with the at least one RE in the first time-frequency resource, the terminal device monitors the PDCCH on the first PDCCH candidate. If the terminal device determines that at least one RE in an RE set on at least one symbol other than the 1^{st} symbol in the first PDCCH candidate overlaps with at least one RE in the first time-frequency resource, the terminal device does not monitor the PDCCH on the first PDCCH candidate.

For example, in one aspect, if at least one RE in the first PDCCH candidate overlaps with at least one RE in the first time-frequency resource, when any RE in an RE set on at least one symbol in the first PDCCH candidate does not overlap with any RE in the first time-frequency resource, the terminal device monitors the PDCCH on the first PDCCH candidate. When no RE in an RE set on any symbol in the first PDCCH candidate does not overlap with any RE in the first time-frequency resource, in other words, when at least one RE in an RE set on any symbol in the first PDCCH candidate overlaps with any RE in the first time-frequency resource, the terminal device does not monitor the PDCCH on the first PDCCH candidate.

In another aspect, when at least one RE in the first PDCCH candidate overlaps with at least one RE in the first time-frequency resource, if the terminal device determines that any RE in an RE set on at least one symbol in the first PDCCH candidate does not overlap with any RE in the first time-frequency resource, the terminal device monitors the PDCCH on the first PDCCH candidate. If the terminal device determines that no RE in an RE set on any symbol in the first PDCCH candidate does not overlap with any RE in the first time-frequency resource, the terminal device does not monitor the PDCCH on the first PDCCH candidate.

Further, that at least one RE in the first PDCCH candidate overlaps with at least one RE in the first time-frequency resource may be replaced with: At least one RE in REs that are preset in a protocol for PDCCH DM-RS transmission in the first PDCCH candidate overlaps with at least one RE in the first time-frequency resource, and/or at least one RE in REs that are preset in a protocol for PDCCH transmission in the first PDCCH candidate overlaps with at least one RE in the first time-frequency resource.

Still further, time domain symbols of the first PDCCH candidate are within the first three symbols of an NR slot. If at least one RE in the first PDCCH candidate overlaps with at least one RE in the first time-frequency resource, and if the terminal device determines that the time domain symbols of the first PDCCH candidate are all within the first three symbols of an NR slot, the terminal device monitors the PDCCH on the first PDCCH candidate. If the terminal device determines that at least one of the time domain symbols of the first PDCCH candidate is not within the first three symbols of the NR slot, the terminal device does not monitor the PDCCH on the first PDCCH candidate. Alternatively, the time domain symbols of the first PDCCH candidate are within the first four symbols of an NR slot. If at least one RE in the first PDCCH candidate overlaps with at least one RE in the first time-frequency resource, and if the terminal device determines that the time domain symbols of the first PDCCH candidate are all within the first four symbols of an NR slot, the terminal device monitors the PDCCH on the first PDCCH candidate. If the terminal device determines that at least one of the time domain symbols of the first PDCCH candidate is not within the first four symbols of the NR slot, the terminal device does not monitor the PDCCH on the first PDCCH candidate.

Optionally, before step 1, the method may further include: The terminal device sends capability information to the network device. Correspondingly, the network device receives the capability information from the terminal device.

The capability information indicates that the terminal device has at least one of the following capabilities:
(1) a capability of monitoring the PDCCH on the first PDCH candidate when at least one RE in the first PDCCH candidate overlaps with at least one RE in the first time-frequency resource;
(2) a capability of monitoring the PDCCH on the first PDCH candidate when at least one RE in the first PDCCH candidate overlaps with at least one RE in the first time-frequency resource, and when at least one RE in an RE set on only the 1^{st} symbol in the first PDCCH candidate overlaps with at least one RE in the first time-frequency resource, where in other words, when at least one RE in the first PDCCH candidate overlaps with at least one RE in the first time-frequency resource, if at least one RE in a time-frequency resource on a symbol other than the 1^{st} symbol in the first PDCCH candidate overlaps with at least one RE in the first time-frequency resource, the terminal device cannot monitor the PDCCH on the first PDCCH candidate;
(3) a capability of monitoring the PDCCH on the first PDCH candidate when at least one RE in the first PDCCH candidate overlaps with at least one RE in the first time-frequency resource, and when at least one RE in an RE set on only one symbol in the first PDCCH candidate overlaps with at least one RE in the first time-frequency resource, where in other words, when at least one RE in the first PDCCH candidate overlaps with at least one RE in the first time-frequency resource, if at least two symbols exist in the first PDCCH candidate, and at least one RE in a time-frequency resource on each of the at least two symbols overlaps with at least one RE in the first time-frequency resource, the terminal device cannot monitor the PDCCH on the first PDCCH candidate;
(4) a capability of monitoring the PDCCH on the first PDCH candidate when at least one RE in the first PDCCH candidate overlaps with at least one RE in the first time-frequency resource, and when at least one RE in RE sets on only the 1^{st} symbol and the 2^{nd} symbol in the first PDCCH candidate overlaps with at least one RE in the first time-frequency resource, where in other words, when at least one RE in the first PDCCH candidate overlaps with at least one RE in the first time-frequency resource, if at least one RE in a time-frequency resource on the 3^{rd} symbol in the first PDCCH candidate overlaps with at least one RE in the first time-frequency resource, the terminal device cannot monitor the PDCCH on the first PDCCH candidate;
(5) a capability of monitoring the PDCCH on the first PDCH candidate when at least one RE in the first PDCCH candidate overlaps with at least one RE in the first time-frequency resource, and when at least one RE in RE sets on only the 1^{st} symbol and/or the last symbol in the first PDCCH candidate overlaps with at least one RE in the first time-frequency resource, where in other words, when at least one RE in the first PDCCH candidate overlaps with at least one RE in the first time-frequency resource, if at least one RE in a time-frequency resource on at least one symbol other than the 1^{st} symbol, or the last symbol, or the 1^{st} symbol and the last symbol in the first PDCCH candidate overlaps with at least one RE in the first time-frequency resource, the terminal device cannot monitor the PDCCH on the first PDCCH candidate;
(6) a capability of monitoring the PDCCH on the first PDCH candidate when at least one RE in the first PDCCH candidate overlaps with at least one RE in the first time-frequency resource, and when there are a maximum of Q sets of first time-frequency resource-related configurations, and at least one RE in the first time-frequency resource indicated by any one of the Q sets of first time-frequency resource-related configurations overlaps with at least one RE in the first PDCCH candidate, where in other words, when at least one RE in the first PDCCH candidate overlaps with at least one RE in the first time-frequency resource, if there are more than Q sets of first time-frequency resource-related configurations, and at least one RE in the first time-frequency resource indicated by any one of the more than Q sets of first time-frequency resource-related configurations overlaps with at least one RE in the first PDCCH candidate, the terminal device cannot monitor the PDCCH on the first PDCCH candidate, where Q is a positive integer, and Q is a value preset in the protocol, or is a value determined by the network device based on a capability reported by the terminal device;
(7) a capability of monitoring the PDCCH on the first PDCH candidate when at least one RE in the first PDCCH candidate overlaps with at least one RE in the first time-frequency resource, and when any RE in an RE set on at least one symbol in the first PDCCH candidate does not overlap with any RE in the first time-frequency resource, where in other words, when at least one RE in the first PDCCH candidate overlaps with at least one RE in the first time-frequency resource, if at least one RE in an RE set on each of all symbols in the first PDCCH candidate overlaps with at least one RE in the first time-frequency resource, the terminal device cannot monitor the PDCCH on the first PDCCH candidate; and a terminal having this capability may need to perform channel estimation by using a PDCCH DM-RS on a symbol of a first PDCCH candidate that does not overlap with the first time-frequency resource, and does not perform channel estimation by using a PDCCH DM-RS on a symbol of the first PDCCH candidate that overlaps with the first time-frequency resource, to reduce channel estimation complexity and ensure PDCCH detection performance.
(8) a capability of monitoring the PDCCH on the first PDCCH candidate when at least one RE in the first PDCCH candidate overlaps with at least one RE in the first time-frequency resource, and when at least one RE in an RE set on a maximum of one symbol in the first PDCCH candidate overlaps with at least one RE in the first time-frequency resource, where in other words, when at least one RE in the first PDCCH candidate overlaps with at least one RE in the first time-frequency resource, if at least two symbols exist in the first PDCCH candidate, and at least one RE in an RE set on any of the at least two symbols overlaps with at least one RE in the first time-frequency resource, the terminal device cannot monitor the PDCCH on the first PDCCH candidate;
(9) a capability of monitoring the PDCCH on the first PDCCH candidate when at least one RE in the first PDCCH candidate overlaps with at least one RE in the first time-frequency resource, and when all symbols in the first PDCCH candidate are within the first three symbols of an NR slot, where in other words, when at least one RE in the first PDCCH candidate overlaps with at least one RE in the first time-frequency resource, if at least one symbol in the first PDCCH candidate does not belong to the first three symbols of the NR slot, the terminal device cannot monitor the PDCCH on the first PDCCH candidate;
(10) a capability of monitoring the PDCCH on the first PDCCH candidate when at least one RE in the first PDCCH candidate overlaps with at least one RE in the first time-frequency resource, and the first PDCCH candidate belongs to a UE-specific search space USS, where in other words, when the first PDCCH candidate belongs to a common search space CSS, the terminal device cannot monitor the PDCCH on the first PDCCH candidate;
(11) a capability of monitoring the PDCCH on the first PDCCH candidate when at least one RE in the first PDCCH candidate overlaps with at least one RE in the first time-frequency resource, and the first PDCCH candidate belongs to the UE-specific search space USS or a type 3 common search space type3 CSS, where in other words, if the first PDCCH candidate belongs to a CSS (a type0 CSS, a type0A CSS, a type0B CSS, a type1 CSS, a type1A CSS, a type2 CSS, and a type2A CSS) other than the type 3 common search space, the terminal device cannot monitor the PDCCH on the first PDCCH candidate;
(12) a capability of monitoring the PDCCH on the first PDCCH candidate when at least one RE in the first PDCCH candidate overlaps with at least one RE in the first time-frequency resource, and a size (REG bundle size) of a REG bundle of a CORESET associated with the first PDCCH candidate is 6, where in other words, if a size (REG bundle size) of a REG bundle of the CORESET associated with the first PDCCH candidate is 2 or 3, the terminal device cannot monitor the PDCCH on the first PDCCH candidate; and
(13) a capability of monitoring the PDCCH on the first PDCCH candidate when at least one RE in the first PDCCH candidate overlaps with at least one RE in the first time-frequency resource, and precodingrGranularity of the CORESET associated with the first PDCCH candidate is set to sameAsREG-bundle, where in other words, when precoderGranularity of the CORESET associated with the first PDCCH candidate is not set to sameAsREG-bundle, for example, is set to allContiguousRBs, the terminal device cannot monitor the PDCCH on the first PDCCH candidate.

In this embodiment, for specific descriptions of the first time-frequency resource, refer to the related descriptions of the first time-frequency resource in the method 700. For brevity, details are not described herein in this application.

To configure a resource for the terminal device, an embodiment of this application provides a resource configuration method 1800. FIG. 18 is a diagram of the resource configuration method 1800 according to an embodiment of this application. As shown in FIG. 18, the method 1800 may include the following steps.

S1801: The network device sends indication information to the terminal device. Correspondingly, the terminal device receives the indication information from the network device.

The indication information indicates that a frequency domain resource of a first CRS time-frequency resource is greater than 100 RBs.

S1802: The terminal device receives a channel or a signal based on the first CRS time-frequency resource.

Specifically, the terminal device works in an NR system, and the terminal device may receive a channel or a signal in the NR system based on the first CRS time-frequency resource.

Further, the terminal device may receive a PDCCH in the NR system based on the first CRS time-frequency resource.

For specific descriptions of receiving, by the terminal device, the PDCCH in the NR system based on the first CRS time-frequency resource, refer to the related descriptions in S1704. For brevity, details are not described herein in this application.

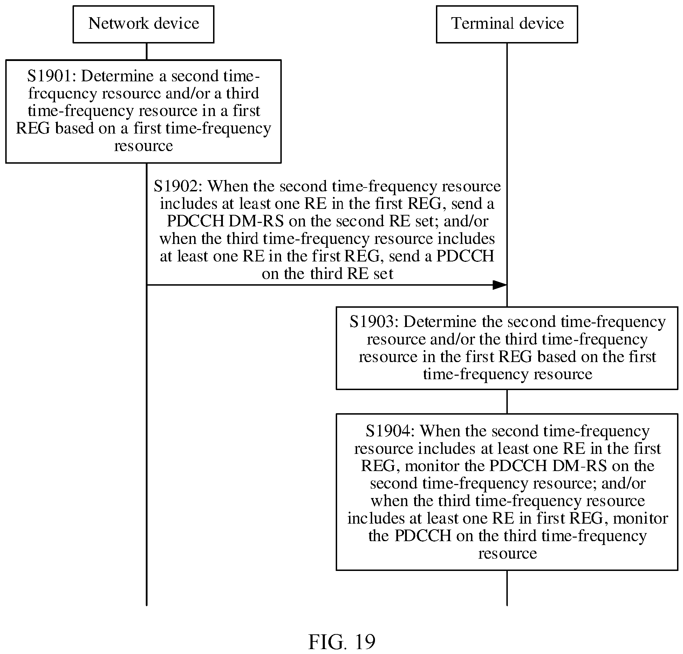

FIG. 19 is a diagram of a PDCCH monitoring method 1900 according to an embodiment of this application. As shown in FIG. 19, the method 1900 may include the following steps.

S1901: A network device determines a second time-frequency resource and/or a third time-frequency resource in a first REG based on a first time-frequency resource.

The first time-frequency resource is REs carrying a CRS. The second time-frequency resource may be used for transmitting a PDCCH DM-RS sent by the network device. This may also be understood as: The second time-frequency resource has a capability of transmitting the PDCCH DM-RS sent by the network device, or the second time-frequency resource is allowed to transmit the PDCCH DM-RS sent by the network device. The third time-frequency resource may be used for transmitting a PDCCH sent by the network device. This may also be understood as: The third time-frequency resource has a capability of transmitting the PDCCH sent by the network device, or the third time-frequency resource is allowed to transmit the PDCCH sent by the network device. The second time-frequency resource is a part of a plurality of REs in the first REG that are preset in a protocol for PDCCH DM-RS transmission, and/or the third time-frequency resource is a part of a plurality of REs in the first REG that are preset in the protocol for PDCCH transmission.

Specifically, the network device may puncture an RE that is in a time domain symbol set of a first PDCCH candidate including the first REG and that belongs to the first time-frequency resource, and then send remaining REs. Puncturing may be understood as not sending the RE that is in the time domain symbol set of the first PDCCH candidate including the first REG and that belongs to the first time-frequency resource. In the remaining REs, an RE that is used to transmit the PDCCH DM-RS is the second time-frequency resource, and an RE that is used to transmit the PDCCH is the third time-frequency resource.

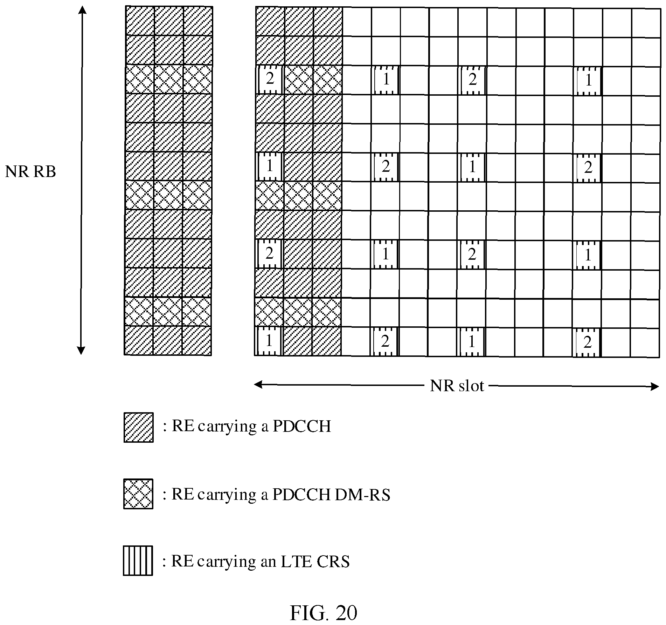

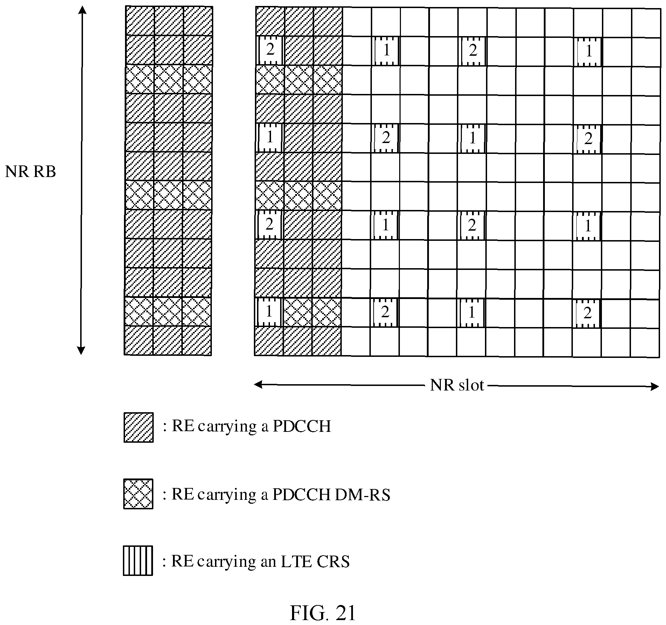

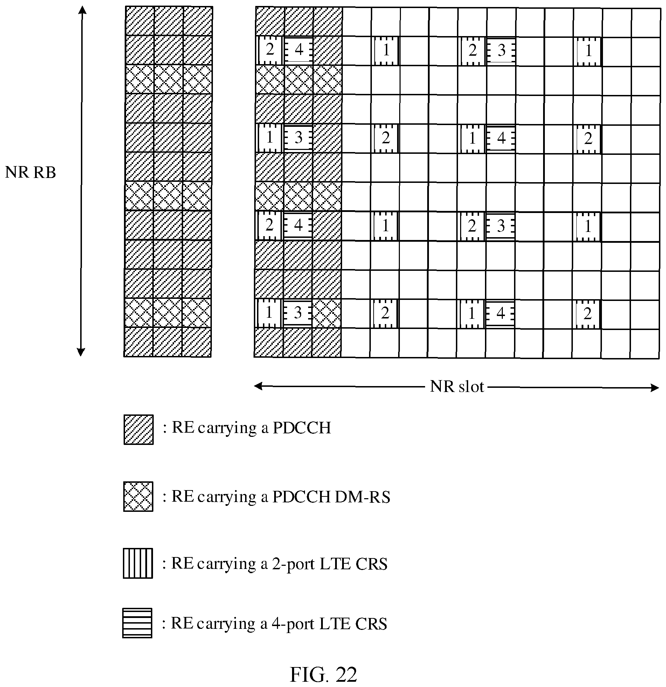

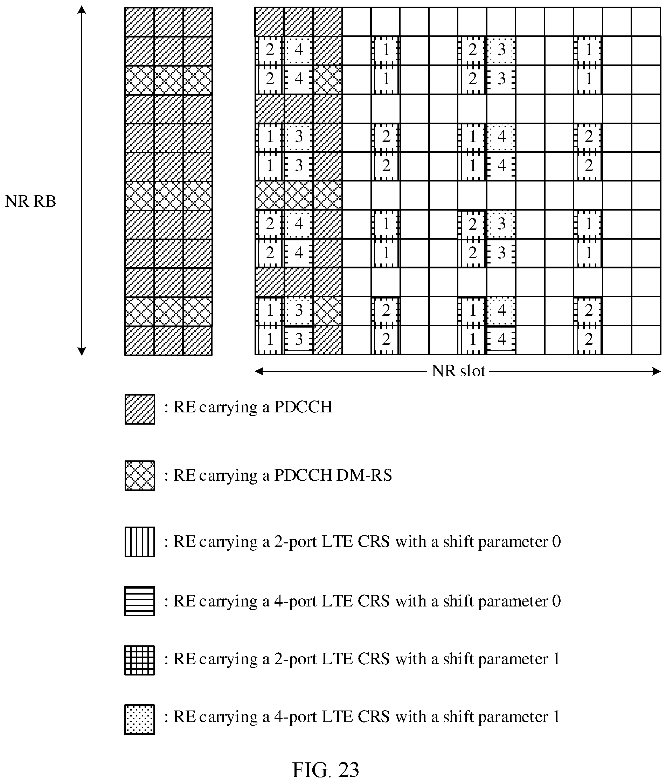

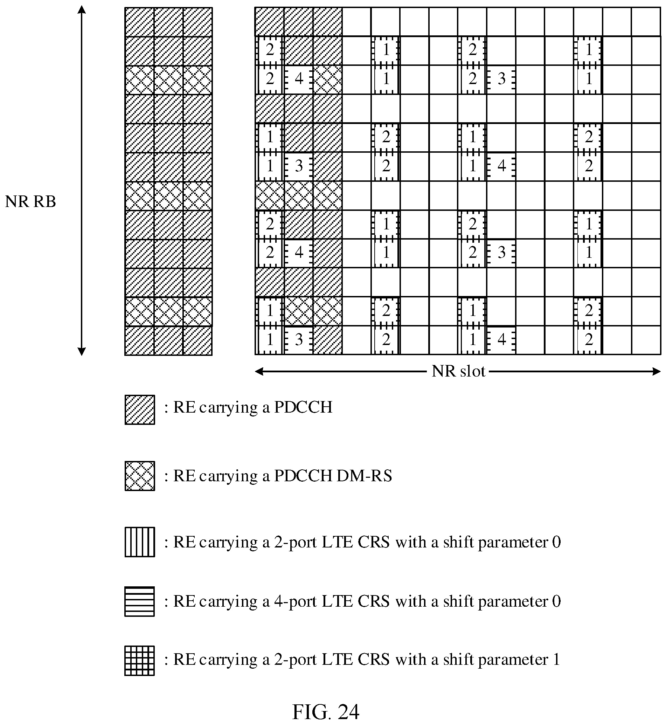

Because there may be a plurality of patterns carrying the CRS, there may also be a plurality of patterns of the punctured second time-frequency resource and/or the punctured third time-frequency resource. For example, FIG. 20 is another diagram of the second time-frequency resource and the third time-frequency resource according to an embodiment of this application. A CRS is for a single cell, uses two ports, and has a shift parameter 0. FIG. 21 is another diagram of the second time-frequency resource and the third time-frequency resource according to an embodiment of this application. A CRS is for a single cell, uses two ports, and has a shift parameter 1. FIG. 22 is another diagram of the second time-frequency resource and the third time-frequency resource according to an embodiment of this application. A CRS is for a single cell, uses two ports or four ports, and has a shift parameter 0. FIG. 23 is another diagram of the second time-frequency resource and the third time-frequency resource according to an embodiment of this application. A CRS is for double cells, uses four ports, and has a shift parameter is 1 or 2. FIG. 24 is another diagram of the second time-frequency resource and the third time-frequency resource according to an embodiment of this application. For a 4-port CRS, a shift parameter is 0, and for a 2-port CRS, a shift parameter is 1.

FIG. 20 to FIG. 24 are all based on an assumption that the first PDCCH candidate including the first REG is associated with a 3-symbol CORESET, and three REGs in a PDCCH in the PDCCH candidate include an RE carrying a PDCCH DM-RS and an RE carrying a PDCCH. If the PDCCH candidate is on the first three symbols of an NR slot and overlaps with the CRS, an RE that carries a PDCCH DM-RS and that overlaps with the RE carrying the CRS and an RE that carries a PDCCH and that overlaps with the RE carrying the CRS may be punctured, and then remaining REs, namely, the second time-frequency resource and the third time-frequency resource, are sent.

S 1902: If the second time-frequency resource includes at least one RE in the first REG, the network device sends a PDCCH DM-RS to the terminal device on the second RE set, and/or if the third time-frequency resource includes at least one RE in the first REG, the network device sends a PDCCH to the terminal device on the third RE set. Correspondingly, when the second time-frequency resource includes at least one RE in the first REG, the terminal device receives the PDCCH DM-RS from the network device on the second RE set, and/or when the third time-frequency resource includes at least one RE in the first REG, the terminal device receives the PDCCH from the network device on the third RE set.

S1903: The terminal device determines the second time-frequency resource and/or the third time-frequency resource in the first REG based on the first time-frequency resource.

Specifically, for descriptions of determining, by the terminal device, the second time-frequency resource and/or the third time-frequency resource in the first REG based on the first time-frequency resource, refer to the related descriptions of determining, by the network device, the second time-frequency resource and/or the third time-frequency resource in the first REG based on the first time-frequency resource in S1801. For brevity, details are not described herein in this application.

S1904: When the second time-frequency resource includes at least one RE in the first REG, the terminal device monitors a PDCCH DM-RS on the second time-frequency resource, and/or when the third time-frequency resource includes at least one RE in the first REG, the terminal device monitors a PDCCH on the third time-frequency resource.

Optionally, before S1901, the method 1900 may further include: The network device sends PDCCH configuration information and CRS configuration information to the terminal device. Correspondingly, the terminal device receives the PDCCH configuration information and the CRS configuration information from the network device.

Specifically, for descriptions of the PDCCH configuration information and the CRS configuration information, refer to the related descriptions of the PDCCH configuration information and the CRS configuration information in the method 700. For brevity, details are not described herein in this application.

In this embodiment, for specific descriptions of the first time-frequency resource, refer to the related descriptions of the first time-frequency resource in the method 700. For brevity, details are not described herein in this application.

According to the foregoing solution, even if the RE carrying the CRS overlaps with the RE carrying the PDCCH DM-RS and/or the PDCCH, in this solution, the PDCCH DM-RS may be transmitted on the second time-frequency resource, and/or the PDCCH may be transmitted on the third time-frequency resource. In this way, not only PDCCH DM-RSs and/or PDCCHs can be transmitted as many as possible, but also spectrum utilization can be improved.

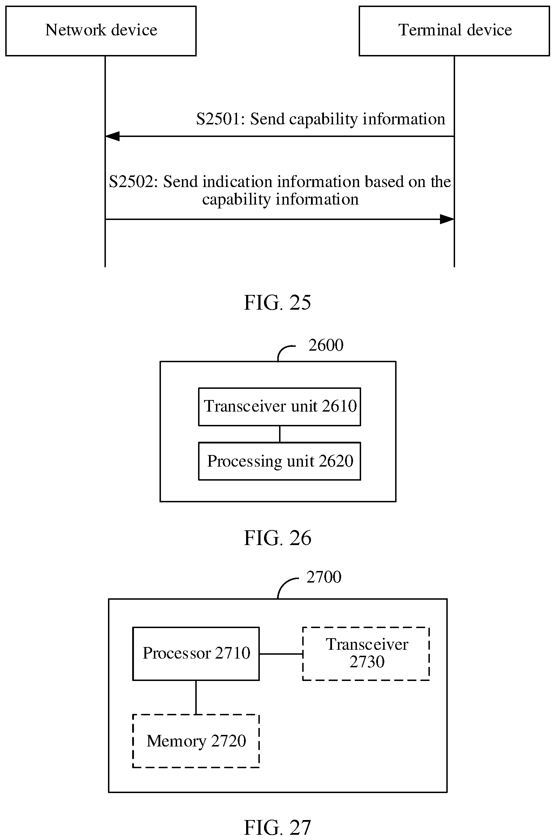

FIG. 25 is a diagram of a PDDCH monitoring method 2500 according to an embodiment of this application. As shown in FIG. 25, the method 2500 may include the following steps.

S2501: A terminal device sends capability information to a network device. Correspondingly, the network device receives the capability information from the terminal device.

The capability information indicates a specific capability of the terminal device. For example, the capability information may indicate that the terminal device has a capability of monitoring a PDCCH DM-RS on a second time-frequency resource in at least one case in S701, and/or the terminal device has a capability of monitoring a PDCCH on a third time-frequency resource in at least one case in S701.

S2502: The network device sends indication information to the terminal device based on the capability information. Correspondingly, the terminal device receives the indication information from the network device.

The indication information indicates a case, in S701 and S1901, of the second time-frequency resource used by the network device to transmit the PDCCH DM-RS, and/or indicates a case, in S701 and S1901, of the third time-frequency resource used by the network device to transmit the PDCCH.

In a possible implementation, that the network device sends the indication information to the terminal device based on the capability information may include any one of the following cases:
(1) The capability information indicates that the terminal device has a capability of monitoring a PDCCH DM-RS on the second time-frequency resource in at least one case in S701 and a capability of monitoring a PDCCH DM-RS on the second time-frequency resource in S1901, and the indication information indicates the second time-frequency resource used by the network device is in a case indicated in the capability information reported by the terminal device.
   For example, the capability information indicates that the terminal device has a capability of monitoring a PDCCH DM-RS on the second time-frequency resource in the second case and the third case in S701, and the indication information sent by the network device to the terminal device may indicate that the second time-frequency resource used by the network device is in the second case in S701.
(2) The capability information indicates that the terminal device has a capability of monitoring a PDCCH DM-RS on the second time-frequency resource in a case in S701 and S1901, and the indication information have no explicit indication. Therefore, the terminal device is implicitly indicated that the second time-frequency resource used by the network device is in a case indicated in the capability information reported by the terminal device.
   For example, the capability information indicates that the terminal device has a capability of monitoring a PDCCH DM-RS on the second time-frequency resource in the first case in S701, and the network device does not send the indication information to the terminal device. Therefore, the terminal device is implicitly indicated that the second time-frequency resource used by the network device is in the first case in S701.
(3) (Specified in a protocol) If the terminal device does not report the capability information, it is considered by default that the terminal device has a capability of monitoring a PDCCH DM-RS on the second time-frequency resource in at least one case in S701 and S1901. In this case, the indication information sent by the network device to the terminal device may indicate that the second time-frequency resource used by the network device is in a case in S701 and S1901.
   For example, if the terminal device does not report the capability information, the network device considers by default that the terminal device has a capability of monitoring a PDCCH DM-RS on the second time-frequency resource in the first case and the third case in S701. In this case, the indication information sent by the network device to the terminal device may indicate the second time-frequency resource used by the network device is in the first case in S701.
(4) (Specified in the protocol) If the terminal device does not report the capability information, it is considered by default that the terminal device has a capability of monitoring a PDCCH DM-RS on the second time-frequency resource in a case in S701 and S1901. In this case, the network device does not send the indication information to the terminal device either, and it is implicitly considered by default that the network device uses the second time-frequency resource in a case in S701 and S1901 in the capability of the terminal device.
   For example, the terminal device does not report the capability information, and the network device does not send the indication information to the terminal device. In this case, by using the pre-configuration method, it may be considered by default that the terminal device has a capability of monitoring a PDCCH DM-RS on the second time-frequency resource in one case in S701 and S1901, and the network device uses the second time-frequency resource in one case of the S701 and S1901 in the capability of the terminal device.
(5) (Specified in the protocol) If the terminal device does not report the capability information, it is considered by default that the terminal device has a capability of monitoring a PDCCH DM-RS on the second time-frequency resource in at least one case in S701 and S1901. In this case, the indication information indicates that the second time-frequency resource used by the network device is in a case in S701 and S1901.
   For example, if the terminal device does not report the capability information, the network device may consider by default that the terminal device has a capability of monitoring a PDCCH DM-RS on the second time-frequency resource in the first case in S701 and in S1901. In this case, the indication information sent by the network device to the terminal device may indicate that the network device uses the second time-frequency resource in S1901.
(6) The terminal device does not send the capability information to the network device, and the network device may send the indication information to the terminal device. The indication information indicates that the second time-frequency resource used by the network device is in a case in S701 and S1901. However, the terminal device may monitor a PDCCH DM-RS through the second time domain resource in a case different from that of the second time domain resource indicated by the indication information.
   For example, the terminal device does not send the capability information to the network device, and the indication information sent by the network device to the terminal device indicates that the second time-frequency resource used by the network device is in the third case in S1901.In this case, to simplify channel estimation, the terminal device may monitor a PDCCH DM-RS through the second time-frequency resource in any one case in S701.
(7) The capability information indicates that the terminal device has a capability of monitoring a PDCCH DM-RS on the second time-frequency resource in some cases in S701 and S1901. The network device sends the indication information to the terminal device, to indicate that the network device transmits a PDCCH DM-RS through the second time-frequency resource in a case, in S701 and S1901, other than the cases that are in S701 and S1901 and that are indicated in the capability information. Alternatively, the network device does not send the indication information to the terminal device, and implicitly indicates that the network device transmits a PDCCH DM-RS through the second time-frequency resource in a case, in S701 and S1901, other than the cases that are in S701 and S1901 and that are indicated in the capability information.

For example, the capability information indicates that the terminal device has a capability of monitoring a PDCCH DM-RS on the second time-frequency resource in the first case in S701, and the network device indicates, to the terminal device by using the indication information or not sending the indication information, that the second time-frequency resource used by the network device is in the second case in S1901.

According to the foregoing solution, a base station learns of a receiving solution of the terminal device, and may control a sending solution of the base station. In addition, PDCCH receiving performance in different solutions may be different. The base station learns of the receiving solution of the terminal device, and may select a PDCCH parameter, for example, an AL, to ensure PDCCH receiving performance.

Optionally, after the network device sends the indication information to the terminal device based on the capability information, the method 2500 may further include: The network device sends PDCCH configuration information and CRS configuration information to the terminal device. Correspondingly, the terminal device receives the PDCCH configuration information and the CRS configuration information from the network device.

Specifically, for descriptions of the PDCCH configuration information and the CRS configuration information, refer to the related descriptions of the PDCCH configuration information and the CRS configuration information in the method 700. For brevity, details are not described herein in this application.

Optionally, after the network device sends the PDCCH configuration information and the CRS configuration information to the terminal device, the method 2500 may further include the steps in the method 700. For example, the method 2500 may further include: The network device determines the second time-frequency resource and/or the third time-frequency resource in the first REG based on the first time-frequency resource. When the second time-frequency resource includes at least one RE in the first REG, the network device sends a PDCCH DM-RS to the terminal device on the second RE set, and/or when the third time-frequency resource includes at least one RE in the first REG, the network device sends a PDCCH to the terminal device on the third RE set. The terminal device determines the second time-frequency resource and/or the third time-frequency resource in the first REG based on the first time-frequency resource. When the second time-frequency resource includes at least one RE in the first REG, the terminal device monitors a PDCCH DM-RS on the second time-frequency resource, and/or when the third time-frequency resource includes at least one RE in the first REG, the terminal device monitors a PDCCH on the third time-frequency resource.

Specifically, for specific descriptions of the foregoing steps, refer to the related descriptions in the method 700. For brevity, details are not described herein in this application.

In another implementation, as shown in FIG. 25, the method 2500 may include the following steps.

S2501: A terminal device sends capability information to a network device. Correspondingly, the network device receives the capability information from the terminal device.

The capability information indicates a specific capability of the terminal device. For example, the capability information indicates that the terminal device has at least one of the following capabilities:
(1) a capability of monitoring a PDCCH on a first PDCH candidate when at least one RE in the first PDCCH candidate overlaps with at least one RE in a first time-frequency resource;
(2) a capability of monitoring the PDCCH on the first PDCH candidate when at least one RE in the first PDCCH candidate overlaps with at least one RE in the first time-frequency resource, and when at least one RE in an RE set on only the 1^{st} symbol in the first PDCCH candidate overlaps with at least one RE in the first time-frequency resource, where in other words, when at least one RE in the first PDCCH candidate overlaps with at least one RE in the first time-frequency resource, if at least one RE in a time-frequency resource on a symbol other than the 1^{st} symbol in the first PDCCH candidate overlaps with at least one RE in the first time-frequency resource, the terminal device cannot monitor the PDCCH on the first PDCCH candidate;
(3) a capability of monitoring the PDCCH on the first PDCH candidate when at least one RE in the first PDCCH candidate overlaps with at least one RE in the first time-frequency resource, and when at least one RE in an RE set on only one symbol in the first PDCCH candidate overlaps with at least one RE in the first time-frequency resource, where in other words, when at least one RE in the first PDCCH candidate overlaps with at least one RE in the first time-frequency resource, if at least two symbols exist in the first PDCCH candidate, and at least one RE in a time-frequency resource on each of the at least two symbols overlaps with at least one RE in the first time-frequency resource, the terminal device cannot monitor the PDCCH on the first PDCCH candidate;
(4) a capability of monitoring the PDCCH on the first PDCH candidate when at least one RE in the first PDCCH candidate overlaps with at least one RE in the first time-frequency resource, and when at least one RE in RE sets on only the 1^{st} symbol and the 2^{nd} symbol in the first PDCCH candidate overlaps with at least one RE in the first time-frequency resource, where in other words, when at least one RE in the first PDCCH candidate overlaps with at least one RE in the first time-frequency resource, if at least one RE in a time-frequency resource on the 3^{rd} symbol in the first PDCCH candidate overlaps with at least one RE in the first time-frequency resource, the terminal device cannot monitor the PDCCH on the first PDCCH candidate;
(5) a capability of monitoring the PDCCH on the first PDCH candidate when at least one RE in the first PDCCH candidate overlaps with at least one RE in the first time-frequency resource, and when at least one RE in RE sets on only the 1^{st} symbol and/or the last symbol in the first PDCCH candidate overlaps with at least one RE in the first time-frequency resource, where in other words, when at least one RE in the first PDCCH candidate overlaps with at least one RE in the first time-frequency resource, if at least one RE in a time-frequency resource on at least one symbol other than the 1^{st} symbol, or the last symbol, or the 1^{st} symbol and the last symbol in the first PDCCH candidate overlaps with at least one RE in the first time-frequency resource, the terminal device cannot monitor the PDCCH on the first PDCCH candidate;
(6) a capability of monitoring the PDCCH on the first PDCH candidate when at least one RE in the first PDCCH candidate overlaps with at least one RE in the first time-frequency resource, and when there are a maximum of Q sets of first time-frequency resource-related configurations, and at least one RE in the first time-frequency resource indicated by any one of the Q sets of first time-frequency resource-related configurations overlaps with at least one RE in the first PDCCH candidate, where in other words, when at least one RE in the first PDCCH candidate overlaps with at least one RE in the first time-frequency resource, if there are more than Q sets of first time-frequency resource-related configurations, and at least one RE in the first time-frequency resource indicated by any one of the more than Q sets of first time-frequency resource-related configurations overlaps with at least one RE in the first PDCCH candidate, the terminal device cannot monitor the PDCCH on the first PDCCH candidate, where Q is a positive integer, and Q is a value preset in the protocol, or is a value determined by the network device based on a capability reported by the terminal device;
(7) a capability of monitoring the PDCCH on the first PDCH candidate when at least one RE in the first PDCCH candidate overlaps with at least one RE in the first time-frequency resource, and when any RE in an RE set on at least one symbol in the first PDCCH candidate does not overlap with any RE in the first time-frequency resource, where in other words, when at least one RE in the first PDCCH candidate overlaps with at least one RE in the first time-frequency resource, if at least one RE in an RE set on each of all symbols in the first PDCCH candidate overlaps with at least one RE in the first time-frequency resource, the terminal device cannot monitor the PDCCH on the first PDCCH candidate; and a terminal having this capability may need to perform channel estimation by using a PDCCH DM-RS on a symbol of a first PDCCH candidate that does not overlap with the first time-frequency resource, and does not perform channel estimation by using a PDCCH DM-RS on a symbol of the first PDCCH candidate that overlaps with the first time-frequency resource, to reduce channel estimation complexity and ensure PDCCH detection performance.
(8) a capability of monitoring the PDCCH on the first PDCCH candidate when at least one RE in the first PDCCH candidate overlaps with at least one RE in the first time-frequency resource, and when at least one RE in an RE set on a maximum of one symbol in the first PDCCH candidate overlaps with at least one RE in the first time-frequency resource, where in other words, when at least one RE in the first PDCCH candidate overlaps with at least one RE in the first time-frequency resource, if at least two symbols exist in the first PDCCH candidate, and at least one RE in an RE set on any of the at least two symbols overlaps with at least one RE in the first time-frequency resource, the terminal device cannot monitor the PDCCH on the first PDCCH candidate;
(9) a capability of monitoring the PDCCH on the first PDCCH candidate when at least one RE in the first PDCCH candidate overlaps with at least one RE in the first time-frequency resource, and when all symbols in the first PDCCH candidate are within the first three symbols of an NR slot, where in other words, when at least one RE in the first PDCCH candidate overlaps with at least one RE in the first time-frequency resource, if at least one symbol in the first PDCCH candidate does not belong to the first three symbols of the NR slot, the terminal device cannot monitor the PDCCH on the first PDCCH candidate;
(10) a capability of monitoring the PDCCH on the first PDCCH candidate when at least one RE in the first PDCCH candidate overlaps with at least one RE in the first time-frequency resource, if at least one RE in a time-frequency resource on a symbol other than the 1^{st} symbol in the first PDCCH candidate overlaps with at least one RE in the first time-frequency resource;
(11) a capability of monitoring the PDCCH on the first PDCCH candidate by the terminal device when at least one RE in the first PDCCH candidate overlaps with at least one RE in the first time-frequency resource, if at least two symbols exist in the first PDCCH candidate, and at least one RE in a time-frequency resource on each of the at least two symbols overlaps with at least one RE in the first time-frequency resource;
(12) a capability of monitoring the PDCCH on the first PDCCH candidate by the terminal device when at least one RE in the first PDCCH candidate overlaps with at least one RE in the first time-frequency resource, if at least one RE in a time-frequency resource on the 3^{rd} symbol in the first PDCCH candidate overlaps with at least one RE in the first time-frequency resource;
(13) a capability of monitoring the PDCCH on the first PDCCH candidate by the terminal device when at least one RE in the first PDCCH candidate overlaps with at least one RE in the first time-frequency resource, if at least one RE in a time-frequency resource on at least one symbol other than the 1^{st} symbol, or the last symbol, or the 1^{st} symbol and the last symbol in the first PDCCH candidate overlaps with at least one RE in the first time-frequency resource;
(14) a capability of monitoring the PDCCH on the first PDCCH candidate by the terminal device when at least one RE in the first PDCCH candidate overlaps with at least one RE in the first time-frequency resource, if there are more than Q sets of first time-frequency resource-related configurations, and at least one RE in the first time-frequency resource indicated by any one of the more than Q sets of first time-frequency resource-related configurations overlaps with at least one RE in the first PDCCH candidate, where Q is a positive integer, and Q is a value preset in the protocol, or is a value determined by the network device based on a capability reported by the terminal device;
(15) a capability of monitoring the PDCCH on the first PDCCH candidate by the terminal device when at least one RE in the first PDCCH candidate overlaps with at least one RE in the first time-frequency resource, if at least one RE in an RE set on each of all symbols in the first PDCCH candidate overlaps with at least one RE in the first time-frequency resource;
(16) a capability of monitoring the PDCCH on the first PDCCH candidate by the terminal device when at least one RE in the first PDCCH candidate overlaps with at least one RE in the first time-frequency resource, if at least two symbols exist in the first PDCCH candidate, and at least one RE in an RE set on any one of the at least two symbols overlaps with at least one RE in the first time-frequency resource;
(17) a capability of monitoring the PDCCH on the first PDCCH candidate by the terminal device when at least one RE in the first PDCCH candidate overlaps with at least one RE in the first time-frequency resource, if at least one symbol in the first PDCCH candidate does not belong to the first three symbols of an NR slot;
(18) a capability of monitoring the PDCCH on the first PDCCH candidate by the terminal device when at least one RE in the first PDCCH candidate overlaps with at least one RE in the first time-frequency resource, if at least one symbol in the first PDCCH candidate does not belong to the first four symbols of an NR slot; (19) a capability of monitoring the PDCCH on the first PDCH candidate when at least one RE in the first PDCCH candidate overlaps with at least one RE in the first time-frequency resource, where detection performance of the PDCCH is receiving performance 1, the receiving performance 1 and receiving performance 2 are two different types of PDCCH detection performance, and the receiving performance 1 and the receiving performance 2 may be two types of receiving performance preset in the protocol; and based on reporting of this capability, the network device can select a PDCCH candidate more efficiently, for example, determine a PDCCH aggregation level more efficiently;
(20) a capability of monitoring the PDCCH on the first PDCH candidate when at least one RE in the first PDCCH candidate overlaps with at least one RE in the first time-frequency resource, where detection performance of the PDCCH is receiving performance 2, receiving performance 1 and the receiving performance 2 are two different types of PDCCH detection performance, and the receiving performance 1 and the receiving performance 2 may be two types of receiving performance preset in the protocol; and based on reporting of this capability, the network device can select a PDCCH candidate more efficiently, for example, determine a PDCCH aggregation level more efficiently;
(21) a capability of monitoring the PDCCH on the first PDCCH candidate by the terminal device when at least one RE in the first PDCCH candidate overlaps with at least one RE in the first time-frequency resource, and the first PDCCH candidate belongs to a UE-specific search space USS;
(22) a capability of monitoring the PDCCH on the first PDCCH candidate by the terminal device when at least one RE in the first PDCCH candidate overlaps with at least one RE in the first time-frequency resource, and the first PDCCH candidate belongs to the UE-specific search space USS and a type 3 common search space type3 CSS;
(23) a capability of monitoring the PDCCH on the first PDCCH candidate by the terminal device when at least one RE in the first PDCCH candidate overlaps with at least one RE in the first time-frequency resource, and a size (REG bundle size) of a REG bundle of a CORESET associated with the first PDCCH candidate is 6;
(24) a capability of monitoring the PDCCH on the first PDCCH candidate by the terminal device when at least one RE in the first PDCCH candidate overlaps with at least one RE in the first time-frequency resource, and a size (REG bundle size) of a REG bundle of the CORESET associated with the first PDCCH candidate is 2;
(25) a capability of monitoring the PDCCH on the first PDCCH candidate by the terminal device when at least one RE in the first PDCCH candidate overlaps with at least one RE in the first time-frequency resource, and a size (REG bundle size) of a REG bundle of the CORESET associated with the first PDCCH candidate is 3;
(26) a capability of monitoring the PDCCH on the first PDCCH candidate by the terminal device when at least one RE in the first PDCCH candidate overlaps with at least one RE in the first time-frequency resource, and precoderGranularity of the CORESET associated with the first PDCCH candidate is set to allContiguousRBs; and
(27) a capability of monitoring the PDCCH on the first PDCCH candidate by the terminal device when at least one RE in the first PDCCH candidate overlaps with at least one RE in the first time-frequency resource, and precoderGranularity of the CORESET associated with the first PDCCH candidate is set to sameAsREG-bundle.

For specific descriptions of the first time-frequency resource, refer to the related descriptions of the first time-frequency resource in the method 700. For brevity, details are not described herein in this application.

S2502: The network device sends indication information to the terminal device based on the capability information. Correspondingly, the terminal device receives the indication information from the network device.

Embodiments described in this specification may be independent solutions, or may be combined based on internal logic. All these solutions fall within the protection scope of this application.

It may be understood that, in the foregoing method embodiments, methods and operations implemented by the terminal device may further be implemented by a component (for example, a chip or a circuit) that may be used in the terminal device, and methods and operations implemented by the network device may further be implemented by a component (for example, a chip or a circuit) that may be used in the network device.

The foregoing describes in detail the method provided in embodiments of this application with reference to FIG. 7 to FIG. 25. The following describes in detail a communication apparatus provided in embodiments of this application with reference to FIG. 26 to FIG. 29. It should be understood that descriptions of apparatus embodiments correspond to the descriptions of the method embodiments. Therefore, for content that is not described in detail, refer to the method embodiments. For brevity, details are not described herein again.

The foregoing mainly describes the solutions provided in embodiments of this application from a perspective of interaction between network elements. It may be understood that, to implement the foregoing functions, each network element such as a transmitter device or a receiver device includes a corresponding hardware structure and/or software module for performing each function. A person skilled in the art should be able to be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. Descriptions are provided below by using an example in which each functional module is obtained through division based on each corresponding function.

FIG. 26 is a schematic block diagram of a communication apparatus 2600 according to an embodiment of this application. The communication apparatus 2600 includes a transceiver unit 2610 and a processing unit 2620. The transceiver unit 2610 may implement a corresponding communication function, and the processing unit 2610 is configured to process data. The transceiver unit 2610 may also be referred to as a communication interface or a communication unit.

Optionally, the communication apparatus 2600 may further include a storage unit. The storage unit may be configured to store instructions and/or data. The processing unit 2620 may read the instructions and/or the data in the storage unit, so that the communication apparatus implements the foregoing method embodiments.

The communication apparatus 2600 may be configured to perform an action performed by the terminal device in the foregoing method embodiments. In this case, the communication apparatus 2600 may be a terminal device or a component that can be configured in the terminal device. The transceiver unit 2610 is configured to perform receiving and sending-related operations on a terminal device side in the foregoing method embodiments. The processing unit 2620 is configured to perform a processing-related operation on the terminal device side in the foregoing method embodiments.

Alternatively, the communication apparatus 2600 may be configured to perform an action performed by the network device in the foregoing method embodiments. In this case, the communication apparatus 2600 may be a network device or a component that can be configured in the network device. The transceiver unit 2610 is configured to perform receiving and sending-related operations on a network device side in the foregoing method embodiments. The processing unit 2620 is configured to perform a processing-related operation on the network device side in the foregoing method embodiments.

In a design, the communication apparatus 2600 is configured to perform the actions performed by the terminal device in the embodiment shown in FIG. 7, the transceiver unit 2610 is configured to perform S702, and the processing unit 2620 is configured to perform S703 and S704.

In an example, the communication apparatus 2600 is configured to perform the actions performed by the terminal device in the embodiment shown in FIG. 16, and the transceiver unit 2610 is configured to perform S1601.

In an example, the communication apparatus 2600 is configured to perform the actions performed by the terminal device in the embodiment shown in FIG. 17, the transceiver unit 2610 is configured to perform S1701, S1702, and S1703, and the processing unit 2620 is configured to perform S1704.

In another example, the communication apparatus 2600 is configured to perform the actions performed by the terminal device in the embodiment shown in FIG. 18, the transceiver unit 2610 is configured to perform S 1801, and the processing unit 2620 is configured to perform S1802.

In another example, the communication apparatus 2600 is configured to perform the actions performed by the terminal device in the embodiment shown in FIG. 19, the transceiver unit 2610 is configured to perform S 1902, and the processing unit 2620 is configured to perform S 1903 and S1904.

In another example, the communication apparatus 2600 is configured to perform the actions performed by the terminal device in the embodiment shown in FIG. 25, and the transceiver unit 2610 is configured to perform S2501 and S2502.

The communication apparatus 2600 may implement steps or procedures performed by the terminal device in the method 700, the method 1600, the method 1700, the method 1800, the method 1900, and the method 2500 according to embodiments of this application. The communication apparatus 2600 may include units configured to perform a method performed by the terminal device in the method 700 in FIG. 7, the method 1600 in FIG. 16, the method 1700 in FIG. 17, the method 1800 in FIG. 18, the method 1900 in FIG. 19, and the method 2500 in FIG. 25. In addition, the units in the communication apparatus 2600 and the foregoing other operations and/or functions are respectively used to implement corresponding procedures of the method 700 in FIG. 7, the method 1600 in FIG. 16, the method 1700 in FIG. 17, the method 1800 in FIG. 18, the method 1900 in FIG. 19, and the method 2500 in FIG. 25.

When the communication apparatus 2600 is configured to perform the method 700 in FIG. 7, the transceiver unit 2610 may be configured to perform step 702 in the method 700, and the processing unit 2620 may be configured to perform steps 703 and 704 in the method 700.

When the communication apparatus 2600 is configured to perform the method 1600 in FIG. 16, the transceiver unit 2610 may be configured to perform step 1601 in the method 1600.

When the communication apparatus 2600 is configured to perform the method 1700 in FIG. 17, the transceiver unit 2610 may be configured to perform steps 1701, 1702, and 1703 in the method 1700, and the processing unit 2620 may be configured to perform step 1704 in the method 1700.

When the communication apparatus 2600 is configured to perform the method 1800 in FIG. 18, the transceiver unit 2610 may be configured to perform step 1801 in the method 1800, and the processing unit 2620 may be configured to perform step 1802 in the method 1800.

When the communication apparatus 2600 is configured to perform the method 1900 in FIG. 19, the transceiver unit 2610 may be configured to perform step 1902 in the method 1900, and the processing unit 2620 may be configured to perform steps 1903 and 1904 in the method 1900.

When the communication apparatus 2600 is configured to perform the method 2500 in FIG. 25, the transceiver unit 2610 may be configured to perform steps 2501 and 2502 in the method 2500.

It should be understood that a specific process in which the units perform the foregoing corresponding steps is described in detail in the foregoing method embodiments, and for brevity, details are not described herein.

In another design, the communication apparatus 2600 is configured to perform the actions performed by the network device in the embodiment shown in FIG. 7, the transceiver unit 2610 is configured to perform S702, and the processing unit 2620 is configured to perform S701.

In an example, the communication apparatus 2600 is configured to perform the actions performed by the network device in the embodiment shown in FIG. 16, and the transceiver unit 2610 is configured to perform S1601.

In an example, the communication apparatus 2600 is configured to perform the actions performed by the network device in the embodiment shown in FIG. 17, and the transceiver unit 2610 is configured to perform S1701, S1702, and S1703.

In another example, the communication apparatus 2600 is configured to perform the actions performed by the network device in the embodiment shown in FIG. 18, and the transceiver unit 2610 is configured to perform S1801.

In another example, the communication apparatus 2600 is configured to perform the actions performed by the network device in the embodiment shown in FIG. 19, the transceiver unit 2610 is configured to perform S1902, and the processing unit 2620 is configured to perform S1901.

In another example, the communication apparatus 2600 is configured to perform the actions performed by the network device in the embodiment shown in FIG. 25, and the transceiver unit 2610 is configured to perform S2501 and S2502.

The communication apparatus 2600 may implement steps or procedures performed by the network device in the method 700, the method 1600, the method 1700, the method 1800, the method 1900, and the method 2500 according to embodiments of this application. The communication apparatus 2600 may include units configured to perform a method performed by the network device in the method 700 in FIG. 7, the method 1600 in FIG. 16, the method 1700 in FIG. 17, the method 1800 in FIG. 18, the method 1900 in FIG. 19, and the method 2500 in FIG. 25. In addition, the units in the communication apparatus 2600 and the foregoing other operations and/or functions are respectively used to implement corresponding procedures of the method 700 in FIG. 7, the method 1600 in FIG. 16, the method 1700 in FIG. 17, the method 1800 in FIG. 18, the method 1900 in FIG. 19, and the method 2500 in FIG. 25.

When the communication apparatus 2600 is configured to perform the method 700 in FIG. 7, the transceiver unit 2610 may be configured to perform step 702 in the method 700, and the processing unit 2620 may be configured to perform step 701 in the method 700.

When the communication apparatus 2600 is configured to perform the method 1600 in FIG. 16, the transceiver unit 2610 may be configured to perform step 1601 in the method 1600.

When the communication apparatus 2600 is configured to perform the method 1700 in FIG. 17, the transceiver unit 2610 may be configured to perform steps 1701, 1702, and 1703 in the method 1700.

When the communication apparatus 2600 is configured to perform the method 1800 in FIG. 18, the transceiver unit 2610 may be configured to perform step 1801 in the method 1800.

When the communication apparatus 2600 is configured to perform the method 1900 in FIG. 19, the transceiver unit 2610 may be configured to perform step 1902 in the method 1900, and the processing unit 2610 may be configured to perform step 1901 in the method 1900.

When the communication apparatus 2600 is configured to perform the method 2500 in FIG. 25, the transceiver unit 2610 may be configured to perform steps 2501 and 2502 in the method 2500.

The processing unit 2620 in the foregoing embodiment may be implemented by at least one processor or a processor-related circuit. The transceiver unit 2610 may be implemented by a transceiver or a transceiver-related circuit. The transceiver unit 2610 may also be referred to as a communication unit or a communication interface. The storage unit may be implemented by at least one memory.

As shown in FIG. 27, an embodiment of this application further provides a communication apparatus 2700. The communication apparatus 2700 includes a processor 2710. The processor 2710 is coupled to a memory 2720. The memory 2720 is configured to store a computer program or instructions and/or data. The processor 2710 is configured to execute the computer program or the instructions and/or the data stored in the memory 2720, so that the method in the foregoing method embodiments is performed.

Optionally, the communication apparatus 2700 includes one or more processors 2710.

Optionally, as shown in FIG. 27, the communication apparatus 2700 may further include the memory 2720.

Optionally, the communication apparatus 2700 may include one or more memories 2720.

Optionally, the memory 2720 may be integrated with the processor 2710, or may be disposed separately.

Optionally, as shown in FIG. 27, the communication apparatus 2700 may further include a transceiver 2730. The transceiver 2730 is configured to receive and/or send a signal. For example, the processor 2710 is configured to control the transceiver 2730 to receive and/or send a signal.

In a solution, the communication apparatus 2700 is configured to implement the operations performed by the terminal device in the foregoing method embodiments.

For example, the processor 2710 is configured to implement a processing-related operation performed by the terminal device in the foregoing method embodiments, and the transceiver 2730 is configured to implement receiving and sending-related operations performed by the terminal device in the foregoing method embodiments.

In another solution, the communication apparatus 2700 is configured to implement the operations performed by the network device in the foregoing method embodiments.

For example, the processor 2710 is configured to implement a processing-related operation performed by the network device in the foregoing method embodiments, and the transceiver 2730 is configured to implement receiving and sending-related operations performed by the network device in the foregoing method embodiments.

An embodiment of this application further provides a communication apparatus 2800. The communication apparatus 2800 may be a terminal device or a chip. The communication apparatus 2800 may be configured to perform the operation performed by the terminal device in the foregoing method embodiments.

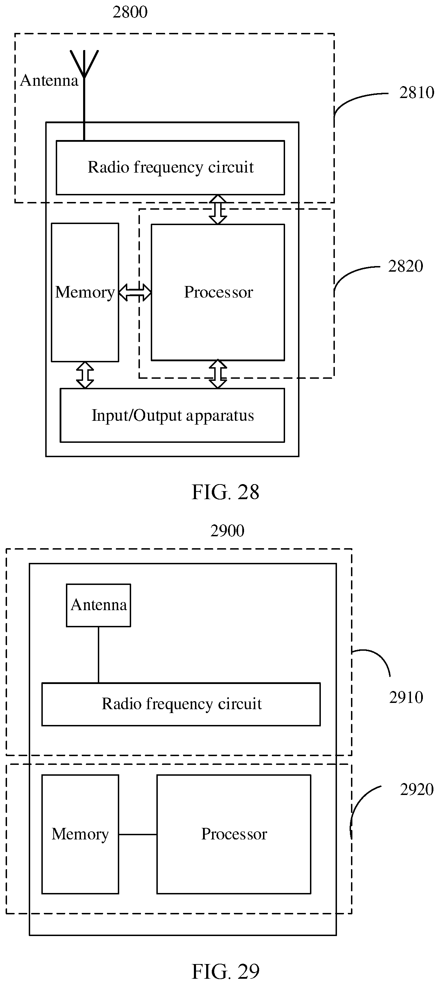

When the communication apparatus 2800 is a terminal device, FIG. 28 is a simplified diagram of a structure of the terminal device 2800. As shown in FIG. 28, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 28 shows only one memory and one processor. An actual terminal device product may include one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 28, the terminal device includes a transceiver unit 2810 and a processing unit 2820. The transceiver unit 2810 may also be referred to as a transceiver, a transceiver machine, a transceiver apparatus, or the like. The processing unit 2820 may also be referred to as a processor, a processing board, a processing module, a processing apparatus, or the like.

Optionally, a component configured to implement the receiving function in the transceiver unit 2810 may be considered as a receiving unit, and a component configured to implement the sending function in the transceiver unit 2810 may be considered as a sending unit. That is, the transceiver unit 2810 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

For example, in an implementation, the transceiver unit 2810 is configured to perform transmit and receive actions on a terminal device side in FIG. 7, and the processing unit 2820 is configured to perform a processing action on the terminal device side in FIG. 7.

For another example, in an implementation, the transceiver unit 2810 is configured to perform transmit and receive actions on a terminal device side in FIG. 16, and the processing unit 2820 is configured to perform a processing action on the terminal device side in FIG. 16.

For another example, in an implementation, the transceiver unit 2810 is configured to perform transmit and receive actions on a terminal device side in FIG. 17, and the processing unit 2820 is configured to perform a processing action on the terminal device side in FIG. 15.

For another example, in an implementation, the transceiver unit 2810 is configured to perform transmit and receive actions on a terminal device side in FIG. 18, and the processing unit 2820 is configured to perform a processing action on the terminal device side in FIG. 15.

For another example, in an implementation, the transceiver unit 2810 is configured to perform transmit and receive actions on a terminal device side in FIG. 19, and the processing unit 2820 is configured to perform a processing action on the terminal device side in FIG. 15.

For another example, in an implementation, the transceiver unit 2810 is configured to perform transmit and receive actions on a terminal device side in FIG. 25.

It should be understood that FIG. 28 is merely an example rather than a limitation, and the terminal device including the transceiver unit and the processing unit may not rely on the structure shown in FIG. 28.

When the communication apparatus 2800 is a chip, the chip includes a transceiver unit and a processing unit. The transceiver unit may be an input/output circuit or a communication interface. The processing unit may be a processor, a microprocessor, or an integrated circuit integrated on the chip.

An embodiment of this application further provides a communication apparatus 2900. The communication apparatus 2900 may be a network device or a chip. The communication apparatus 2900 may be configured to perform the operation performed by the network device in the foregoing method embodiments.

When the communication apparatus 2900 is a network device, for example, a base station, FIG. 29 is a diagram of a simplified structure of a base station 2900. The base station includes a part 2910 and a part 2920. The part 2910 is mainly configured to receive and transmit a radio frequency signal and perform conversion between a radio frequency signal and a baseband signal. The part 2920 is mainly configured to process the baseband signal and control the base station. The part 2910 may be usually referred to as a transceiver unit, a transceiver machine, a transceiver circuit, a transceiver, or the like. The part 2920 is usually a control center of the base station, and may be usually referred to as a processing unit, and is configured to control the base station to perform a processing operation on a network device side in the foregoing method embodiments.

The transceiver unit of the part 2910 may also be referred to as a transceiver machine, a transceiver, or the like, and includes an antenna and a radio frequency circuit. The radio frequency circuit is mainly configured to perform radio frequency processing. Optionally, a component configured to implement a receiving function in the part 2910 may be considered as a receiving unit, and a component configured to implement a sending function may be considered as a sending unit. That is, the part 2910 includes the receiving unit and the sending unit. The receiving unit may also be referred to as a receiver, a receiver machine, a receiver circuit, or the like. The sending unit may be referred to as a transmitter, a transmitter machine, a transmitter circuit, or the like.

The part 2920 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors at the same time.

For example, in an implementation, the transceiver unit in the part 2910 is configured to perform receiving and sending-related steps performed by the network device in the embodiment shown in FIG. 7, and the part 2920 is configured to perform a processing-related step performed by the network device in the embodiment shown in FIG. 7.

For example, in another implementation, the transceiver unit in the part 2910 is configured to perform receiving and sending-related steps performed by the network device in the embodiment shown in FIG. 16, and the part 2920 is configured to perform a processing-related step performed by the network device in the embodiment shown in FIG. 16.

For example, in another implementation, the transceiver unit in the part 2910 is configured to perform receiving and sending-related steps performed by the network device in the embodiment shown in FIG. 17.

For example, in another implementation, the transceiver unit in the part 2910 is configured to perform receiving and sending-related steps performed by the network device in the embodiment shown in FIG. 18.

For example, in another implementation, the transceiver unit in the part 2910 is configured to perform receiving and sending-related steps performed by the network device in the embodiment shown in FIG. 19.

For example, in another implementation, the transceiver unit in the part 2910 is configured to perform receiving and sending-related steps performed by the network device in the embodiment shown in FIG. 25.

It should be understood that FIG. 29 is merely an example rather than a limitation, and the network device including the transceiver unit and the processing unit may not rely on the structure shown in FIG. 29.

When the communication apparatus 2900 is a chip, the chip includes a transceiver unit and a processing unit. The transceiver unit may be an input/output circuit or a communication interface. The processing unit is a processor, a microprocessor, or an integrated circuit integrated on the chip.

Embodiments of this application further provide a computer-readable storage medium. The computer-readable storage medium stores computer instructions for implementing the method performed by the terminal device or the method performed by the network device in the foregoing method embodiments.

For example, when a computer program is executed by a computer, the computer is enabled to implement the method performed by the terminal device or the method performed by the network device in the foregoing method embodiments.

Embodiments of this application further provide a computer program product including instructions. When the instructions are executed by a computer, the computer is enabled to implement the method performed by the terminal device or the method performed by the network device in the foregoing method embodiments.

Embodiments of this application further provide a communication system. The communication system includes the network device and the terminal device in the foregoing embodiments.

It may be clearly understood by a person skilled in the art that, for the purpose of convenient and brief description, for explanations of related content and beneficial effects in any of the foregoing provided communication apparatuses, refer to corresponding method embodiments provided above. Details are not described herein again.

In embodiments of this application, the terminal device or the network device may include a hardware layer, an operating system layer running on the hardware layer, and an application layer running on the operating system layer. The hardware layer may include hardware such as a central processing unit (central processing unit, CPU), a memory management unit (memory management unit, MMU), and memory (also referred to as main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

A specific structure of an execution body of the method provided in embodiments of this application is not particularly limited in embodiments of this application, provided that communication can be performed according to the method provided in embodiments of this application by running a program that records code of the method provided in embodiments of this application. For example, the method provided in embodiments of this application may be performed by a terminal device or a network device, or may be performed by a functional module that is in the terminal device or the network device and that can invoke and execute a program.

Various aspects or features of this application may be implemented as methods, apparatuses, or products using standard programming and/or engineering techniques. The term "artificial article" used herein may cover a computer program accessible from any computer-readable component, carrier, or medium.

The computer-readable storage medium may be any usable medium accessible by the computer, or a data storage device, for example, a server or a data center, integrating one or more usable media. The usable medium (or the computer-readable medium) may include, for example, but is not limited to, various media that can store program code such as a magnetic medium or a magnetic storage device (for example, a floppy disk, a hard disk drive (for example, a removable hard disk drive), or a magnetic tape), an optical medium (for example, an optical disc, a compact disc (compact disc, CD), or a digital versatile disc (digital versatile disc, DVD)), a smart card, and a flash memory component (for example, an erasable programmable read-only memory (erasable programmable read-only memory, EPROM), a card, a stick, or a key drive), or a semiconductor medium (for example, a solid-state disk (solid-state disk, SSD), a USB flash drive, a read-only memory (read-only memory, ROM), or a random access memory (random access memory, RAM)).

The various storage media described in this specification may represent one or more devices and/or other machine-readable media that are configured to store information. The term "machine-readable media" may include, but is not limited to: radio channels and various other media that can store, contain, and/or carry instructions and/or data.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory mentioned in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other suitable type of memory.

All or some of the foregoing embodiments may be implemented by using software, hardware, firmware, or any combination thereof.

When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims and this specification.

## Claims

1. A physical downlink control channel PDCCH monitoring method, comprising:
determining, by a terminal device, a second time-frequency resource and/or a third time-frequency resource in a first resource element group REG based on a first time-frequency resource, wherein the second time-frequency resource may be used for transmitting a PDCCH demodulation reference signal DM-RS sent by a network device, and the third time-frequency resource may be used for transmitting the PDCCH sent by the network device; and
when the second time-frequency resource comprises at least one RE in the first REG, monitoring, by the terminal device, the PDCCH DM-RS on the second time-frequency resource; and/or
when the third time-frequency resource comprises at least one RE in the first REG, monitoring, by the terminal device, the PDCCH on the third time-frequency resource, wherein
the second time-frequency resource is a part of a plurality of REs in the first REG that are preset in a protocol for PDCCH DM-RS transmission, and/or the third time-frequency resource is a part of a plurality of REs in the first REG that are preset in the protocol for PDCCH transmission.

2. A physical downlink control channel PDCCH monitoring method, comprising:
determining, by a network device, a second time-frequency resource and/or a third time-frequency resource in a first resource element group REG based on a first time-frequency resource, wherein the second time-frequency resource may be used for transmitting a PDCCH demodulation reference signal DM-RS sent by the network device, and the third time-frequency resource may be used for transmitting the PDCCH sent by the network device; and
when the second time-frequency resource comprises at least one RE in the first REG, sending, by the network device, the PDCCH DM-RS on the second RE set; and/or
when the third time-frequency resource comprises at least one RE in the first REG, sending, by the network device, the PDCCH on the third RE set, wherein
the second time-frequency resource is a part of a plurality of REs in the first REG that are preset in a protocol for PDCCH DM-RS transmission, and/or the third time-frequency resource is a part of a plurality of REs in the first REG that are preset in the protocol for PDCCH transmission.

3. The method according to claim 1 or 2, wherein the first time-frequency resource comprises at least one type of the following REs:
REs on which the network device indicates not to allow PDCCH DM-RS transmission, REs on which the network device indicates not to allow PDCCH transmission, REs to which a cell-specific reference signal CRS is mapped, REs to which a channel state indication reference signal CSI-RS is mapped, REs to which a tracking reference signal TRS is mapped, or REs comprised in a rate matching resource.

4. The method according to any one of claims 1 to 3, wherein
the first REG belongs to a first REG set REG SET, and patterns of REs used for PDCCH DM-RS transmission comprised in all REGs in the first REG set are the same; and/or
patterns of REs used for PDCCH transmission comprised in all the REGs in the first REG set are the same; and
all the REGs in the first REG set are comprised in a PDCCH candidate set, and/or all the REGs in the first REG set are comprised in a same control resource set CORESET, and/or all the REGs in the first REG set are comprised in a same search space set.

5. The method according to claim 4, wherein time domain symbols of all the REGs in the first REG set are the same as time domain symbols of the first REG, resource blocks RBs of all the REGs in the first REG set belong to a first RB set, and the first RB set comprises any one type of the following RBs:
RBs of a control channel element CCE comprising the first REG, RBs of a first PDCCH candidate comprising the first REG, RBs of a REG bundle comprising the first REG, RBs of a search space set comprising the first REG, a group of contiguous RBs in the CORESET comprising the first REG, RBs of the CORESET comprising the first REG, RBs comprising N adjacent RBs configured by the network device, or RBs comprising N adjacent RBs preset in the protocol, wherein the first PDCCH candidate comprising the first REG belongs to the PDCCH candidate set, and N is an integer greater than or equal to 2.

6. The method according to claim 5, wherein a precoder granularity parameter of the CORESET comprising the first REG in different configurations corresponds to different first RB sets.

7. The method according to any one of claims 4 to 6, wherein
the second time-frequency resource comprises an RE other than a first RE in the REs in the first REG that are preset in the protocol for PDCCH DM-RS transmission, a position of the first RE in a PDCCH DM-RS pattern preset in the protocol is the same as a position of a second RE in the PDCCH DM-RS pattern preset in the protocol, the second RE is an RE in a REG in the first REG set, and the second RE is comprised in the first time-frequency resource; and/or
the third time-frequency resource comprises an RE other than a third RE in the REs in the first REG that are preset in the protocol for PDCCH transmission, a position of the third RE in a PDCCH pattern preset in the protocol is the same as a position of a fourth RE in the PDCCH pattern preset in the protocol, the fourth RE is an RE in a REG in the first REG set, and the fourth RE is comprised in the first time-frequency resource.

8. The method according to any one of claims 4 to 6, wherein
when a fifth RE exists in the REs in the first REG that are preset in the protocol for PDCCH DM-RS transmission, the second time-frequency resource does not comprise any RE in the first REG, wherein a position of the fifth RE in a PDCCH DM-RS pattern preset in the protocol is the same as a position of a sixth RE in the PDCCH DM-RS pattern preset in the protocol, the sixth RE is an RE in a REG in the first REG set, and the sixth RE is comprised in the first time-frequency resource; and/or
when a seventh RE exists in the REs in the first REG that are preset in the protocol for PDCCH transmission, the third time-frequency resource does not comprise any RE in the first REG, wherein a position of the seventh RE in a PDCCH pattern preset in the protocol is the same as a position of an eighth RE in the PDCCH pattern preset in the protocol, the eighth RE is an RE in a REG in the first REG set, and the eighth RE is comprised in the first time-frequency resource.

9. The method according to any one of claims 4 to 6, wherein when the second time-frequency resource may be used for transmitting the PDCCH DM-RS,
when at least M ninth REs exist in the REs in the first REG that are preset in the protocol for PDCCH DM-RS transmission, the second time-frequency resource does not comprise any RE in the first REG; or
when a maximum of M-1 ninth REs exist in the REs in the first REG that are preset in the protocol for PDCCH DM-RS transmission, the second time-frequency resource comprises an RE other than the ninth RE in the REs in the first REG that are preset in the protocol for PDCCH DM-RS transmission, wherein
a position of the ninth RE in a PDCCH DM-RS pattern preset in the protocol is the same as a position of a tenth RE in the PDCCH DM-RS pattern preset in the protocol, the tenth RE is an RE in a REG in the first REG set, the tenth RE is comprised in the first time-frequency resource, and M is an integer greater than or equal to 1.

10. The method according to any one of claims 4 to 6, wherein when the third time-frequency resource may be used for transmitting the PDCCH,
when at least N eleventh REs exist in the REs in the first REG that are preset in the protocol for PDCCH transmission, the third time-frequency resource does not comprise any RE in the first REG; or
when a maximum of N-1 eleventh REs exist in the REs in the first REG that are preset in the protocol for PDCCH transmission, the third time-frequency resource comprises an RE other than the eleventh RE in the REs in the first REG that are preset in the protocol for PDCCH transmission, wherein
a position of the eleventh RE in a PDCCH pattern preset in the protocol is the same as a position of a twelfth RE in the PDCCH pattern preset in the protocol, the twelfth RE is an RE in a REG in the first REG set, the twelfth RE is comprised in the first time-frequency resource, and N is an integer greater than or equal to 1.

11. The method according to any one of claim 1 or claims 3 to 10, wherein the method further comprises:
determining, by the terminal device depending on whether a second REG set on each time domain symbol in a time domain symbol set of the first PDCCH candidate comprising the first REG overlaps with the first time-frequency resource, or depending on whether the time domain symbol set of the first PDCCH candidate comprising the first REG overlaps with a time domain symbol set of the first time-frequency resource, a time domain mapping sequence of the PDCCH on the first PDCCH candidate comprising the first REG.

12. The method according to claim 11, wherein RBs on which all REGs in the second REG set are located meet any one of the following conditions:
belonging to the first time-frequency resource, belonging to an RB set of the first PDCCH candidate comprising the first REG, belonging to an RB set of a search space set comprising the first PDCCH candidate, belonging to an RB set of a CORESET that comprises the first PDCCH candidate comprising the first REG, comprising P adjacent RBs configured by the network device, or comprising P adjacent RBs preset in the protocol, wherein P is an integer greater than or equal to 2.

13. The method according to any one of claims 2 to 10, wherein the method further comprises:
determining, by the network device depending on whether a third REG set on each time domain symbol in a time domain symbol set of the first PDCCH candidate comprising the first REG overlaps with the first time-frequency resource, a time domain mapping sequence of the PDCCH on the first PDCCH candidate comprising the first REG.

14. The method according to claim 13, wherein RBs on which all REGs in the third REG set are located meet any one of the following conditions:
belonging to the first RB set, belonging to an RB set of the first PDCCH candidate comprising the first REG, belonging to an RB set of a search space set that comprises the first PDCCH candidate comprising the first REG, belonging to an RB set of a CORESET that comprises the first PDCCH candidate comprising the first REG, comprising T adjacent RBs configured by the network device, or comprising T adjacent RBs preset in the protocol, wherein T is an integer greater than or equal to 2.

15. The method according to any one of claims 11 to 14, wherein when the time domain mapping sequence of the PDCCH on the first PDCCH candidate comprising the first REG is determined depending on whether the second REG set on each time domain symbol in the time domain symbol set of the first PDCCH candidate comprising the first REG overlaps with the first time-frequency resource, the time domain mapping sequence of the PDCCH on the first PDCCH candidate comprising the first REG is mapping to a first symbol comprised in the time domain symbol set of the first PDCCH candidate comprising the first REG, and then mapping to a second symbol comprised in the time domain symbol set of the first PDCCH candidate comprising the first REG, wherein at least one RE in the second REG set on the second symbol is comprised in the first time-frequency resource, and no RE in the second REG set on the first symbol is comprised in the first time-frequency resource.

16. The method according to claim 15, wherein
when there are a plurality of first symbols, mapping to a first symbol with a smaller symbol sequence number is first performed, followed by mapping to a first symbol with a larger symbol sequence number; and/or
when there are a plurality of second symbols, mapping to a second symbol with a smaller symbol sequence number is first performed, followed by mapping to a second symbol with a larger symbol sequence number.

17. The method according to claim 11, wherein when the time domain mapping sequence of the PDCCH on the first PDCCH candidate comprising the first REG is determined depending on whether the time domain symbol set of the first PDCCH candidate comprising the first REG overlaps with the time domain symbol set of the first time-frequency resource, the time domain mapping sequence of the PDCCH on the first PDCCH candidate is mapping to a third symbol comprised in the time domain symbol set of the first PDCCH candidate, and then mapping to a fourth symbol comprised in the time domain symbol set of the first PDCCH candidate, wherein the first time-frequency resource exists on the fourth symbol, and the first time-frequency resource does not exist on the third symbol.

18. The method according to claim 17, wherein
when there are a plurality of third symbols, mapping to a third symbol with a smaller symbol sequence number is first performed, followed by mapping to a third symbol with a larger symbol sequence number; and/or
when there are a plurality of fourth symbols, mapping to a fourth symbol with a smaller symbol sequence number is first performed, followed by mapping to a fourth symbol with a larger symbol sequence number.

19. A physical downlink control channel PDCCH monitoring method, comprising:
receiving, by a terminal device, first indication information from a network device, wherein the first indication information indicates a first time-frequency resource;
receiving, by the terminal device, second indication information from the network device, wherein the second indication information indicates a first search space set, and a time-frequency resource of a control resource set CORESET corresponding to the first search space set and the first time-frequency resource meet at least one of the following relationships:
at least one RE in an RE set on only the 1^{st} symbol in the time-frequency resource of the CORESET corresponding to the first search space set overlaps with at least one RE in the first time-frequency resource;
at least one RE in an RE set on only one symbol in the time-frequency resource of the CORESET corresponding to the first search space set overlaps with at least one RE in the first time-frequency resource;
at least one RE in an RE set on only the 1^{st} symbol and the 2^{nd} symbol in the time-frequency resource of the CORESET corresponding to the first search space set overlaps with at least one RE in the first time-frequency resource;
at least one RE in an RE set on only the 1^{st} symbol and/or the last symbol in the time-frequency resource of the CORESET corresponding to the first search space set overlaps with at least one RE in the first time-frequency resource;
there are a maximum of Q sets of first time-frequency resource-related configurations, at least one RE in the first time-frequency resource indicated by any one of the Q sets of first time-frequency resource-related configurations overlaps with at least one RE in the time-frequency resource of the control resource set CORESET corresponding to the first search space set, and Q is a positive integer;
any RE in an RE set on at least one symbol in the time-frequency resource of the CORESET corresponding to the first search space set does not overlap with any RE in the first time-frequency resource; or
at least one RE in an RE set on a maximum of one symbol in the time-frequency resource of the CORESET corresponding to the first search space set overlaps with at least one RE in the first time-frequency resource; and
monitoring, by the terminal device, a PDCCH on a first PDCCH candidate in the first search space set, wherein the first PDCCH candidate in the first search space set may be used for transmitting a PDCCH sent by the network device, and at least one RE in the first PDCCH candidate overlaps with at least one RE in the first time-frequency resource.

20. A physical downlink control channel PDCCH monitoring method, comprising:
sending, by a network device, first indication information to a terminal device, wherein the first indication information indicates a first time-frequency resource;
sending, by the network device, second indication information to the terminal device, wherein the second indication information indicates a first search space set, and a time-frequency resource of a control resource set CORESET corresponding to the first search space set and the first time-frequency resource meet at least one of the following relationships:
at least one RE in an RE set on only the 1^{st} symbol in the time-frequency resource of the CORESET corresponding to the first search space set overlaps with at least one RE in the first time-frequency resource;
at least one RE in an RE set on only one symbol in the time-frequency resource of the CORESET corresponding to the first search space set overlaps with at least one RE in the first time-frequency resource;
at least one RE in an RE set on only the 1^{st} symbol and the 2^{nd} symbol in the time-frequency resource of the CORESET corresponding to the first search space set overlaps with at least one RE in the first time-frequency resource;
at least one RE in an RE set on only the 1^{st} symbol and/or the last symbol in the time-frequency resource of the CORESET corresponding to the first search space set overlaps with at least one RE in the first time-frequency resource;
there are a maximum of Q sets of first time-frequency resource-related configurations, at least one RE in the first time-frequency resource indicated by any one of the Q sets of first time-frequency resource-related configurations overlaps with at least one RE in the time-frequency resource of the control resource set CORESET corresponding to the first search space set, and Q is a positive integer;
any RE in an RE set on at least one symbol in the time-frequency resource of the CORESET corresponding to the first search space set does not overlap with any RE in the first time-frequency resource; or
at least one RE in an RE set on a maximum of one symbol in the time-frequency resource of the CORESET corresponding to the first search space set overlaps with at least one RE in the first time-frequency resource; and
transmitting, by the network device, a PDCCH on a first PDCCH candidate in the first search space set, wherein at least one RE in the first PDCCH candidate overlaps with at least one RE in the first time-frequency resource.

21. The method according to claim 19 or 20, wherein the first time-frequency resource comprises at least one type of the following REs:
REs on which the network device indicates not to allow PDCCH DM-RS transmission, REs on which the network device indicates not to allow PDCCH transmission, REs on which the network device indicates not to allow PDCCH DM-RS and PDCCH transmission, REs to which a cell-specific reference signal CRS is mapped, REs to which a channel state indication reference signal CSI-RS is mapped, REs to which a tracking reference signal TRS is mapped, or REs comprised in a rate matching resource.

22. The method according to claim 21, wherein
when the REs to which the CRS is mapped comprise REs to which CRSs corresponding to two sets of configurations are mapped, the REs to which the CRSs corresponding to the at least two sets of configurations are mapped correspond to a same quantity of antenna ports, and/or shift parameters of the REs to which the CRSs corresponding to the at least two sets of configurations are mapped are the same; and/or
when the REs to which the CRS is mapped comprise REs to which a CRS corresponding to at least one set of configurations is mapped, REs to which a CRS corresponding to one of the at least one set of configurations is mapped are located on RBs with a quantity greater than 100.

23. A PDCCH monitoring apparatus, comprising:
a storage unit, configured to store computer instructions; and
a processing unit, configured to execute the computer instructions stored in the storage unit, so that the communication apparatus performs the method according to any one of claim 1, or claims 3 to 12 or 15 to 18; claims 2 to 10 or 13 to 16; or claim 19, 21, or 22, or claims 20 to 22.

24. A PDCCH monitoring apparatus, comprising:
the memory, configured to store a computer program; and
a processor, configured to execute the computer program stored in the memory, so that the communication apparatus performs the method according to any one of claim 1, or claims 3 to 12 or 15 to 18; claims 2 to 10 or 13 to 16; or claim 19, 21, or 22, or claims 20 to 22.

25. A computer-readable storage medium, wherein the computer-readable storage medium stores a computer program, and when the computer program is run on a computer, the computer is enabled to perform the method according to any one of claim 1, or claims 3 to 12 or 15 to 18; claims 2 to 10 or 13 to 16; or claim 19, 21, or 22, or claims 20 to 22.

26. A computer program product, wherein the computer program product comprises instructions used to perform the method according to any one of claim 1, or claims 3 to 12 or 15 to 18; claims 2 to 10 or 13 to 16; or claim 19, 21, or 22, or claims 20 to 22.
